# EUROPÄISCHE PATENTSCHRIFT

(11) **EP 0 497 174 B1**
(45) Veröffentlichungstag und Bekanntmachung des Hinweises auf die Patenterteilung: **05.03.1997**
(21) Anmeldenummer: 92100825.6
(22) Anmeldetag: 20.01.1992
(51) Int. Cl.: C09B 62/20, C09B 62/503

(54) **Vinylsulfon/Pyrimidingruppenhaltige bifunktionelle Reaktivfarbstoffe**
Bifunctional reactive dyes containing vinylsulfone/pyrimidine groups
Colorants réactifs bifonctionnels contenant des groupes vinylsulfones et pyrimidines

(30) Priorität: 31.01.1991 DE 4102777
(43) Veröffentlichungstag der Anmeldung: 05.08.1992
(73) Patentinhaber: BAYER AG, 51368 Leverkusen (DE)
(72) Erfinder: Reddig, Wolfram, Dr., W-5060 Bergisch Gladbach (DE); Herd, Karl-Josef, Dr., W-5068 Odenthal (DE); Kysela, Ernst, Dr., W-5060 Bergisch Gladbach (DE)

(56) Entgegenhaltungen:
- EP-A- 0 128 340
- EP-A- 0 203 505
- EP-A- 0 318 785
- DE-A- 3 800 261
- PATENT ABSTRACTS OF JAPAN vol. 12, no. 353 (C-530)(3200) 21. September 1988

## Beschreibung

Die vorliegende Erfindung betrifft Azofarbstoffe mit wenigstens zwei Reaktivgruppen.

Reaktivfarbstoffe, insbesondere auf Basis von Azofarbstoffen, sind in zahlreichen Patentschriften bekannt, siehe insbesondere EP-A-203 505, JP-A-63 110 260 und insbesondere EP-A-128 340. Die bekannten Reaktivfarbstoffe weisen aber noch Nachteile insbesondere hinsichtlich ihrer Echtheiten auf.

Die vorliegende Erfindung betrifft Reaktivfarbstoffe der Formel 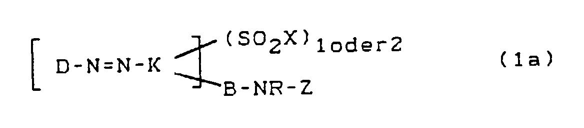 und deren Metallkomplexe worin
- D =: Rest einer Diazokomponente der Benzol- oder Naphthalinreihe und
- K =: Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest,
- B =: direkte Bindung oder Brückenglied an ein Ring C-Atom eines aromatisch-carbocyclischen oder an ein Ring C- oder N-Atom eines aromatisch-heterocyclischen Ringes,
- X =: CH=CH₂ oder CH₂CH₂-Y, worin
- Y =: alkalisch eliminierbarer Rest, z.B. OSO₃H, SSO₃H, OCOCH₃, OPO₃H₂, OSO₂CH₃, SCN, NHSO₂CH₃, Cl, Br, F, OCOC₆H₅, OSO₂-C₆H₄CH₃, [N(CH₃)₃]⁺A⁻ oder 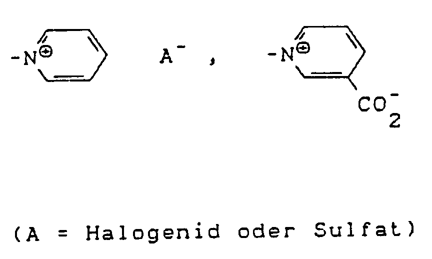
- R =: H oder C₁-C₄-Alkyl, das gegebenenfalls substituiert sein kann,
- Z =: faserreaktiver Rest der Formel 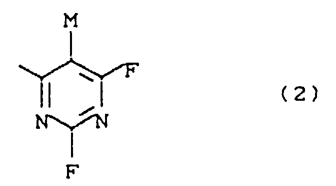
worin
M = H,
mit Ausnahme des Farbstoffes 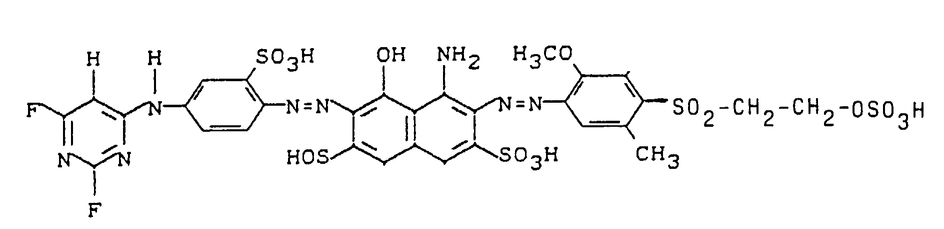 der in DE-A-3 318 146, Beispiel 37, beschrieben ist.

Beispiele für die Brückenglieder B sind: 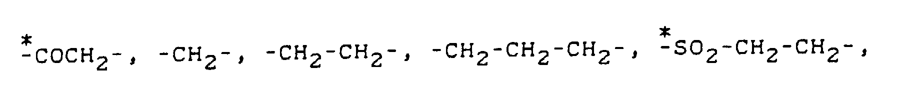 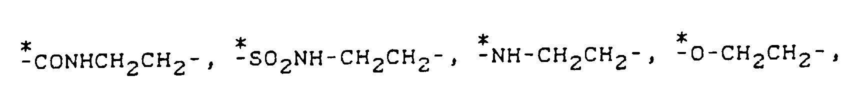 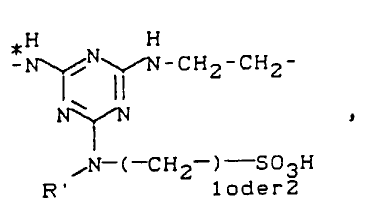 wobei R' = H oder CH₃ Der Rest 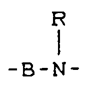 kann beispielsweise auch folgende Bedeutung haben: 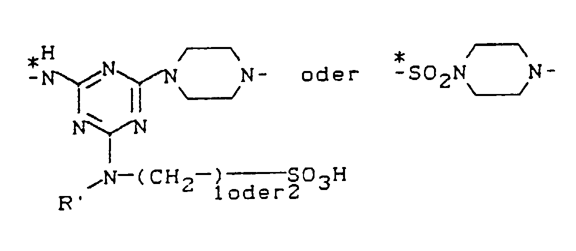 wobei R' = H oder CH₃.

Der Stern markiert jeweils die Verknüpfungsstelle des Brückengliedes mit dem Farbstoffrest.

Der Rest D-N=N-K kann in der üblichen Weise substituiert sein. Als Beispiel für weitere Substituenten seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, wie Acetylamino, Propionylamino oder Benzoylamino, Aminogruppe, Alkylaminogruppen mit 1 bis 4 Kohlenstoffatomen, wie Methylamino, Ethylamino, Propylamino, Isopropylamino oder Butylamino, Phenylamino, N,N-Di-β-hydroxyethylamino, N,N-Di-β-sulfatoethylamino, Sulfobenzylamino, N,N-Di-sulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Vorzugsweise enthalten die Reste D-N=N-K eine oder mehrere Sulfonsäuregruppen.

Reaktivfarbstoffe der Formel (1a) enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein, z.B. durch Halogen, Hydroxy, Cyan, C₁-C₄-Alkoxy, Carboxy, Sulfo oder Sulfato. Als Beispiele für R seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl. Vorzugsweise ist R Wasserstoff, Methyl oder Ethyl.

Bevorzugte Farbstoffe sind solche in denen B für eine direkte Bindung steht, weiterhin solche in denen -SO₂X für -SO₂CH=CH₂ oder -SO₂CH₂CH₂OSO₃H und weiterhin solche, die 1 bis 6 wasserlöslichmachende Gruppen, insbesondere Sulfogruppen aufweisen.

Die Reste D und K können dabei mit weiteren Azogruppen oder mit azogruppenhaltigen Resten substituiert sein.

Besonders bevorzugt sind dabei Farbstoffe der Formeln (1b) und (1c)

X-SO₂-D-N=N-K-B-NR-W (1b)

W-NR-B-D-N=N-K'-SO₂-X (1c)

worin
- X =: -CH=CH₂ oder CH₂CH₂OSO₃H,
- W =: der Rest der Formel 2,
- K' =: Rest einer Kupplungskomponente aus der Pyrazolon-, Pyridon- oder Acetessigsäurearylid-Reihe -Reihe ist, und
- D, K, R und B: die bereits obengenannte Bedeutung zukommt.

Beispiele für D sind vorzugsweise gegebenenfalls durch SO₃H, Chlor, C₁-C₄-Alkoxy, C₁-C₄-Alkyl, Carbalkoxy oder Sulfonamido substituiertes Phenyl bzw. Phenylen, gegebenenfalls durch SO₃H, Chlor, C₁-C₄-Alkoxy oder C₁-C₄-Alkyl substituiertes Naphthyl bzw. Naphthylen, gegebenenfalls durch SO₃H substituiertes 4-(Phenylazo)phenyl und gegebenenfalls durch SO₃H substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl(bzw. carboxy)-pyrazolon-, einen 6-Hydroxy-2-pyridon- oder einen gegebenenfalls C₁-C₄-Alkyl- bzw. C₁-C₄-Alkoxy-ringsubstituierten Acetessigsäurearylid-Rest. Die drei letztgenannten Reste sind auch geeignete Beispiele für K', K und K' können die üblichen Substituenten, insbesondere Sulfonsäuregruppen aufweisen.

Bevorzugt sind die folgenden Farbstoffe der Formeln (3) bis (35): 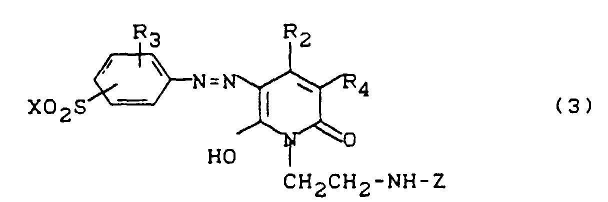 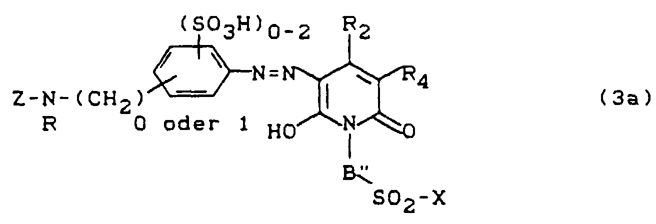 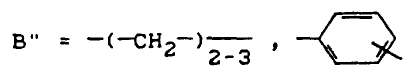 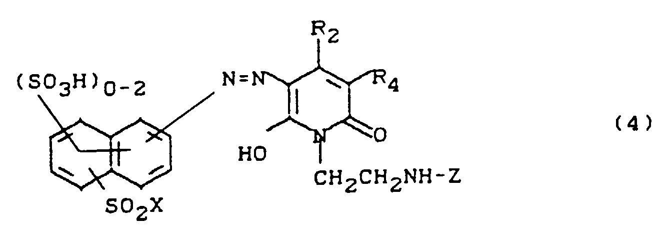 worin
- R₂ =: H, C₁-C₄-Alkyl, insbesondere CH₃ und CH₂SO₃H, COOH,
- R₃ =: H, C₁-C₄-Alkyl, C₁-C₄-Alkoxy, Cl, Br, COOH, SO₃H
- R₄ =: H, SO₃H, CH₂SO₃H, Cl, C₁-C₄-Alkylsulfonyl, Carbonamid, insbesondere CONH₂ sowie Carbonsäuremono- und -di-C₁-C₄-alkylamid. 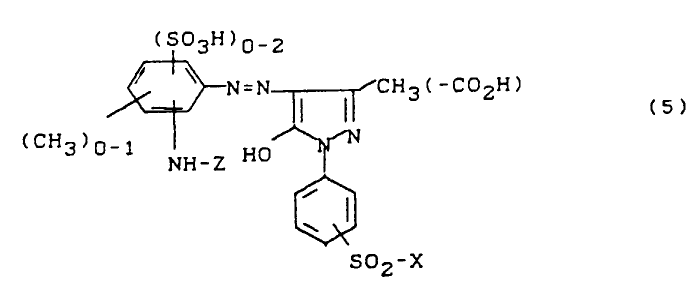 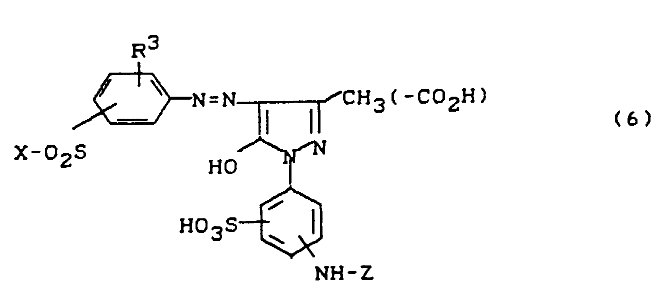 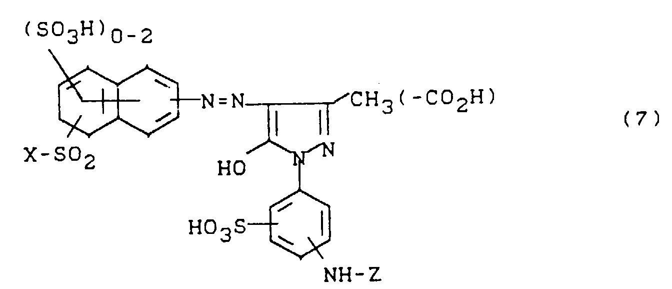 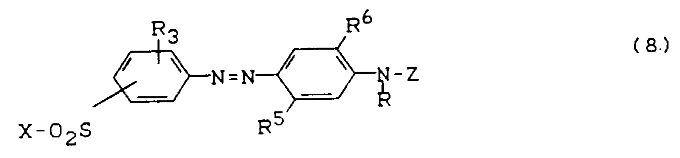 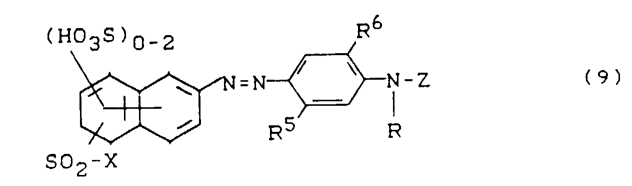 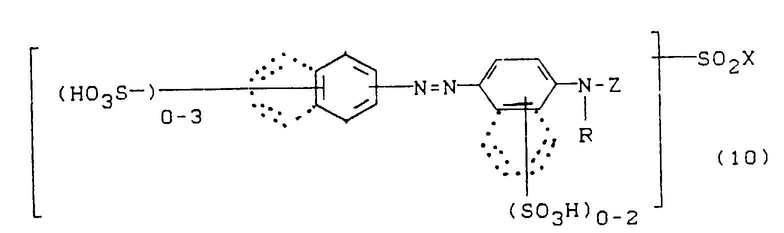
worin
- R⁵ =: H, C₁-C₄-Alkyl, C₁-C₄-Alkoxy, Acylamino, insbesondere C₁-C₄-Alkylcarbonylamino oder Arylcarbonylamino wie gegebenenfalls substituiertes Phenylcarbonylamino, C₁-C₄-Alkylsulfonylamino, Cl, Br, Aminocarbonylamino, C₁-C₄-Alkylsulfonylamino, Arylsulfonylamino,
- R⁶ =: H, C₁-C₄-Alkyl, C₁-C₄-Alkoxy, OH, SO₃H 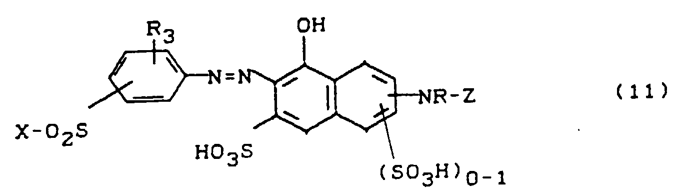 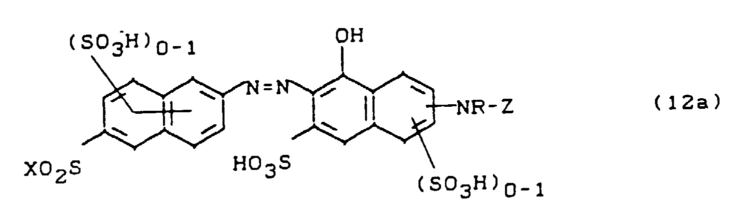 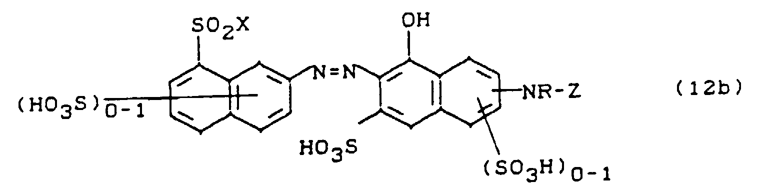 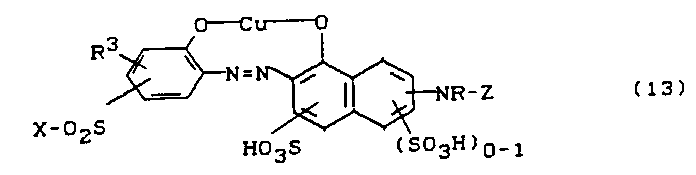 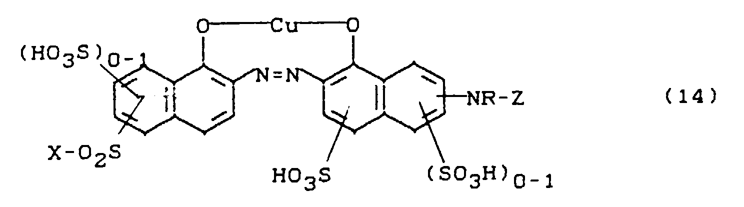 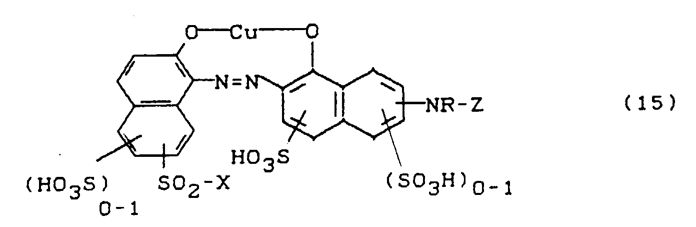
1:2-Metallkomplexe von Farbstoff 16 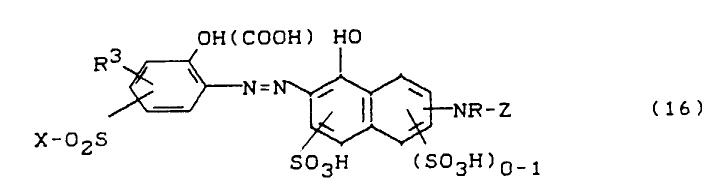 insbesondere die Cr- und Co-Komplexe, die zwei Farbstoffe (16) oder einen Farbstoff (16) und einen beliebigen anderen metallkomplexbildenden Farbstoff, insbesondere einen Azo- oder Azomethinfarbstoff enthalten.

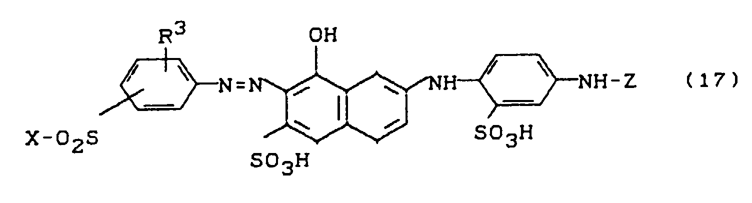

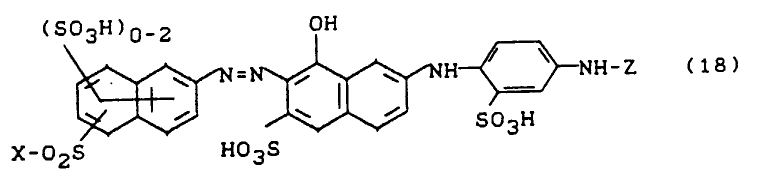

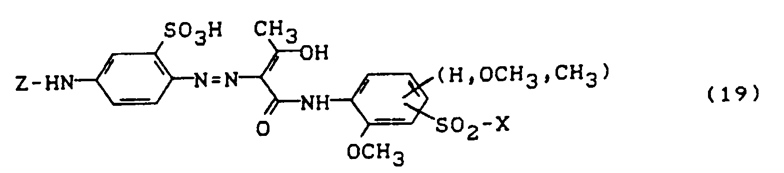

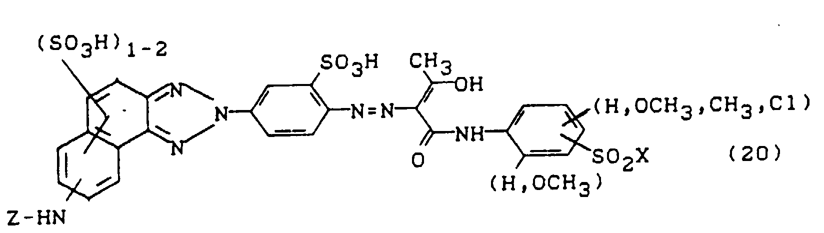

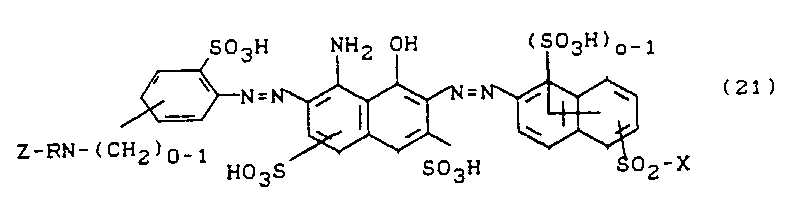

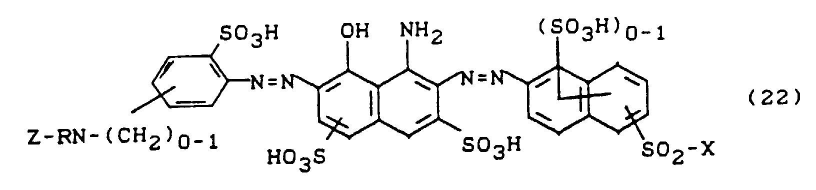

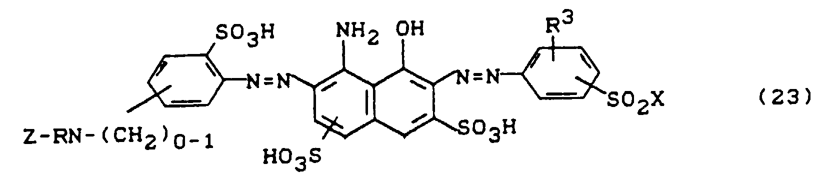

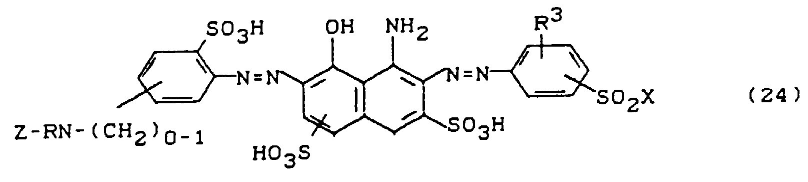

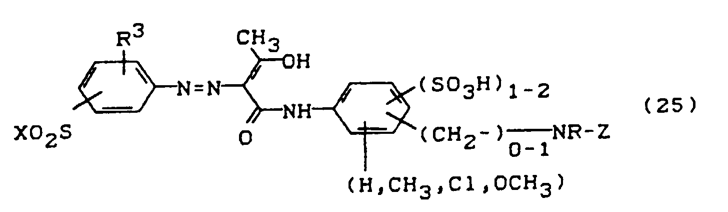

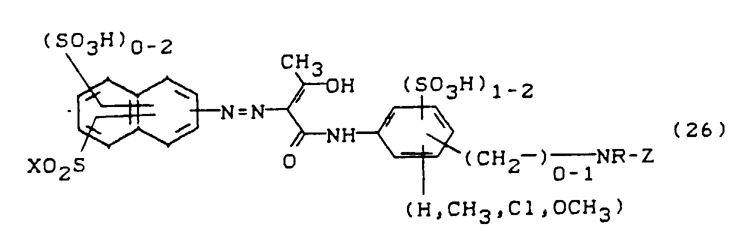

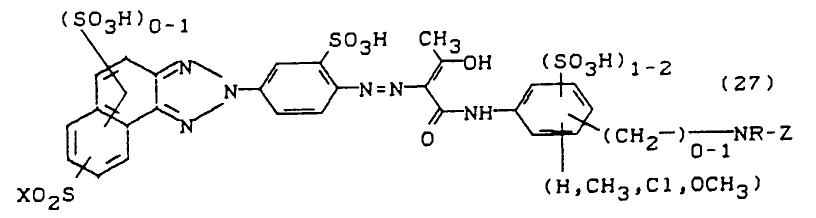

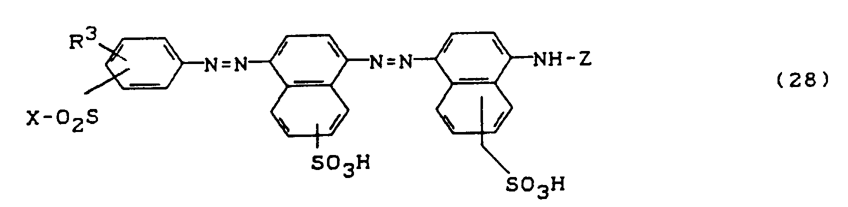

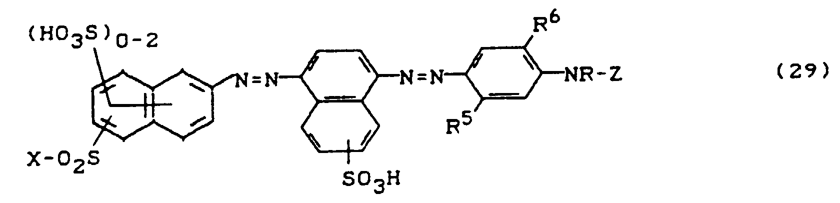

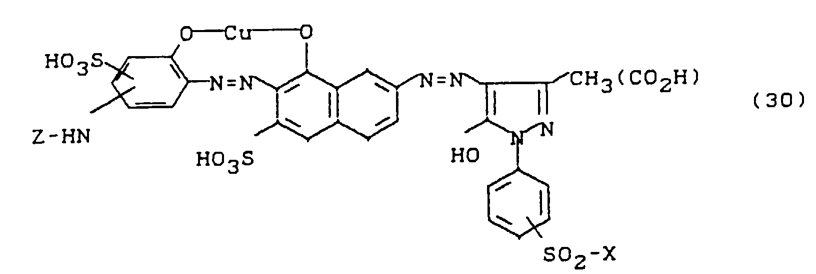

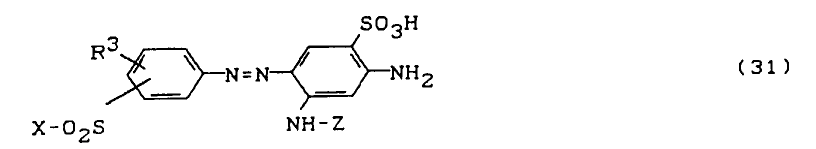

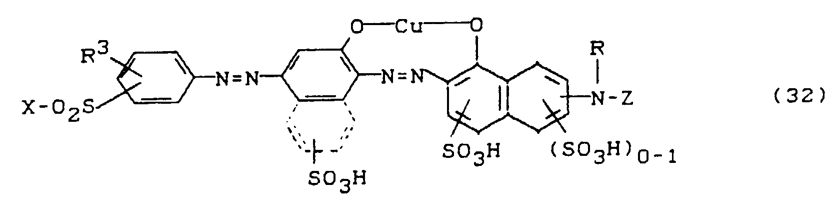

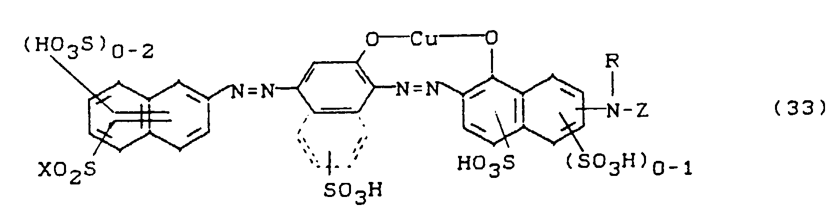

Besonders bevorzugte Farbstoffe (1) sind solche mit X = CH₂CH₂OSO₃H oder CH=CH₂ und
W = Rest der Formel 2
und dabei insbesondere solche mit 1-6 wasserlöslichmachenden Gruppen, vorzugsweise Sulfogruppen, insbesondere die folgenden:

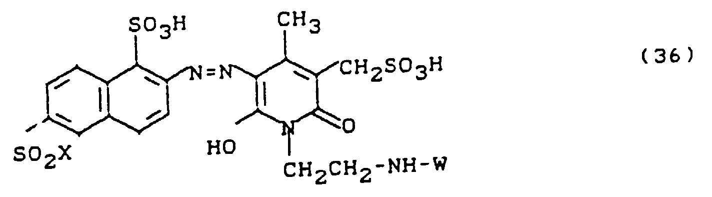

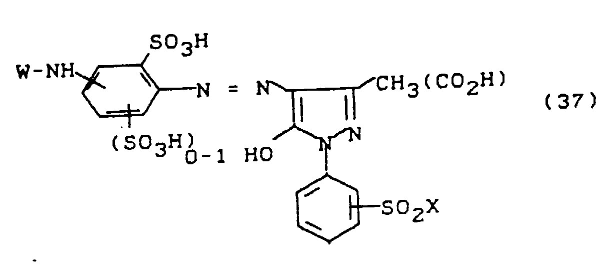

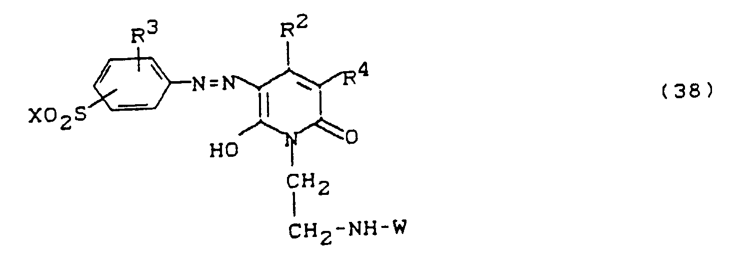

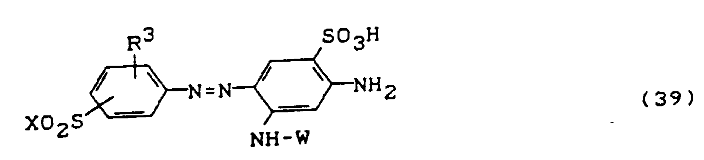

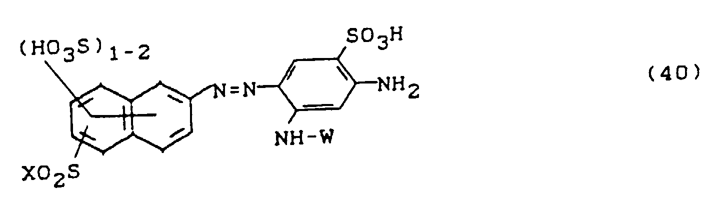

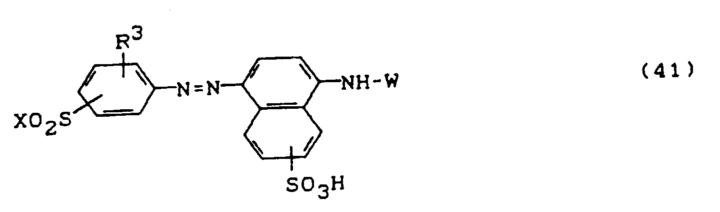

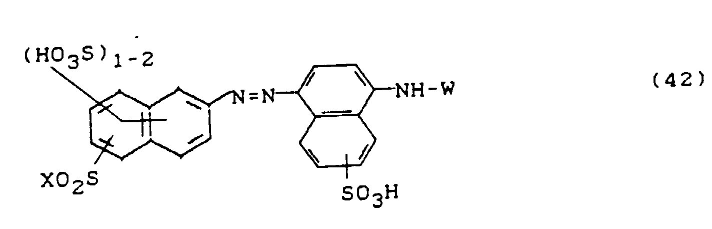

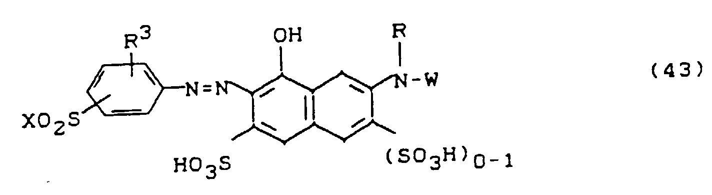

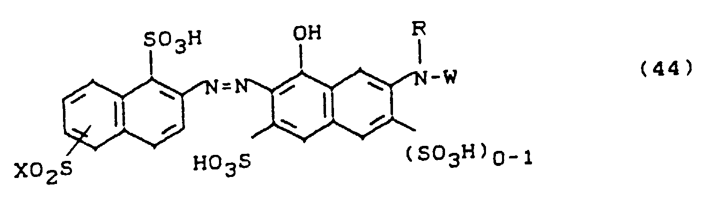

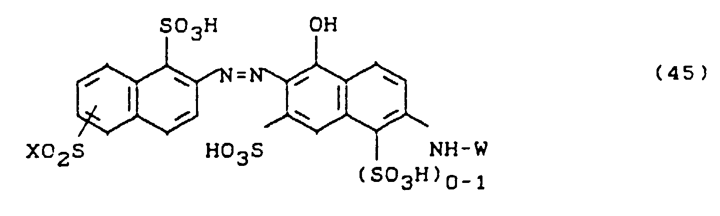

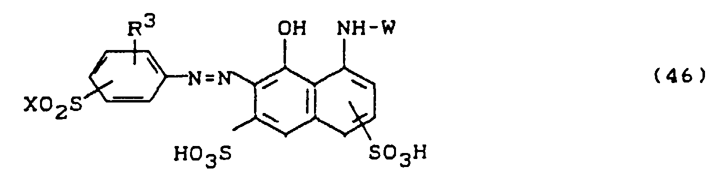

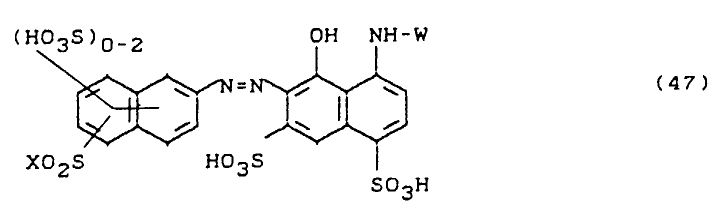

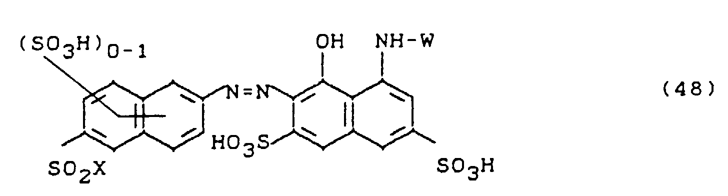

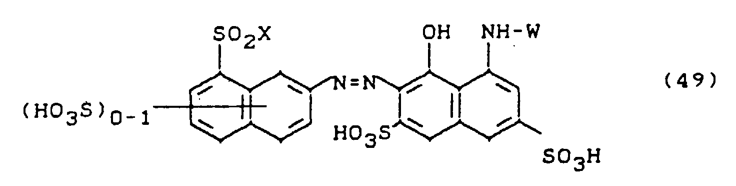

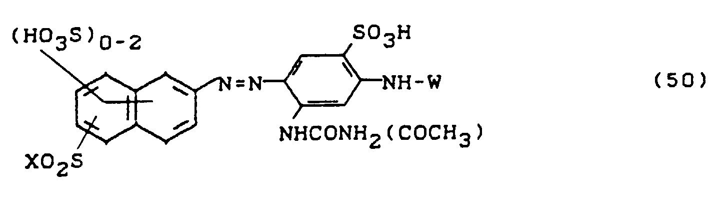

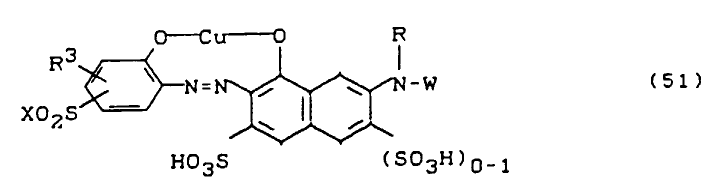

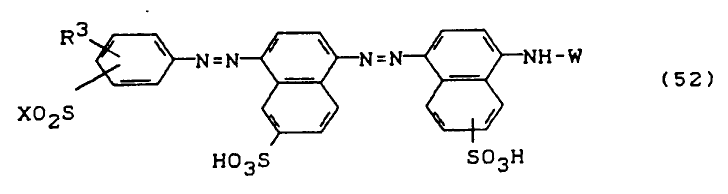

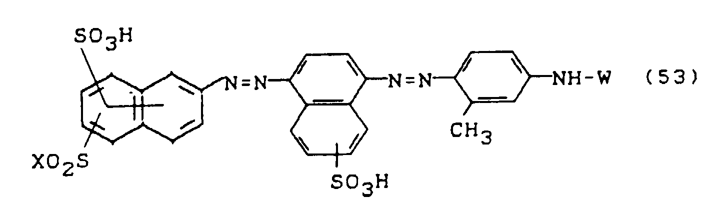

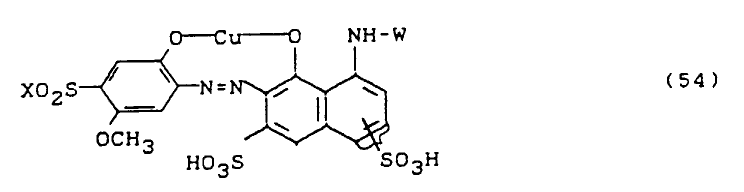

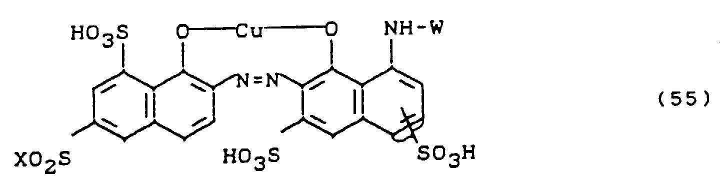

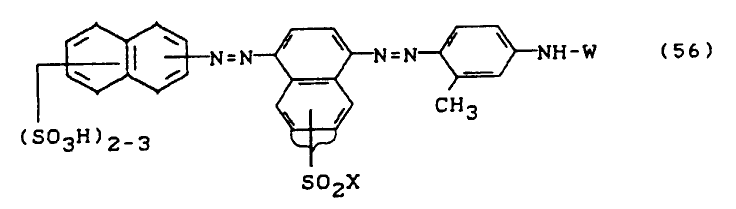

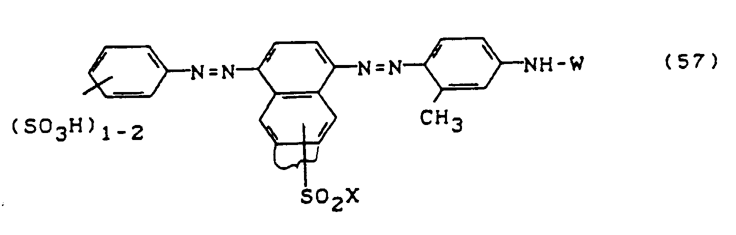

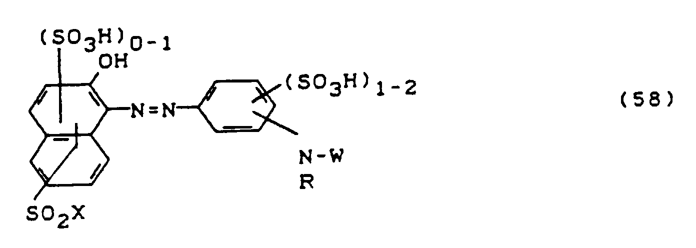

Die neuen Farbstoffe lassen sich nach den verschiedenartigsten in der Farbstoffchemie üblichen Herstellungsverfahren erhalten. Beispielhaft seien die folgenden genannt:
1) Farbstoffe werden in an sich bekannter Weise mit 1 cder 2 Mol einer Reaktivkomponente

   Z - F

   unter Abspaltung von H-F umgesetzt.
2) Farbstoffe der Formel mit dem Rest -SO₂X = SO₂CH₂CH₂OH werden in bekannter Weise zu den Farbstoffen mit dem Rest -SO₂X = SO₂CH₂CH₂OSO₃H sulfatiert.
3) Vorprodukte von Fb mit 1 bis 2 Resten -SO₂X bzw. 1 bis 2 Resten 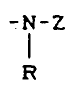 werden miteinander, beispielsweise durch Kondensation oder wie im Falle von Diazo- bzw. Kupplungskomponenten durch Kupplung, umgesetzt und anschließend gegebenenfalls metallisiert.

Solche Vorprodukte sind beispielsweise bekannte Diazokomponenten, Kupplungskomponenten, aromatische oder aliphatische primäre oder sekundäre Amine, Aminophenolverbindungen und Aminobenzoesäure-Verbindungen. Solche Ausgangsverbindungen und deren Reaktionsweisen sind in großer Zahl in der Literatur für die Herstellung von bekannten Farbstoffen beschrieben.

Als Diazokomponenten, die 1 bis 2 Gruppen -SO₂X enthalten, seien genannt:
Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 4-Methoxy-anilin-3-β-sulfatoethylsulfon, 4-Methoxy-anilin-3-vinylsulfon, 2,5-Dimethoxy-anilin-4-β-sulfatoethylsulfon, 2,5-Dimethoxy-anilin-4-vinylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethyl-sulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Hydroxyanilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 1-Naphthylamin-4-β-sulfatoethylsulfon, 1-Sulfo-2-naphthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon), 2-Brom-1aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 8-Sulfo-2-naphthylamin-6-β-sulfatoethylsulfon.

Geeignete Diazokomponenten mit dem Rest 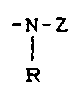 sind beispielsweise

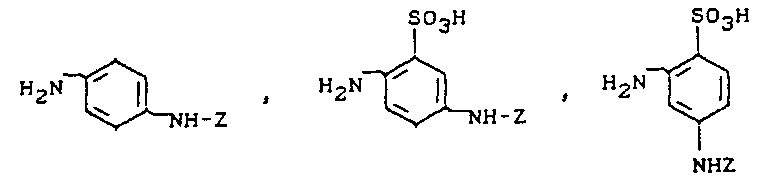

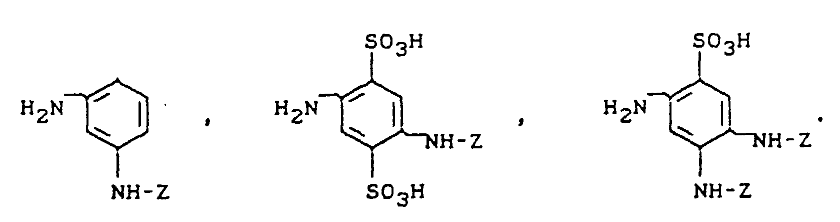

Aromatische Monoamine und und Diamine, die sowohl als Diazo- als auch als Kupplungskomponente bei der Herstellung von erfindungsgemäßen Disazoverbindungen verwendet werden können, sind beispielsweise:
Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetylaminobenzol-1-sulfonsäure, 1-Naphthylamin-6-β-sulfatoethylsulfon, 1-Naphthylamin-7-β-sulfatoethylsulfon, 1,3-Diaminobenzol, 1,3-Diamino-4-methyl- oder -methoxy-benzol, 1,3-Diaminobenzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8-naphthol-4,6-disulfonsäure, 2-Amino-5-naphthol-7-sulfonsäure, Amino-5-naphthol-7-sulfonsaure, 1-Amino-5-naphthol-7-sulfonsäure, 1-N-Acetoacetylamino-4-aminobenzol, acetylamino-3-methoxy-4-aminobenzol, 1-N-Acetoacetylamino-3-methoxy-4-aminobenzol, 4-Amino-3-sulfoacetoacetylanilid, 1-(3'-Amino-phenyl)-3-methyl-pyrazolon(5), 1-(4'-Aminophenyl)-3-methyl-pyrazolon(5), 1-(3'- oder -4'-Aminophenyl)-3-carboxy-pyrazolon(5), 1-(3'-Sulfo-4'-aminophenyl)-3-carbethoxy-pyrazolon(5), 1-(3'-Amino-4'-sulfo-phenyl)-3-carboxy-pyrazolon(5), 1-(2',4',6'-Trimethyl-3'-amino-5'-sulfophenyl)-3-carbethoxy-pyrazolon(5), 1-(3'-Amino-6'-methyl-phenyl)-3-carboxy-pyrazolon(5).

Aromatische Diamine, die als Tetrazokomponenten zur Herstellung von erfindungsgemäßen Disazo-Verbindungen dienen können, sind beispielsweise:
1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diamino-naphthalin-4-sulfonsäure, 2,5-Diamino-4,8-disulfo-naphthalin, 3,3'-Diamino-diphenylsulfon, 4,4'-Diamino-diphenylsulfon, 3,3'-Diamino-diphenylsulfon-disulfonsäure, 4,4'-Diamino-stilben-2,2'-disulfonsäure, 2,7-Diamino-diphenylensulfon-4,5-disulfonsäure, 4,4'-Diamino-benzophenon, 4,4'-Diamino-3,3'-dinitro-benzophenon, 3,3'-Diamino-4,4'-dichlor-benzophenon, 4,4'- oder 3,3'-Diamino-diphenyl, 4,4'-Diamino-3,3'-dichlor-diphenyl, 4,4'-Diamino-3,3'-dimethoxy- oder -3,3'-dimethyl- oder -2,2'-dimethyl-oder -2,2'-dichlor- oder-3,3'-diethoxy-diphenyl, 4,4'-Diamino-3,3'-dimethyl-6,6'-dinitro-diphenyl, 4,4'-Diamino-2,2'- oder 3,3'-disulfo-diphenyl, 4,4'-Diamino-3,3'-dimethyl- oder -3,3'-dimethoxy- oder -2,2'-dimethoxy-6,6'-disulfo-diphenyl, 4,4'-Diamino-2,2',5,5'-tetrachlor-diphenyl, 4,4'-Diamino-3,3'-dinitro-diphenyl, 4,4'-Diamino-2,2'-dichlor-5,5'-dimethoxy-diphenyl, 4,4'-Diamino-2,2'- oder -3,3'-dicarbonsäure, 4,4'-Diamino-3,3'-dimethyl-diphenyl-5,5'-disulfonsäure, 4,4'-Diamino-2-nitro-diphenyl, 4,4'-Diamino-3-ethoxy- oder -3-sulfo-diphenyl, 4,4'-Diamino-3,3'-dimethyl-5-sulfo-diphenyl, 4,4'-Diamino-diphenylmethan, 4,4'-Diamino-3,3'-dimethyl-diphenylmethan, 4,4'-Diamino-2,2',3,3'-tetramethyl-diphenylmethan, 4,4'-diamino-diphenylethan, 4,4'-Diamino-stilben, 4,4'-Diamino-diphenylmethan-3,3'-dicarbonsäure, 1,2-Di-(4'-amino-phenoxy)-ethan.

Kupplungskomponenten, die in den erfindungsgemäßen Mono- oder Disazofarbstoffen enthalten sein können oder zu deren Herstellung dienen, sind insbesondere beispielsweise die Verbindungen der Formeln:

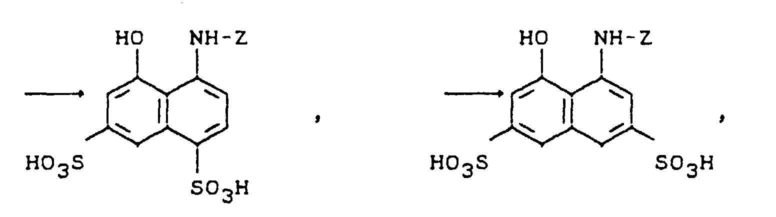

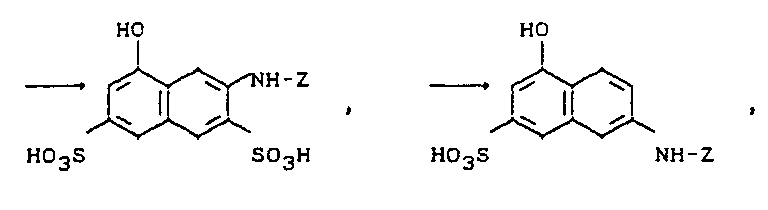

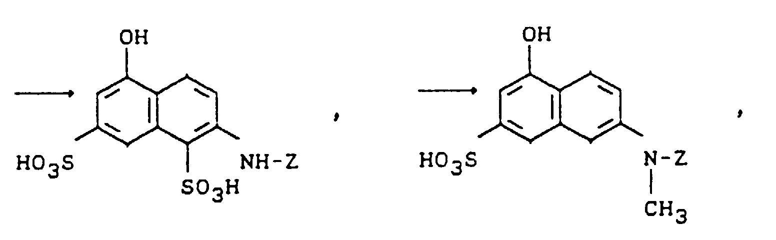

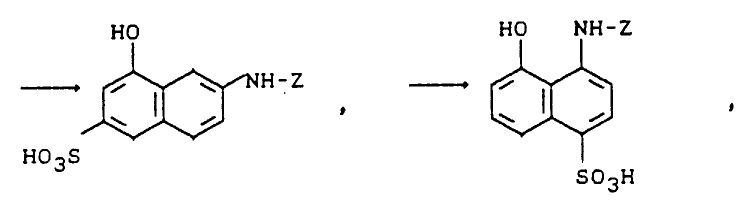

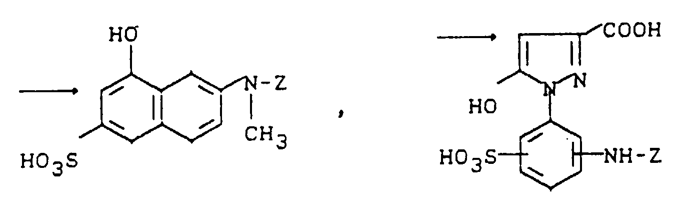

Zur Herstellung der erfindungsgemäßen Mono- und Disazoverbindungen und auch deren Metallkomplexfarbstoffe kann in üblicher Weise vorgegangen werden, indem beispielsweise analog den bekannten Diazotierungs- und Kupplungsmethoden Umsetzung der diazotierten aromatischen Amine mit den Kupplungskomponenten erfolgt und diese Azoverbindungen gegebenenfalls durch nachfolgende Metallisierung analog bekannten Verfahrensweisen (s. Houben-Weyl, "Methoden der Organischen Chemie", 4. Ausgabe (1965), Band 10/3, S. 452 ff.; Angewandte Chemie 70, 232-238 (1958); Angewandte Chemie 64, 397 (1952)) in die entsprechenden Schwermetallkomplexverbindungen, wie die Kupfer-, Kobalt- oder Chromkomplexverbindungen, überführt werden.

Man kann beispielsweise jedoch auch so vorgehen, daß man ein aromatisches Amin, das beispielsweise die Gruppe der Formel -SO₂X ein- oder zweimal gebunden enthält, diazotiert und auf eine Kupplungskomponente kuppelt, die noch eine freie acylierbare Aminogruppe besitzt. Die so hergestellte Azoverbindung kann sodann, in bekannter Weise, mit einer Verbindung Z-Hal umgesetzt werden.

Andere Umwandlungsreaktionen der Farbstoffe oder deren Vorprodukte, wie Metallisierungsreaktionen, Sulfierungen, Triazolierungen oder Einführung von Acylamino- oder Triazinyl-Gruppierungen, können im allgemeinen in beliebigen Stufen der Farbstoffsynthese vorgenommen werden. Einzelheiten können den nachfolgend aufgeführten Beispielen entnommen werden.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können aber auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren sowie zum Bedrucken von Cellulosematerialien wie Baumwolle oder Zellwolle.

Man erhält bei gutem Aufbauvermögen und hohen Fixierausbeuten Färbungen mit guten Allgemeinechtheiten, insbesondere Naßechtheiten.

### Beispiel 1

0,1 Mol H-Säure werden in 350 ml Wasser alkalisch gelöst, mit Salzsäure auf pH 4 gestellt und mit 0,105 Mol 2,4,6-Trifluorpyrimidin bei 40°C acyliert, wobei der pH mit Natriumcarbonat bei 4 gehalten wird. Nach beendeter Kondensation ist das Umsetzungsprodukt in Lösung und wird geklärt. 0,095 Mol 2-Amino-6-sulfatoethylsulfonylnaphthalin-1-sulfonsäure werden in 300 ml Wasser gelöst und mit Natriumnitritlösung salzsauer diazotiert. Nach dem Entfernen von überschüssigem Nitrit mit Amidosulfonsäure wird die Diazotierung zu der Kupplungskomponente gegeben und mit Sodalösung pH 6,5 bis 7 eingestellt und gehalten. Nach beendeter Kupplung wird der Farbstoff ausgesalzen, isoliert, getrocknet und gemahlen. Der so erhaltene Farbstoff der Formel 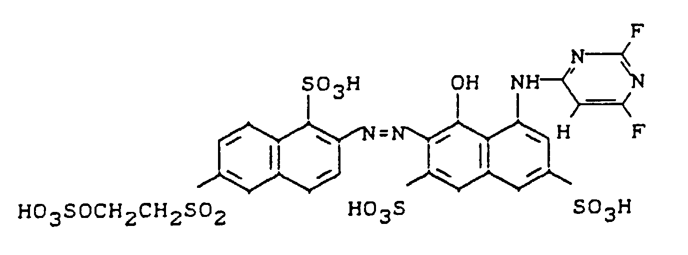 färbt Baumwolle in blaustichig roten Tönen.

### Beispiel 2

0,095 Mol 1-Amino-4-sulfatoethylsulfonylbenzol werden in Wasser angeschlagen und mit Natriumnitritlösung diazotiert. Man läßt 30 Minuten nachrühren und entfernt dann überschüssiges Nitrit mit Amidosulfonsäure. Die Diazotierung wird zu der in Beispiel 1 hergestellten Kupplungskomponente gegeben und mit Natriumcarbonatlösung pH 6 bis 7 eingestellt. Nachdem die Kupplung beendet ist, wird der Farbstoff ausgesalzen, isoliert, getrocknet und gemahlen.

Der Farbstoff der Formel 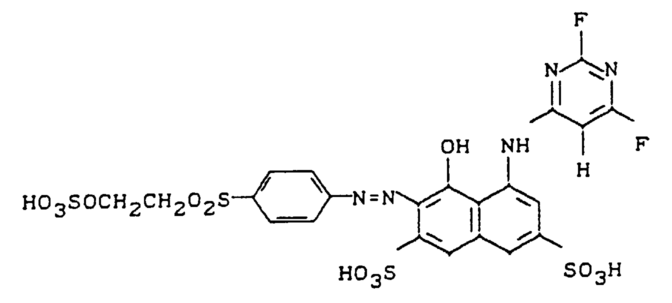 färbt Baumwolle in klaren roten Tönen.

### Beispiel 3

Arbeitet man entsprechend dem Beispiel 1 und ersetzt die H-Säure durch die K-Säure, erhält man den Farbstoff der Formel 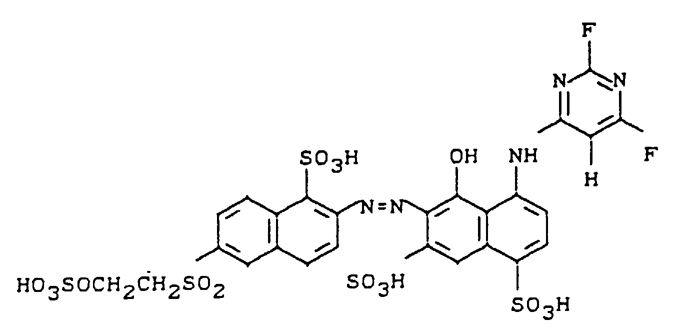 mit dem Baumwolle in klaren roten Tönen bedruckt wird.

### Beispiel 4

Arbeitet man entsprechend dem Beispiel 2 und ersetzt die H-Säure durch die K-Säure erhält man den Farbstoff der Formel 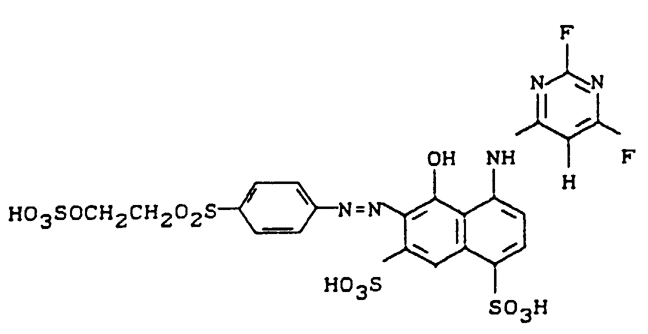 mit dem Baumwolle in klaren gelbstichig roten Tönen zu färben bzw. zu bedrucken ist.

### Beispiel 5

281 Teile 4-β-Sulfatoethylsulfonyl-anilin -anilin werden in 1.000 Teilen Wasser eingetragen und durch vorsichtige Zugabe von 65 Teilen Natriumcarbonat in Lösung gebracht, wobei sich der pH-Wert auf 6,5 bis 7,0 einstellt. Man läßt 2 Stunden bei diesem pH weiterrühren, gibt sodann 750 Teile Eis und 255 Teile einer 31 %igen wäßrigen Salzsäure hinzu; anschließend läßt man 173 Teile der 40 %igen wäßrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension läßt man bei einem pH-Wert von 6,0 bis 6,5 unter gleichzeitigem Eintragen von etwa 70 Teilen Natriumcarbonat die Lösung des Kondensationsproduktes von je einem Mol Cyanurchlorid und 1-Amino-8-naphthol-3,6-disulfonsäure und 3-Amino-acetanilid-4-sulfonsäure und 2,4,6-Trifluorpyrimidin einlaufen. Diese Lösung des Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33 %igen Natronlauge eingetragen; der pH-Wert der Lösung soll anschließend 6,5 bis 7,0 betragen. Diese Lösung läßt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 221 Teile 3-Amino-acetanilid-4-sulfonsäure ein und danach innerhalb einer Stunde 105 Teile Natriumcarbonat, wobei sich der pH-Wert auf 4,5 bis 5,0 erhöht. Bei diesem pH-Wert läßt man noch 2 Stunden nachrühren, wobei die Temperatur bei 35 bis 40°C gehalten wird. Die Lösung wird mit 400 Teilen conc. Natriumhydroxid versetzt und 2 Stunden bei 70 bis 75°C gerührt. Danach wird mit conc. Salzsäure neutralisiert. Zu dieser neutralen Lösung wird die äquivalente Menge 2,4,6-Trifluorpyrimidin gegeben und auf 30°C erwärmt.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert) und das Filtrat sprühgetrocknet.

Es wird ein rotes, elektrolythaltiges Pulver erhalten, das den Farbstoff der Formel 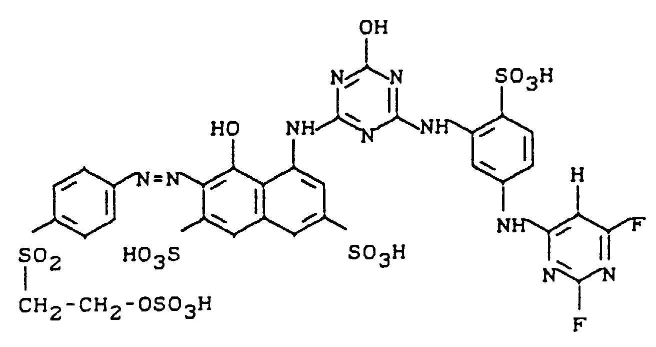 enthält.

Dieser Farbstoff färbt Wolle aus saurem Bad oder losefasermaterialien in Gegenwart von säurebindenden Mitteln nach den in der Technik üblichen Applikations- und Fixiermethoden für faserreaktive Farbstoffe in klaren roten Tönen mit sehr gutem Farbaufbau und hohem Fixiergrad. Die Färbungen besitzen sehr gute Naßechtheiten.

### Beispiel 6

64 Teile 1-Amino-8-naphthol-3,6-disulfonsäure werden in 800 Teilen Wasser unter Zusatz von 15 Teilen Natriumcarbonat bei pH 4,5 bis 5,0 gelöst. Man kühlt dann auf 0°C ab und läßt 28 Teile Cyanurfluorid zutropfen, wobei der pH-Wert fällt und durch Einstreuen von Natriumbicarbonatpulver auf pH 3 bis 4 gehalten wird. Es wird 15 Minuten bei pH 3 bis 4 und 0°C nachgerührt und dann eine Lösung des Kondensationsproduktes von 2,4-Diaminobenzolsulfonsäure mit 2,4,6-Trifluorpyrimidin zugegeben. Bei einem pH-Wert von 5 wird 5 Stunden bei 20 bis 25°C gerührt, bis kein freies Amin mehr durch Diazotierprobe nachweisbar ist.

Zur Herstellung der Diazoniumverbindung werden 56 Teile Anilin-4-β-sulfatoethylsulfon in 500 Teilen Eiswasser suspendiert, mit 45 Teilen conc. wäßriger Salzsäure angesäuert und mit 40 Volumenteilen einer 5N-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung läßt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz des Farbstoffs der Formel 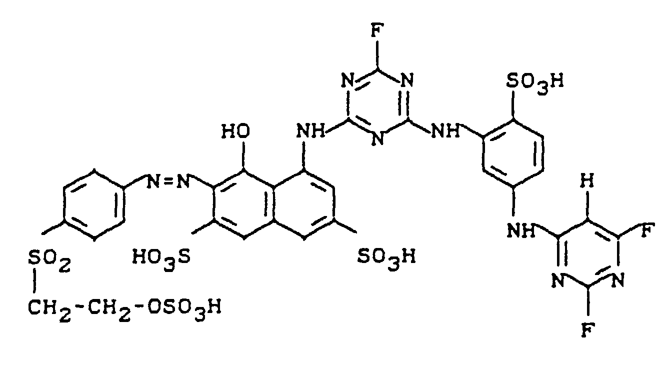 enthält.

Der Farbstoff färbt Baumwolle und Wolle nach den üblichen Färbe- und Druckmethoden für Reaktivfarbstoffe in roten Tönen mit sehr guten Naßechtheitseigenschaften.

Analog zu den beschriebenen Methoden lassen sich auch die in der folgenden Tabelle aufgeführten Farbstoffe herstellen, die Baumwolle im angegebenen Farbton färben.

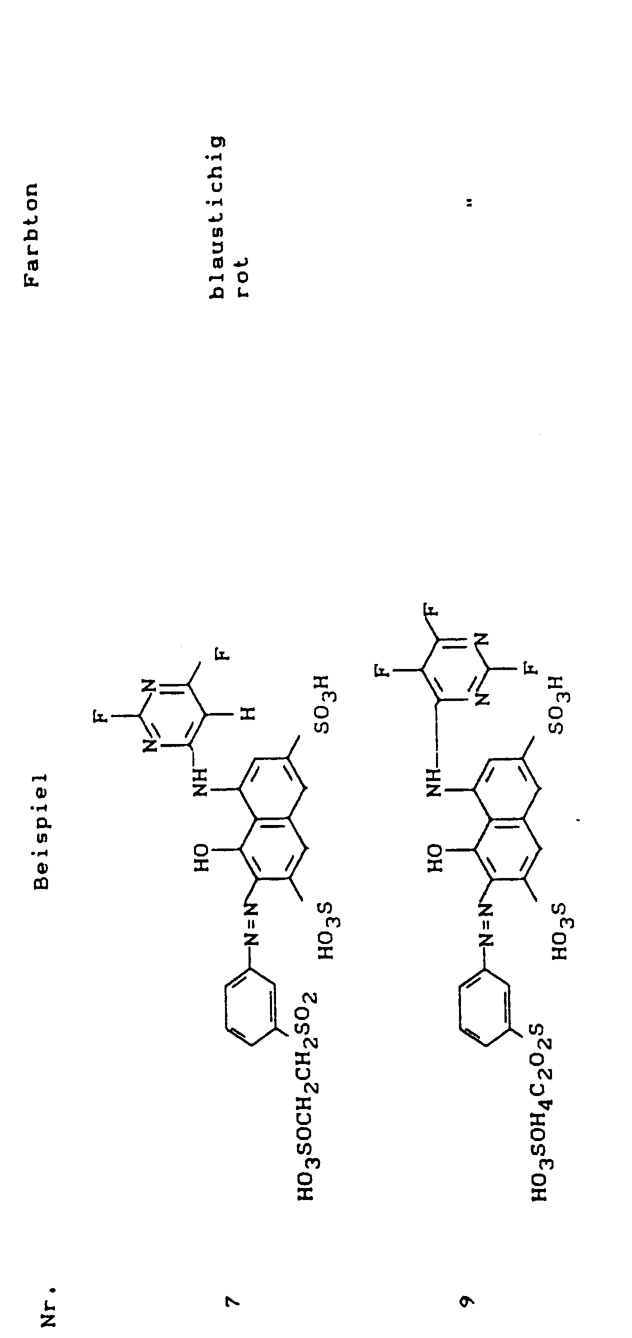

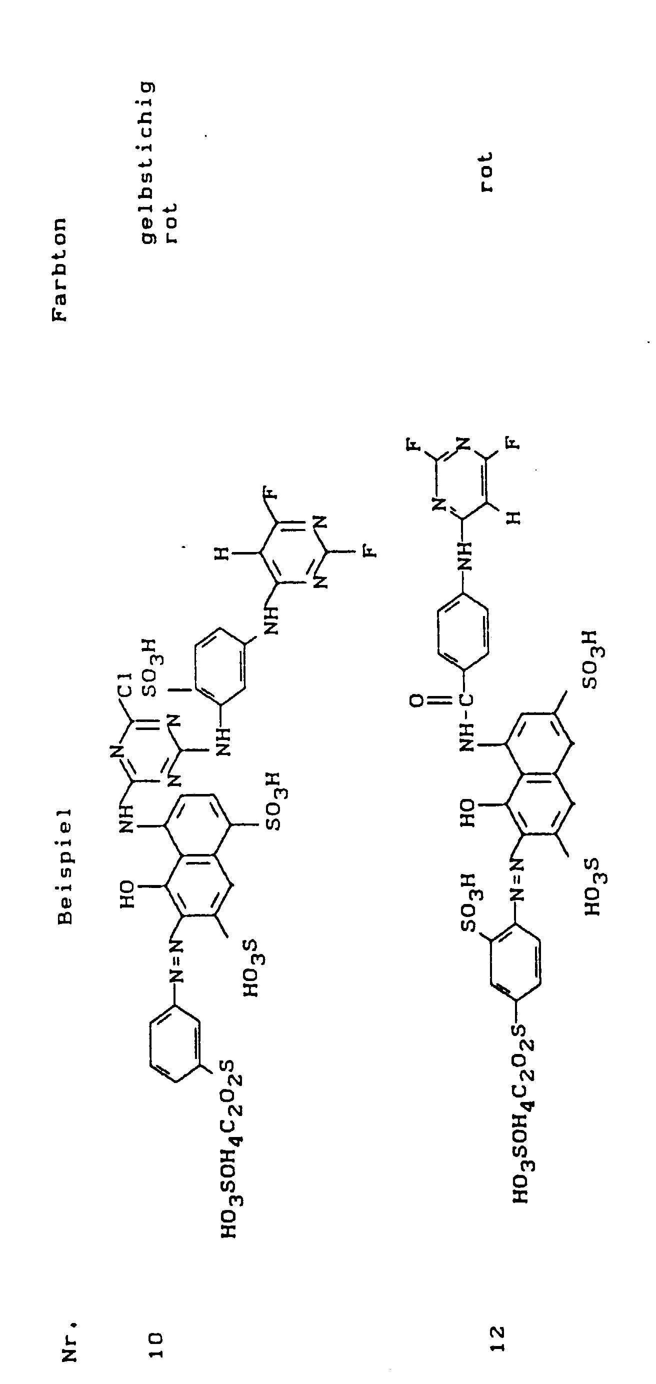

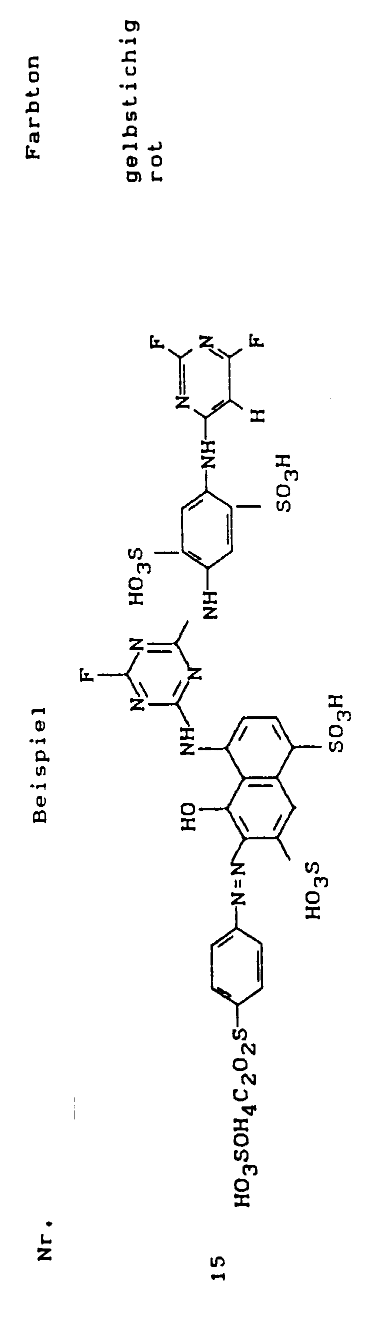

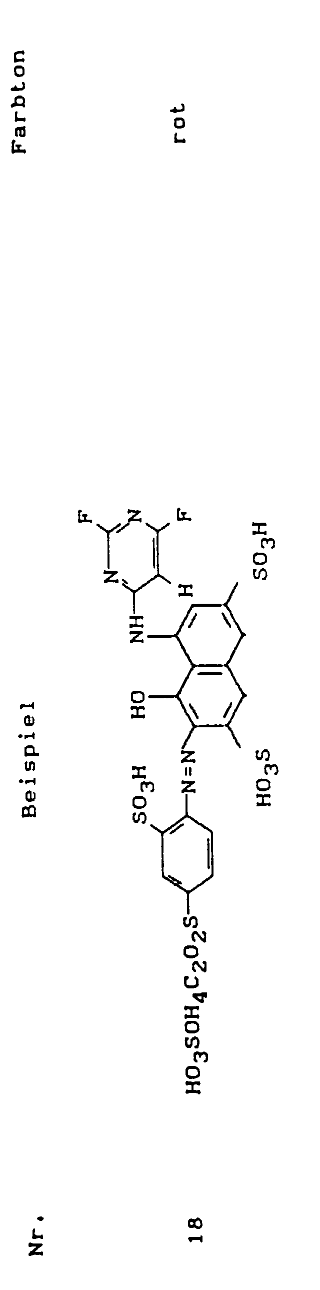

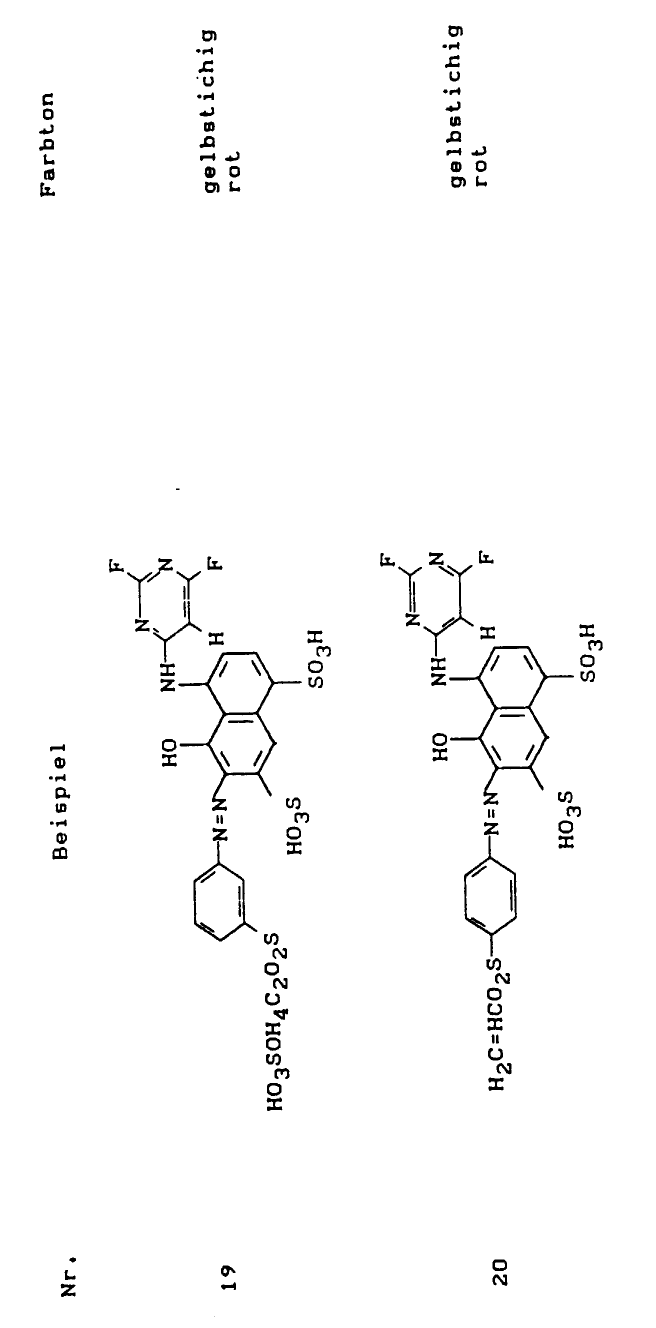

### Beispiel 21

0,1 Mol 1-Aminoethyl-3-sulfomethyl-4-methyl-6-hydroxypyridon (2) werden in Wasser gelöst und mit 0,105 Mol 2,4,6-Trifluorpyrimidin umgesetzt. Der pH-Wert wird mit Sodalösung bei 7,5 gehalten. Nach beendeter Kondensation wird mit der in Beispiel 1 hergestellten Diazotierung versetzt. Durch Abstumpfen mit Sodalösung auf pH 5 bis 6 wird die Kupplung herbeigeführt. Der Farbstoff wird ausgesalzen, abgesaugt, getrocknet und gemahlen. Es resultiert ein in Wasser leicht lösliches gelbes Farbstoffpulver. Nach einem der für Reaktivfarbstoffe üblichen Applikationsverfahren erhält man damit auf Baumwolle stark grünstichig gelbe Färbungen.

Der Farbstoff entspricht der Formel

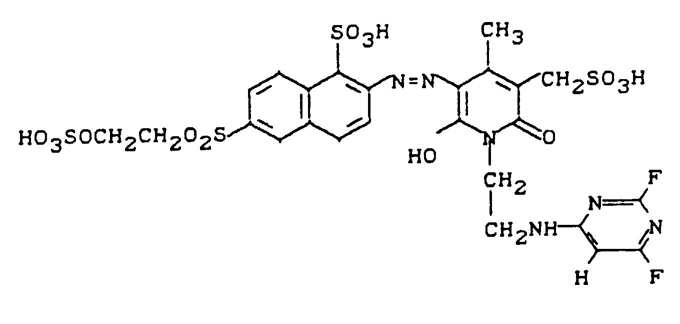

### Beispiel 22

Einen gleich wertvollen Farbstoff erhält man nach der Arbeitsweise des Beispiels 21 unter Verwendung der Diazotierung aus Beispiel 2.

Der Farbstoff entspricht der Formel

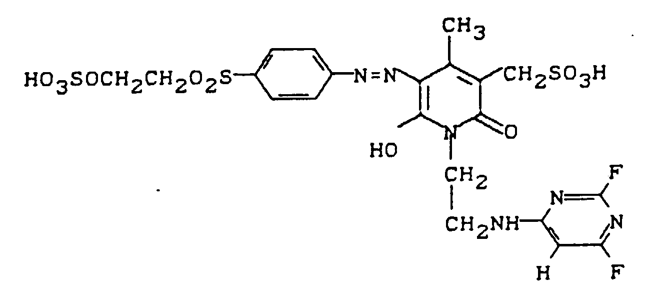

### Beispiel 23

Ersetzt man die 1-Amino-8-naphthol-3,6-disulfonsäure (H-Säure) im Beispiel 1 durch die 2-Amino-8-naphthol-3,6-disulfonsäure und arbeitet ansonsten wie in diesem Beispiel angegeben, erhält man ein rotes Pulver, das den Farbstoff der Formel 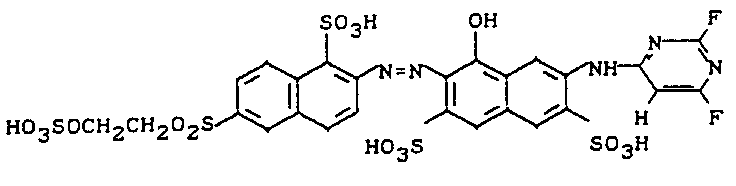 enthält. Dieser Farbstoff färbt Baumwolle nach den für Reaktivfarbstoffe üblichen Applikationsmethoden in Scharlachtönen.

### Beispiel 24

0,1 Mol 4-Acetylamino-2-aminobenzolsulfonsäure werden in 100 ml Wasser mit Natronlauge neutral gelöst, mit Schwefelsäure versetzt und bei 0°C mit Natriumnitritlösung diazotiert. Nach einer Stunde wird überschüssiges Nitrit mit Amidosulfonsäure entfernt. Zu dieser Diazotierung gibt man die äquivalente Menge 1-(4'-Hydroxyethylsulfophenyl)-pyrazol-5-on-3-carbonsäure und hebt den pH mit Natronlauge auf 5. Nachdem die Kupplung beendet ist, wird aufgeheizt, mit Schwefelsäure versetzt und bei 90°C die Acetylgruppe verseift. Der Farbstoff fällt aus, wird abgesaugt und getrocknet. Anschließend wird zur Sulfatierung der Hydroxygruppe in Monohydrat eingetragen. Nach dem Austragen auf Eiswasser wird mit 2,4,6-Trifluorpyrimidin bei pH 4 und 40°C kondensiert. Der Farbstoff wird ausgesalzen, isoliert, getrocknet und gemahlen. Man erhält ein bräunliches Farbstoffpulver, das den Farbstoff der Formel 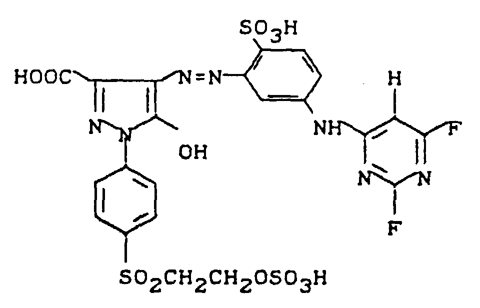 enthält und Baumwolle nach den für Reaktivfarbstoffe üblichen Applikationsmethoden in grünstichig gelben Tönen färbt.

### Beispiel 25

Arbeitet man analog dem Beispiel 24 und setzt anstelle von 4-Acetylamino-2-aminobenzolsulfonsäure die 5-Acetylamino-2-amino-benzolsulfonsäure ein, erhält man den Farbstoff der Formel 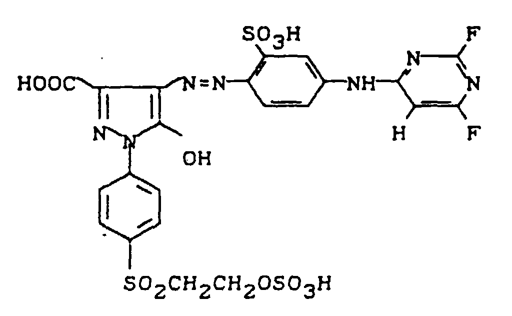 der Baumwolle nach den für Reaktivfarbstoffe üblichen Applikationsmethoden in goldgelben Tönen färbt.

Analog zu den beschriebenen Methoden lassen sich auch die in der folgenden Tabelle aufgeführten Farbstoffe herstellen, die Baumwolle in den angegebenen Farbtönen färben.

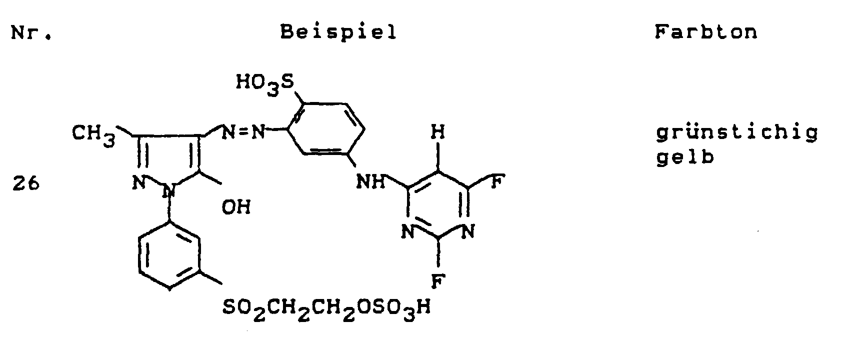

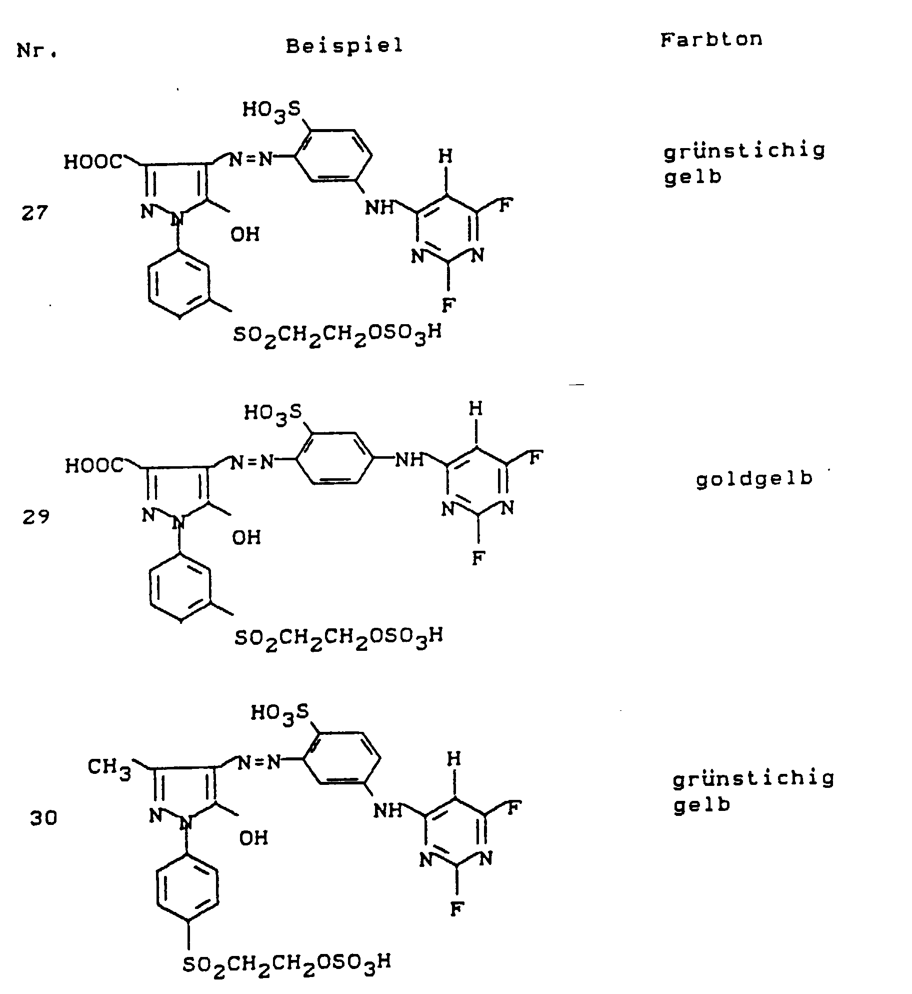

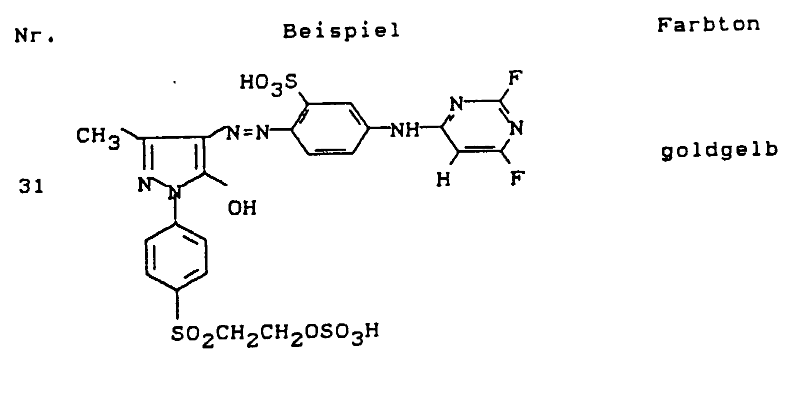

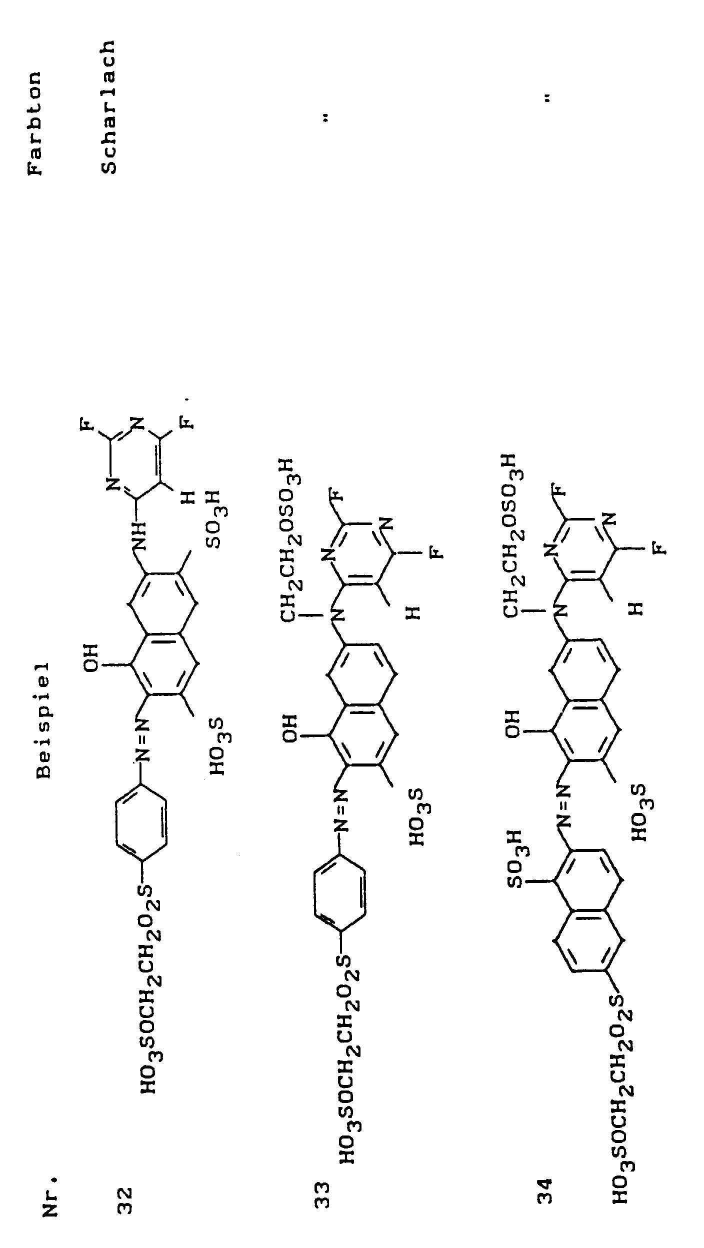

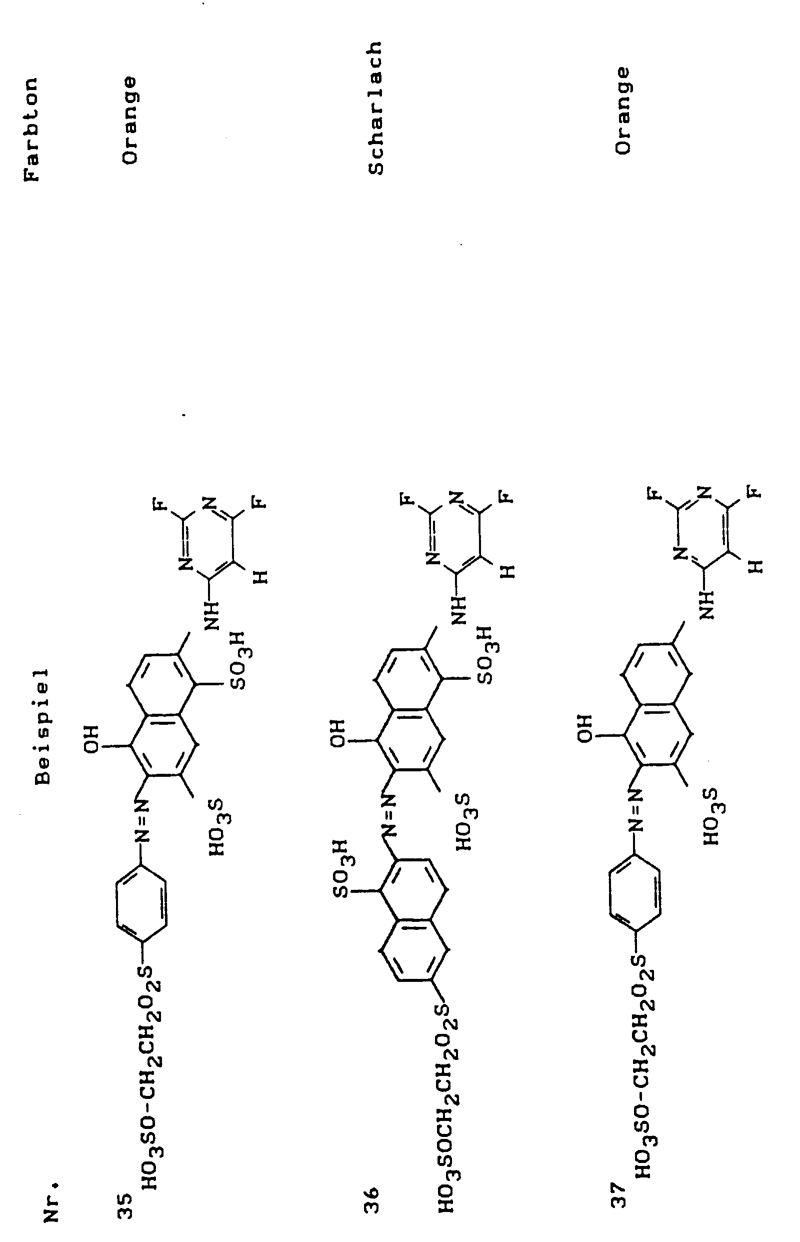

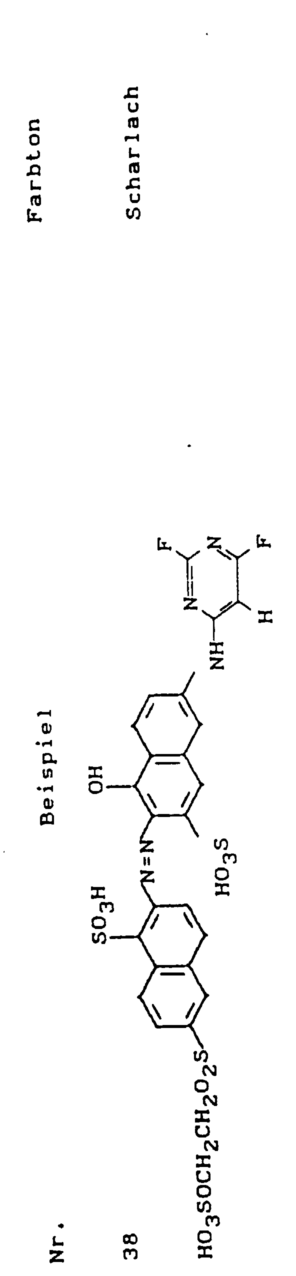

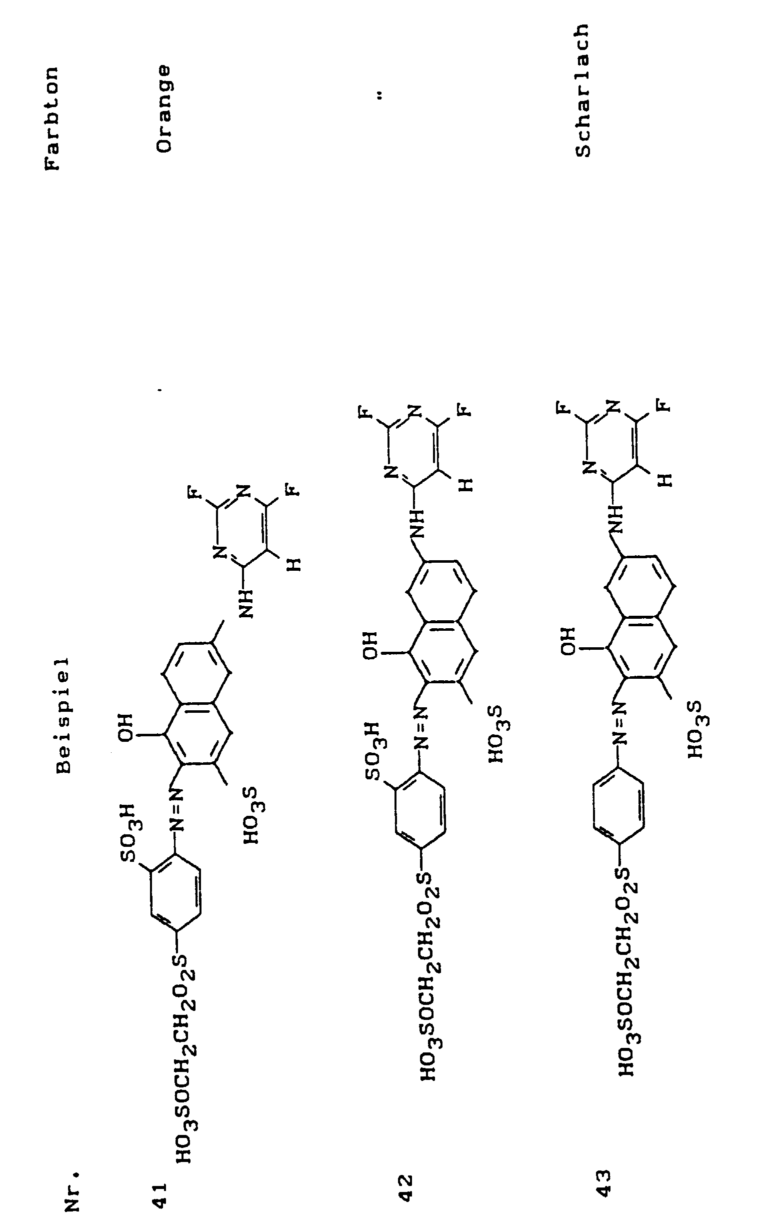

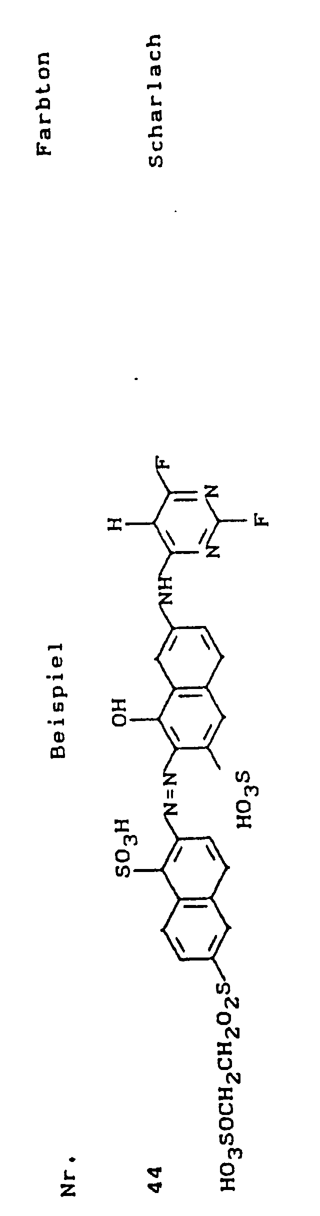

### Beispiel 45

0,1 Mol 1-(4'-Amino-3'-sulfophenyl)-3-methyl-5-pyrazolon werden in 400 ml Wasser mit Natronlauge neutral gelöst, mit Salzsäure auf pH 4 gestellt und mit der äquivalenten Menge an 2,4,6-Trifluorpyrimidin bei 35°C acyliert, wobei die entstehende Fluorwasserstoffsäure mit Sodalösung neutralisiert wird. Zu der so hergestellten Kupplungskomponente wird eine wie in Beispiel 1 hergestellte Diazotierung von 2-Amino-6-sulfatoethylsulfonyl-naphthalin-1-sulfonsäure gegeben und der pH-Wert mit Natriumacetatlösung bei 4 gehalten. Nach beendeter Kupplung wird der Farbstoff ausgesalzen, isoliert, getrocknet und gemahlen. Man erhält ein bräunliches Pulver, das den Farbstoff der Formel 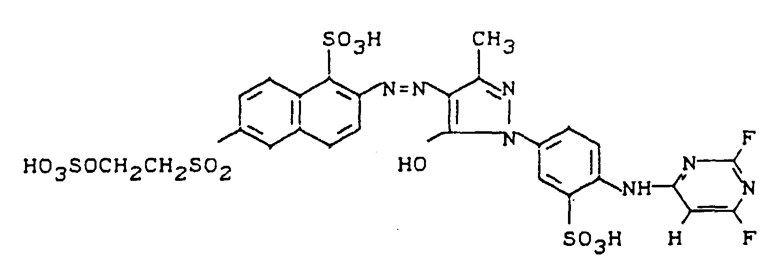 enthält und Baumwolle in gelben Tönen färbt.

### Beispiel 46

Setzt man im Beispiel 45 anstelle der Diazotierung von 2-Amino-6-sulfatoethylsulfonyl-naphthalin-1-sulfonsäure die Diazotierung von 1-Amino-4-sulfatoethylsulfonylbenzol ein, erhält man ebenfalls einen wertvollen Farbstoff der Formel 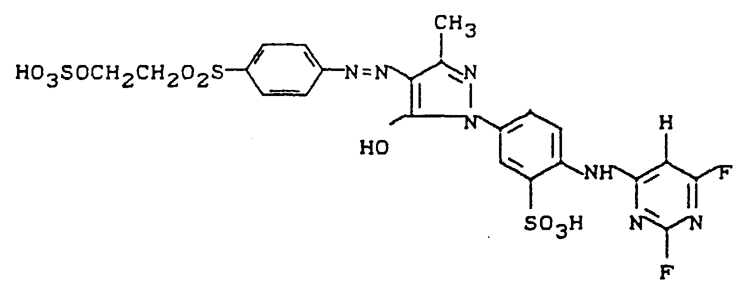 der Baumwolle nach den für Reaktivfarbstoffe üblichen Applikationsverfahren in gelben Tönen färbt.

### Beispiel 47

Die analog Beispiel 2 hergestellte Diazotierung von 1-Amino-4-sulfatoethylsulfonylbenzol wird mit 4-Acetylamino-2-amino-benzol-1-sulfonsäure versetzt und der pH mit Natriumacetatlösung auf pH 2 angehoben und gehalten. Nach beendeter Kupplung wird bei pH 4 und 40°C mit 2,4,6-Trifluorpyrimidin acyliert, wobei entstehende Fluorwasserstoffsäure mit Sodalösung neutralisiert wird. Nach Ende der Kondensation wird der Farbstoff ausgesalzen, isoliert, getrocknet und gemahlen. Der Farbstoff der Formel 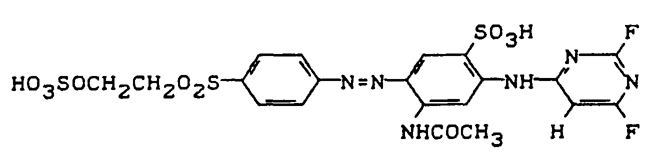 färbt Baumwolle in gelben Tönen.

### Beispiel 48

Ersetzt man im Beispiel 47 die Diazokomponente durch die Diazokomponente des Beispiels 1, erhält man einen Farbstoff der Formel 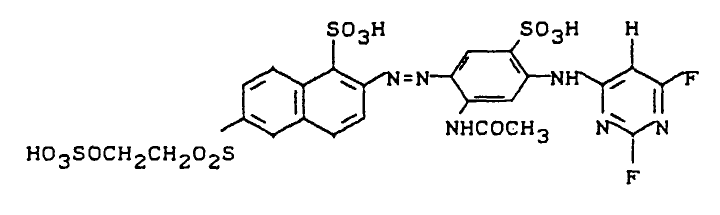 der Baumwolle in gelben Tönen färbt.

### Beispiel 49

0,1 Mol des Azofarbstoffes der Formel 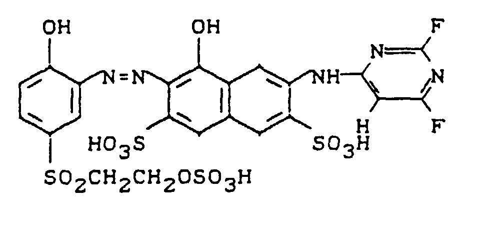 werden in 1 l Wasser neutral gelöst. Man streut bei Raumtemperatur 28 g Kupfersulfat (CuSO₄^{·}5H₂O) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkles Pulver, das sich leicht in Wasser löst und Baumwolle nach einem der für Reaktivfarbstoffe üblichen Färbeverfahren rubin färbt. Der Farbstoff entspricht der Formel

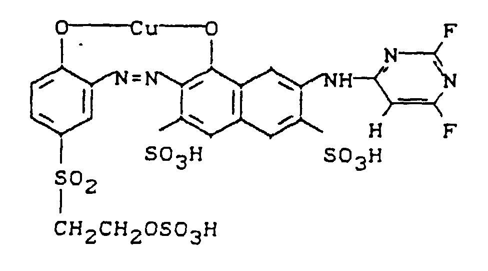

Der in diesem Beispiel verwendete Azofarbstoff wird erhalten, indem man 2-Amino-4-sulfatoethylsulfonylphenol diazotiert und bei pH 5,5 bis 6,5 auf das Kondensationsprodukt kuppelt, das man durch Acylierung von 2-Amino-8-hydroxy-naphthalin-3,6-disulfonsäure mit 2,4,6-Trifluorpyrimidin erhält.

### Beispiel 50

0,1 Mol des Azofarbstoffes der Formel 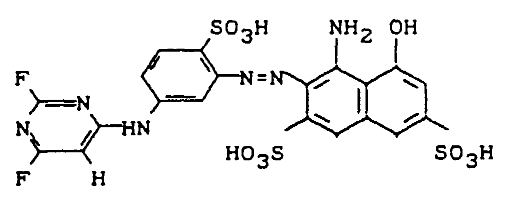 werden in Wasser bei 10°C und pH 7,5 angerührt. Dazu fügt man die wäßrig-salzsaure Diazotierung einer äquivalenten Menge an 2-Amino-6-(2-sulfatoethyl)sulfonyl-1-naphthalinsulfonsäure und hält gleichzeitig durch Zudosieren vom Kaliumhydrogencarbonatlösung den pH konstant zwischen 6,5 und 7,5. Nach beendeter Kupplung wird der Farbstoff ausgesalzen, isoliert, getrocknet und gemahlen. Man erhält ein schwarzes Pulver, das Baumwolle in marineblauen Tönen färbt. Der Farbstoff entspricht der Formel

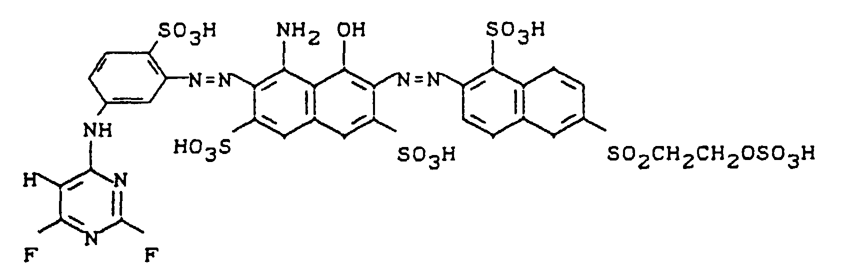

Durch Variation der Diazokomponente und der Kupplungsreihenfolge erhält man in analoger Arbeitsweise Beispiel 51:

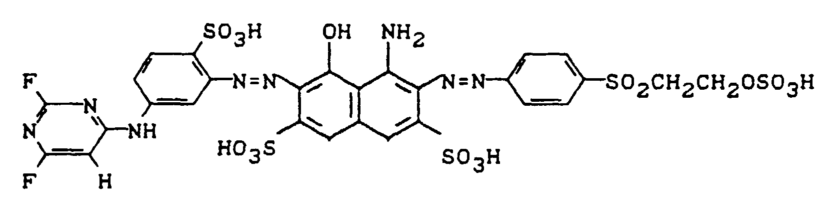

### Beispiel 52

In die analog Beispiel 5 hergestellte Diazotierung von 1-Amino-4-sulfatoethylsulfonylbenzol wird das bei pH 4 und 40°C hergestellte Kondensationsprodukt aus 1-Hydroxy-3-sulfo-7-(2'-sulfo-4'-aminophenylamino)-naphthalin und 2,4,6-Trifluorpyrimidin gegeben. Durch Einstellen eines pH-Wertes von 6 bis 7 mit Sodalösung wird der Farbstoff der Formel 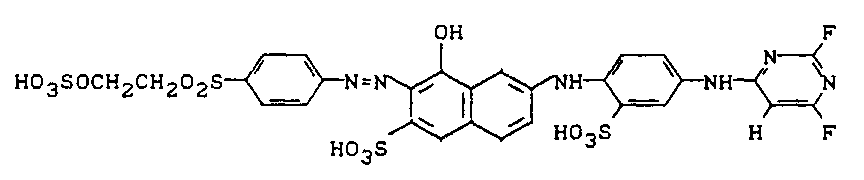 hergestellt. Nach beendeter Kupplung wird der Farbstoff ausgesalzen, isoliert, getrocknet und gemahlen. Man erhält ein dunkelbraunes, leicht in Wasser lösliches Pulver, das Baumwolle braun färbt.

### Beispiel 53

Zu der analog Beispiel 5 hergestellten Diazotierung von 1-Amino-4-sulfatoethylsulfonylbenzol wird die äquivalente Menge an 5-Amino-2-naphthalinsulfonsäure gegeben und der pH-Wert durch Zugabe von Natriumacetatlösung auf 4,5 gestellt. Nach 2 Stunden Rühren bei 10 bis 15°C ist keine Diazotierung mehr nachweisbar. Es wird auf 0 bis 5°C abgekühlt und salzsauer mit Natriumnitritlösung diazotiert. Nach 1 Stunde wird überschüssige salpetrige Säure mit Amidosulfonsäure zerstört. In die Diazotierung wird 2-Amino-1-naphthalinsulfonsäure eingetragen, der pH-Wert auf 4 bis 5 mit Sodalösung angehoben und 2 Stunden nachgerührt. Nach beendeter Kupplung wird mit 2,4,6-Trifluorpyrimidin bei pH 4 und 50°C acyliert. Der Farbstoff wird ausgesalzen, isoliert, getrocknet und gemahlen. Man erhält ein dunkelbraunes Farbstoffpulver, das den Farbstoff der Formel 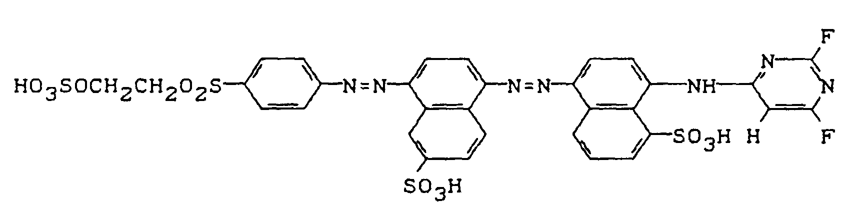 enthält und Baumwolle in braunen Tönen färbt.

### Beispiel 54

Nach der Arbeitsweise des Beispiels 53 erhält man unter Verwendung der Diazotierung von 2-Amino-6-sulfatoethylsulfonyl-naphthalin-1-sulfonsäure den Farbstoff der Formel 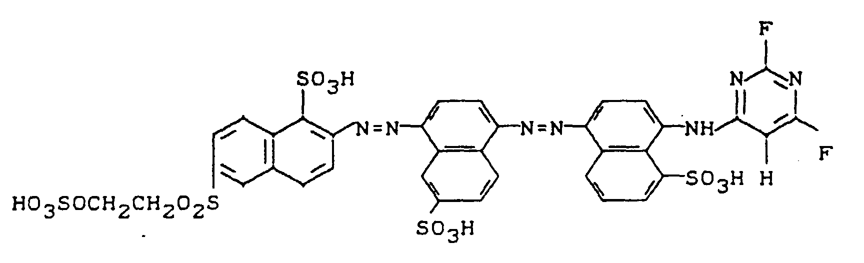 der Baumwolle nach den für Reaktivfarbstoffe üblichen Applikationsmethoden in braunen Tönen färbt.

### Beispiel 55

Nach der Arbeitsweise des Beispiels 53 erhält man unter Verwendung der Diazotierung von 7-Amino-3-sulfatoethylsulfonyl-naphthalin-1-sulfonsäure und m-Toluidin als 2. Kupplungskomponente den Farbstoff der Formel 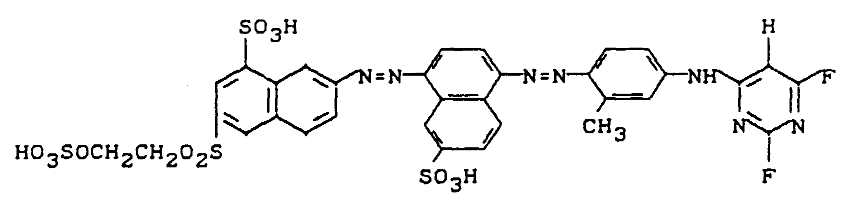 der Baumwolle in braunen Tönen färbt.

Analog zu den beschriebenen Methoden lassen sich auch die in der folgenden Tabelle aufgeführten Farbstoffe herstellen, die Baumwolle im angegebenen Farbton färben.

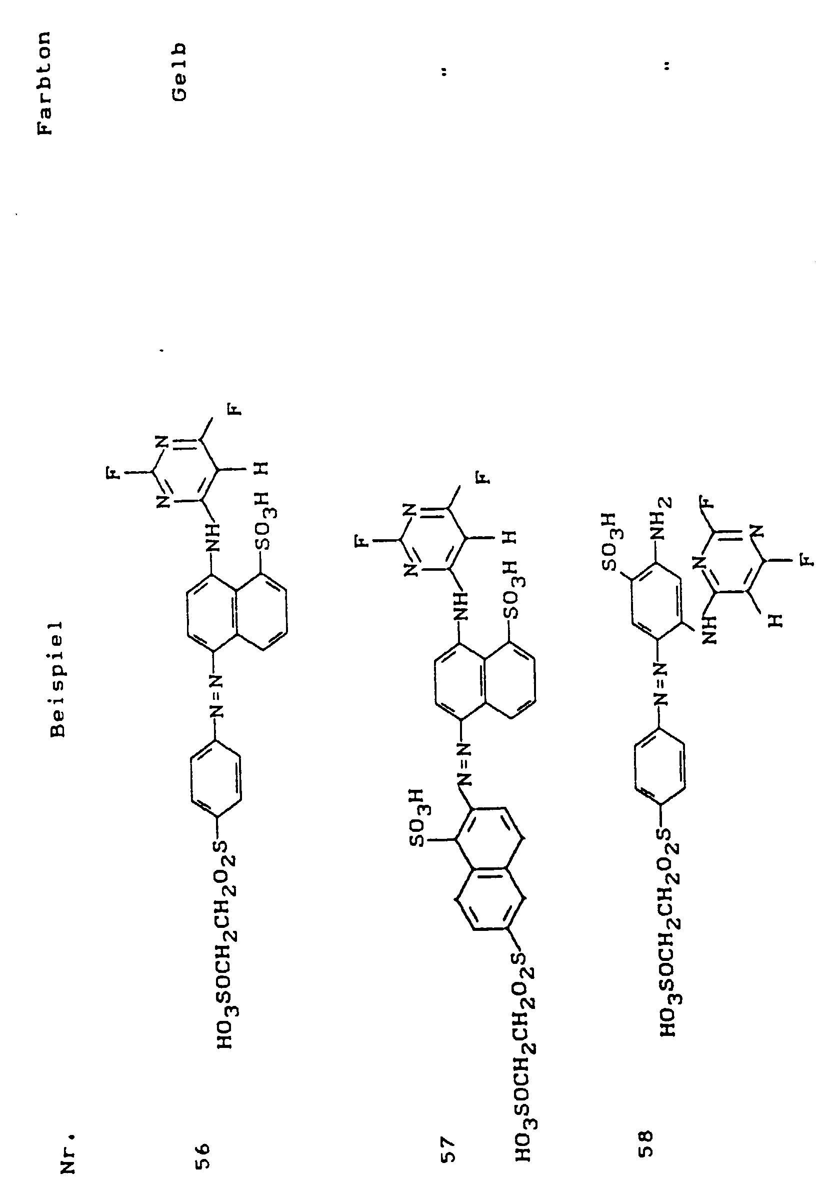

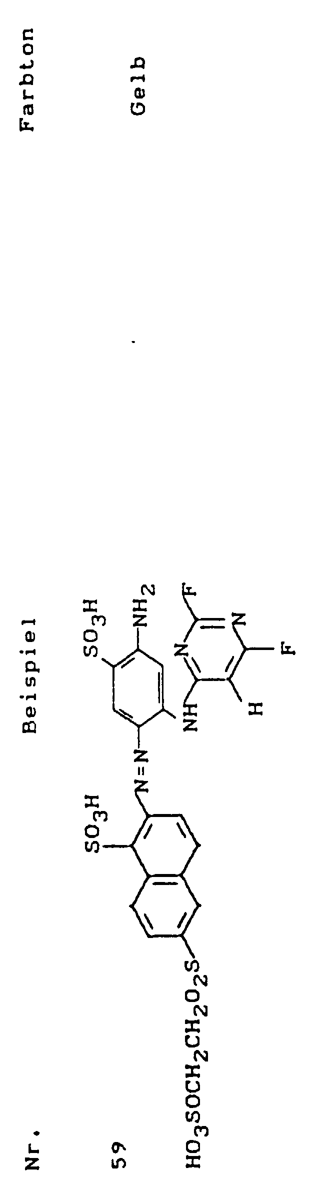

### Beispiel 60

30,3 Teile 2-Naphthylamin-4,8-disulfonsäure werden in 400 Volumenteilen Eiswasser suspendiert. Es werden 25 Gewichtsteile conc. Salzsäure zugefügt und mit 20 Volumenteilen 5N-Natriumnitrit diazotiert. Es wird noch 1 Stunde bei 0 bis 5°C nachgerührt und dann überschüssige salpetrige Säure mit wenig Amidosulfonsäure zerstört. Dann werden 33,1 Teile 1-Naphthylamin-6-β-sulfatoethylsulfon zugegeben und durch Natriumacetat wird der pH-Wert langsam auf 4,5 erhöht. Bei diesem pH-Wert wird noch 2 Stunden bei 10 bis 15°C nachgerührt, bis keine freie Diazoniumverbindung mehr nachweisbar ist. Dann wird wieder auf 0 bis 5°C abgekühlt, 35 Teile einer conc. Salzsäure und anschließend 22 Volumenteile einer 5N-Natriumnitritlösung zugefügt. Es wird 1 Stunde bei 0 bis 5°C nachgerührt und dann wenig Amidosulfonsäure zugegeben.

In die Lösung werden dann 22,5 Teile 1-Naphthylamin-8-sulfonsäure eingetragen und mit etwa 15 Teilen Soda ein pH-Wert von 4 bis 5 eingestellt und gehalten, wobei 2 Stunden nachgerührt wird. Die Farbstofflösung wird dann auf pH 5,5 bis 6,0 gestellt und auf 50°C erwärmt. Bei dieser Temperatur und bei diesem pH-Wert gibt man 16 Teile 2,4,6-Trifluorpyrimidin hinzu und läßt dann 1 Stunde nachrühren, wobei der pH-Wert von 5,5 bis 6,0 gehalten wird. Der Farbstoff wird mit Kalium- und Natriumchlorid aus der Lösung isoliert.

Nach dem Trocknen bei 40 bis 50°C und Mahlen erhält man ein schwarzes Farbstoffpulver, das das Alkalimetallsalz der Verbindung der Formel 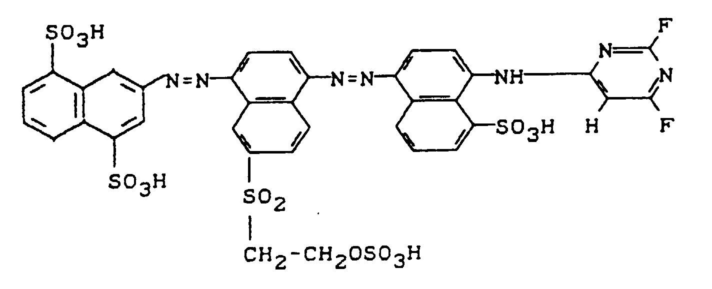 enthält. Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Naßechtheitseigenschaften.

## Patentansprüche

1. Farbstoffe der Formel (1a) sowie deren Metallkomplexe 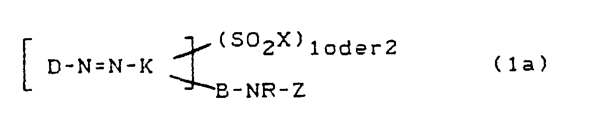 worin
D = Rest einer Diazokomponente der Benzol- oder Naphthalinreihe und
K = Rest einer Kupplungskomponente der Benzol-, Naphthalin-, Acetessigsäurearylid- oder heterocyclischen Reihe.
B = direkte Bindung oder Brückenglied an ein Ring C-Atom eines aromatisch-carbocyclischen oder an ein Ring C- oder N-Atom eines aromatisch-heterocyclischen Ringes (in D oder K).
X = CH=CH₂ oder CH₂CH₂-Y, worin
Y = alkalisch eliminierbarer Rest
R = H oder C₁-C₄-Alkyl, das gegebenenfalls substituiert sein kann,
Z = faserreaktiver Rest der Formel 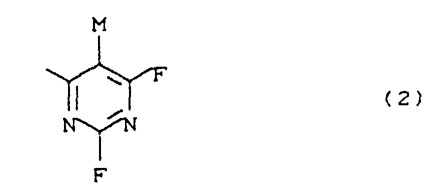 worin
M = H,
mit Ausnahme des Farbstoffs der Formel

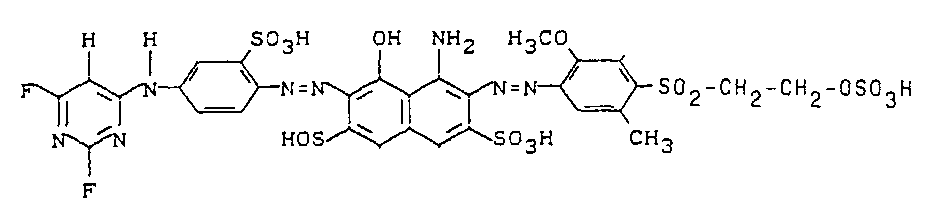

2. Farbstoffe gemäß Anspruch 1, dadurch gekennzeichnet, daß bedeuten
B = direkte Verbindung
-SO₂X = -SO₂CH=CH₂ oder -SO₂CH₂CH₂OSO₃H
wobei die Farbstoffe 1 bis 6 wasserlöslichmachende Gruppen aufweisen,

3. Farbstoffe gemäß wenigstens einem der vorhergehenden Ansprüche, dadurch gekennzeichnet, daß
Y = OSO₃H, SSO₃H, OCOCH₃, OPO₃H₂, OSO₂CH₃, SCN, NHSO₂CH₃, Cl, Br, F, OCOC₆H₅, OSO₂-C₆H₄CH₃, [N(CH₃)₃]⁺A⁻ oder

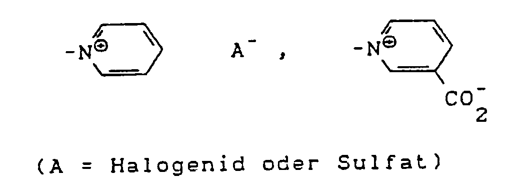

4. Farbstoffe des Anspruchs 1 mit den Formeln (3) bis (33) 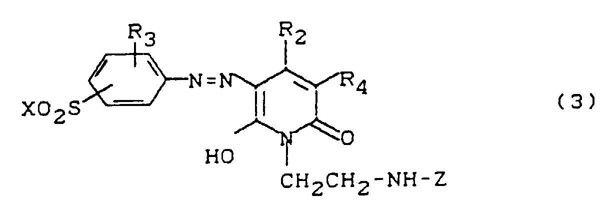 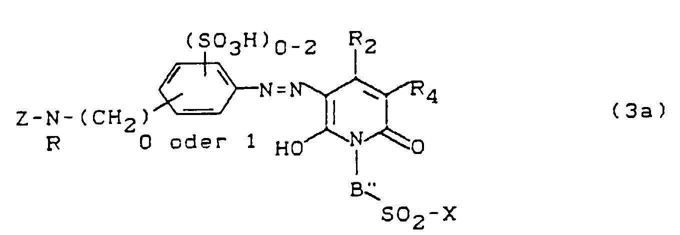 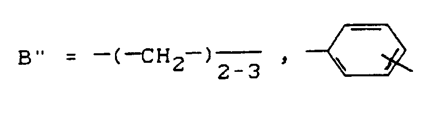 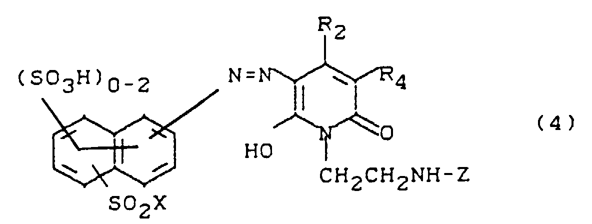 worin
R₂ = H, C₁-C₄-Alkyl, insbesondere CH₃ und CH₂SO₃H, COOH,
R₃ = H, C₁-C₄-Alkyl, C₁-C₄-Alkoxy, Cl, Br, COOH, SO₃H
R₄ = H, SO₃H, CH₂SO₃H, Cl, C₁-C₄-Alkylsulfonyl, Carbonamid, insbesondere CONH₂ sowie Carbonsäuremono- und -di-C₁-C₄-alkylamid. 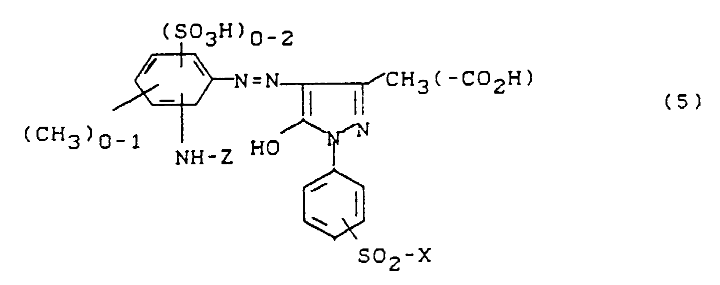 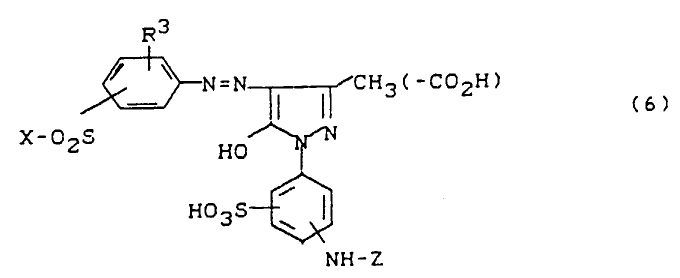 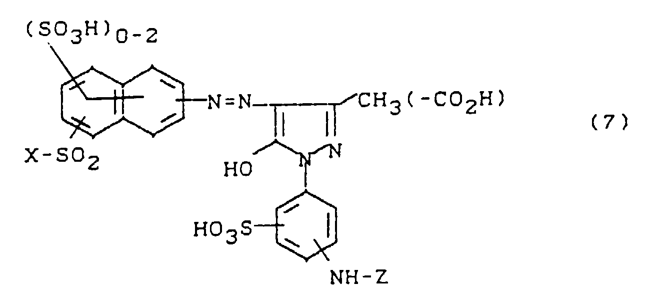 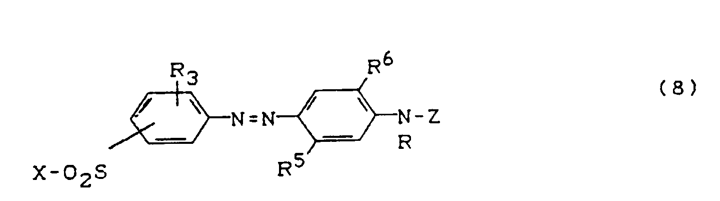 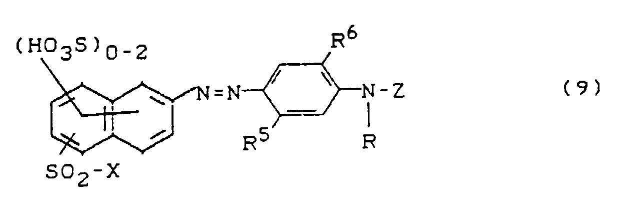 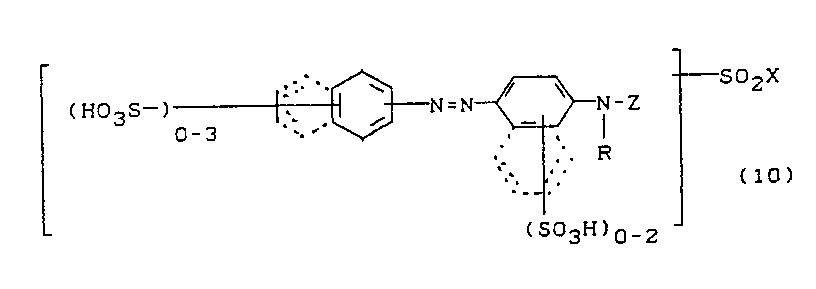
worin
R⁵ = H, C₁-C₄-Alkyl, C₁-C₄-Alkoxy, Acylamino, insbesondere C₁-C₄-Alkylcarbonylamino oder Arylcarbonylamino wie gegebenenfalls substituiertes Phenylcarbonylamino, C₁-C₄-Alkylsulfonylamino, Cl, Br, Aminocarbonylamino, C₁-C₄-Alkylsulfonylamino, Arylsulfonylamino,
R⁶ = H, C₁-C₄-Alkyl, C₁-C₄-Alkoxy, OH, SO₃H 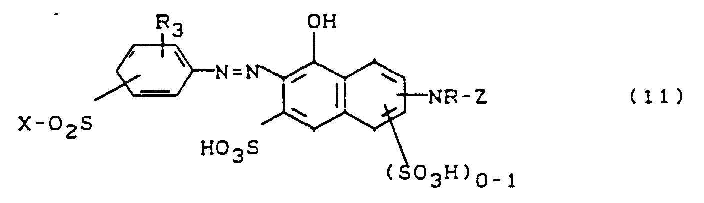 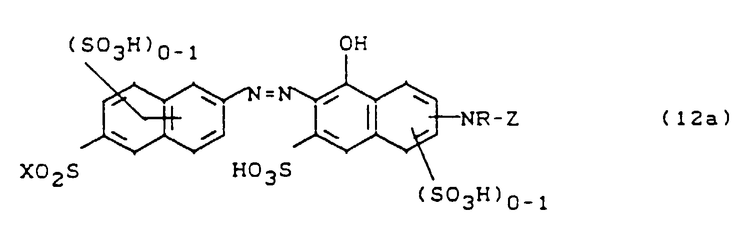 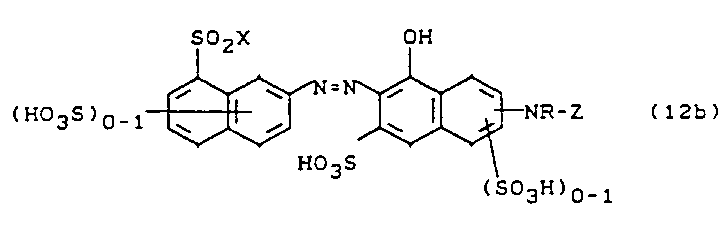 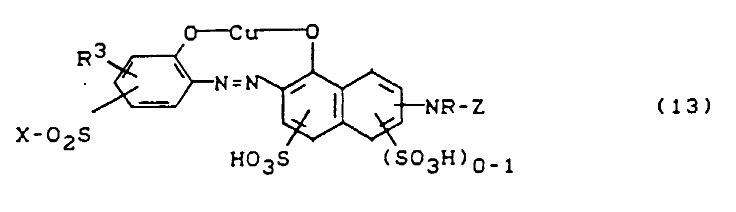 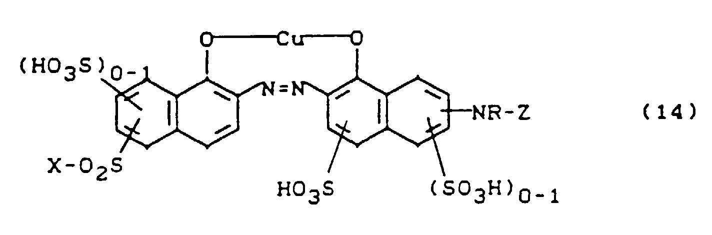 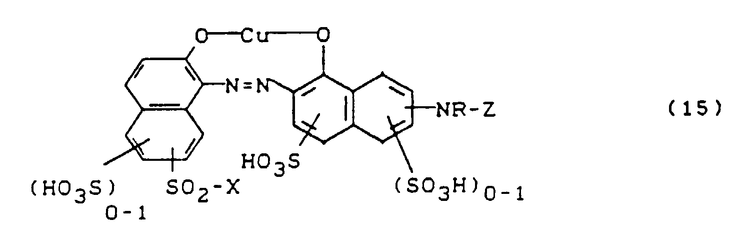
1:2-Metallkomplexe von Farbstoff 16

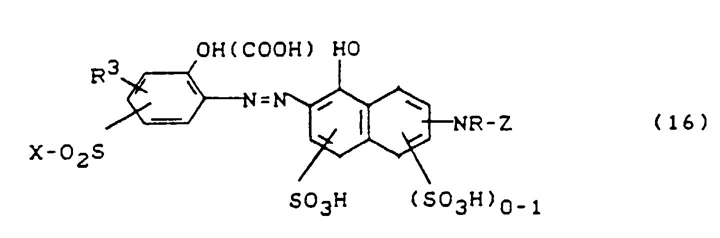

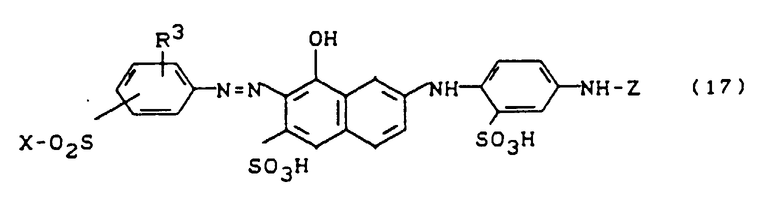

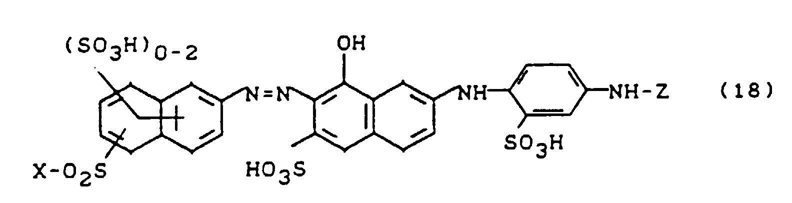

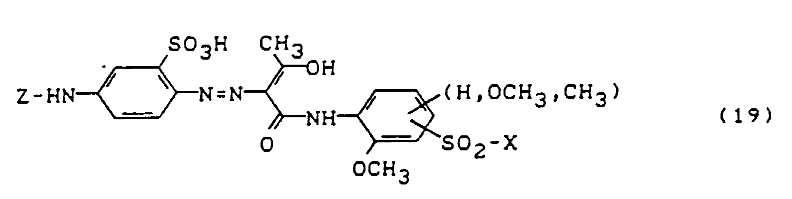

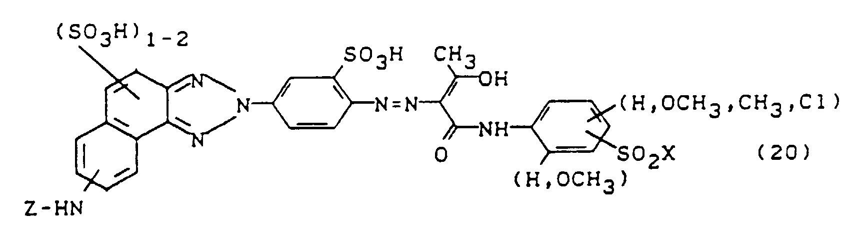

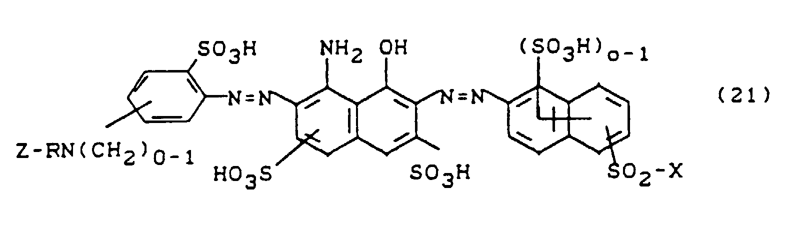

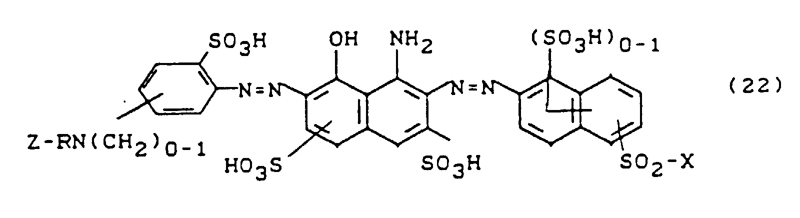

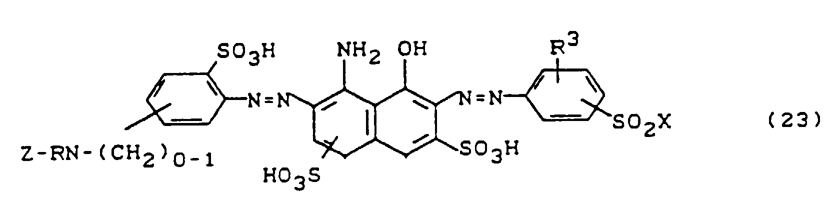

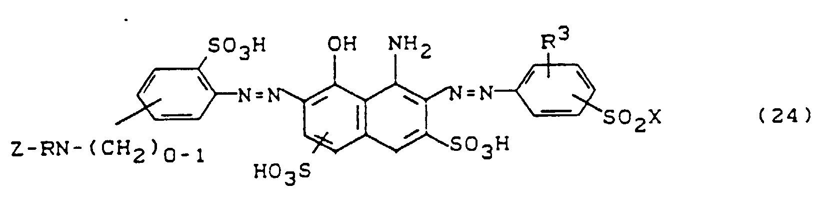

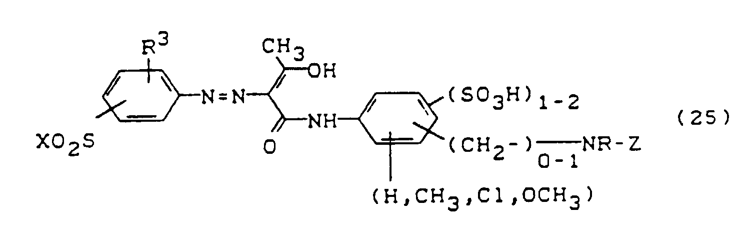

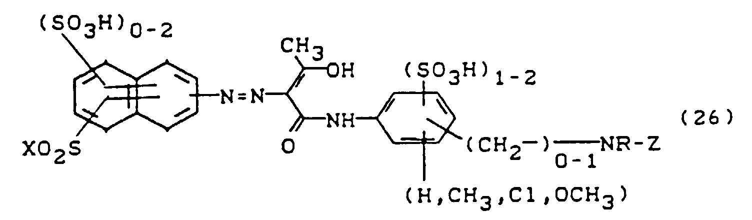

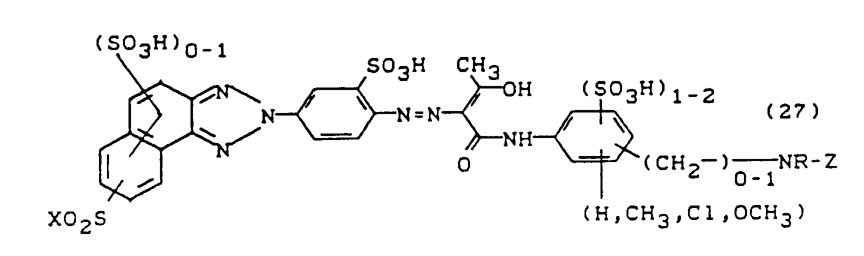

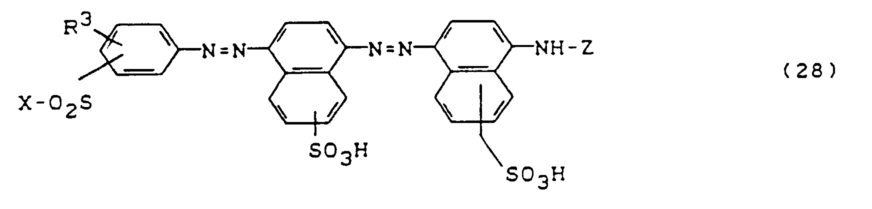

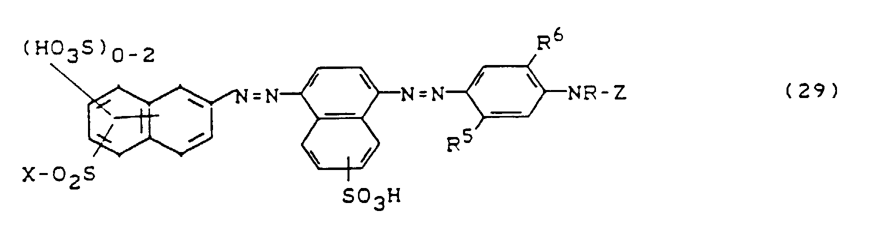

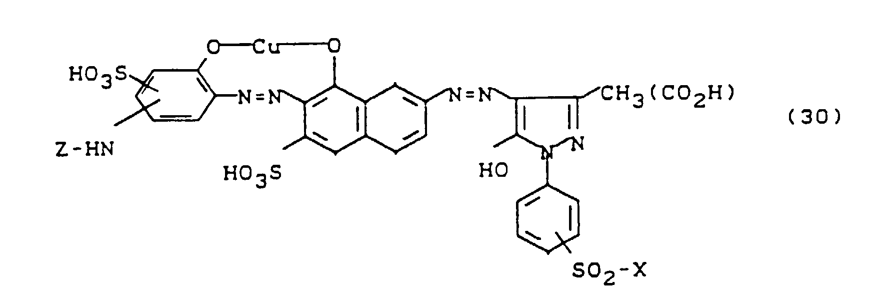

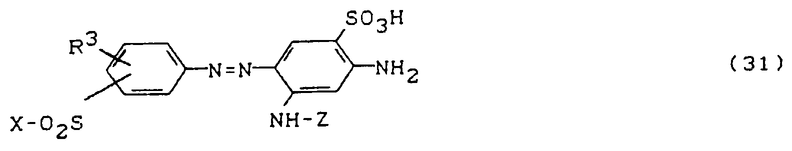

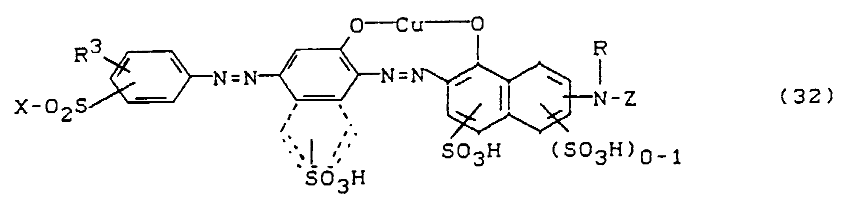

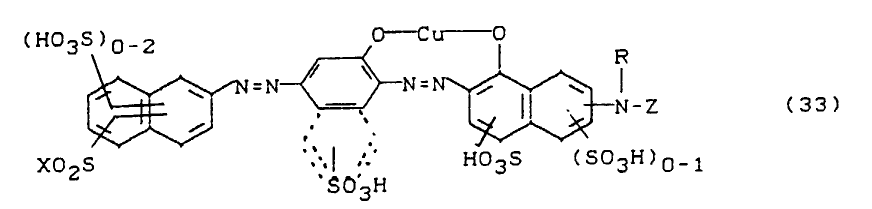

5. Farbstoffe des Anspruchs 1 der Formeln (36) bis (58) 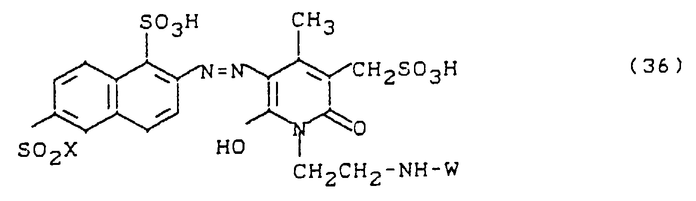 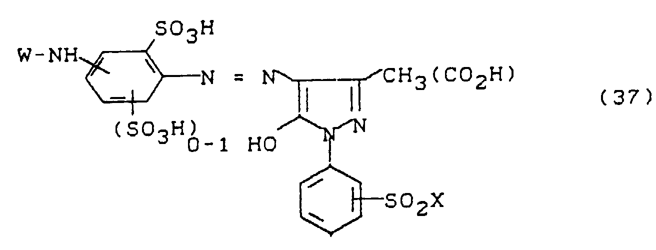 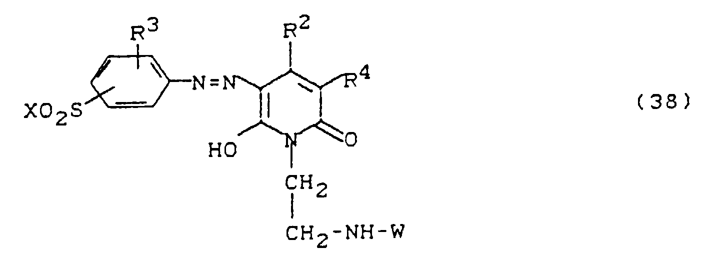 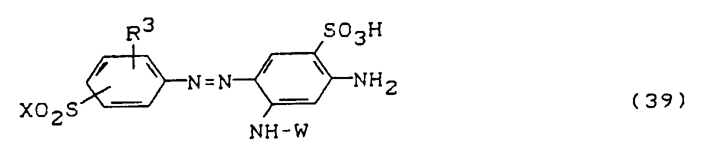 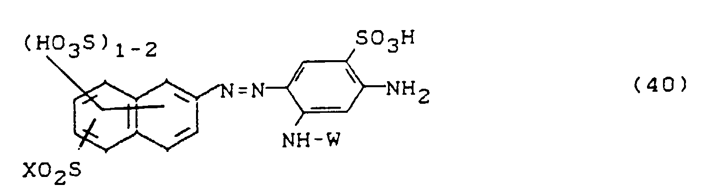 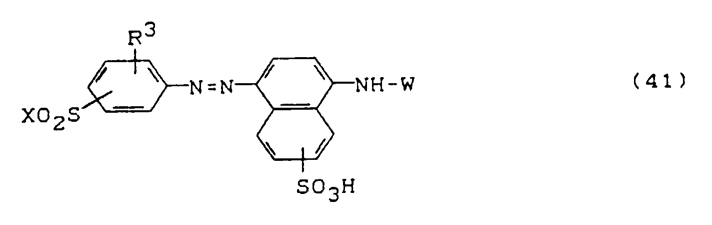 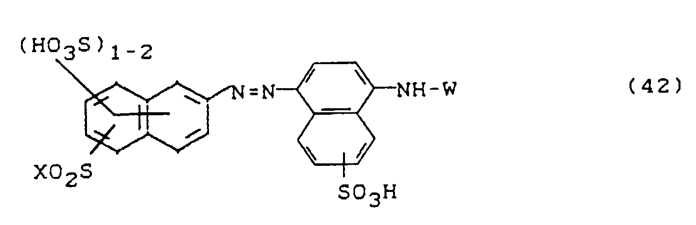 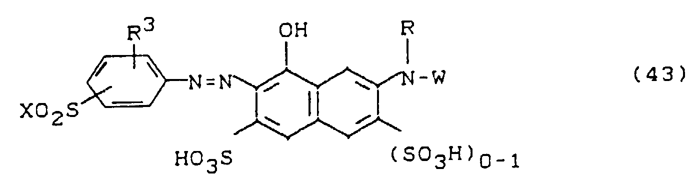 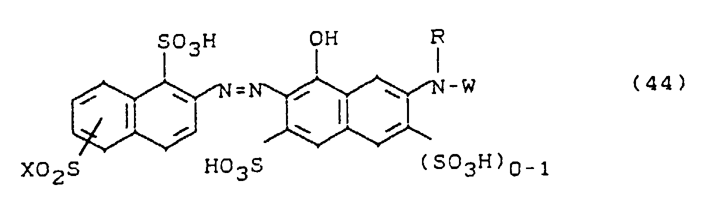 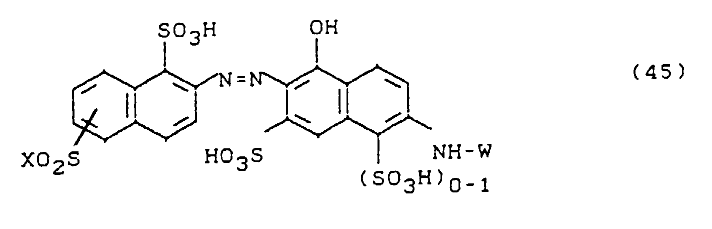 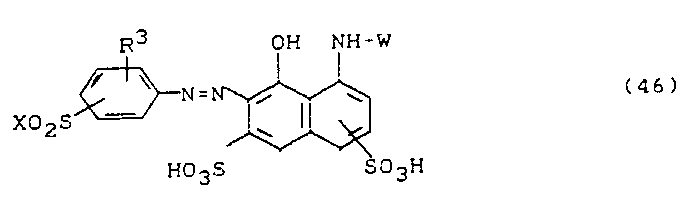 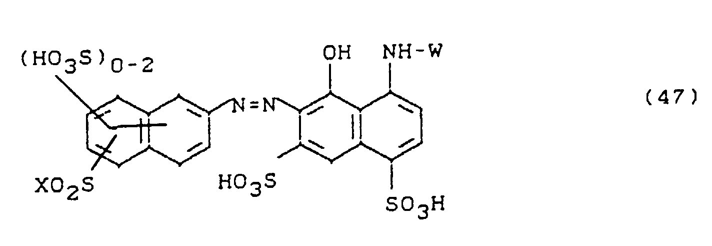 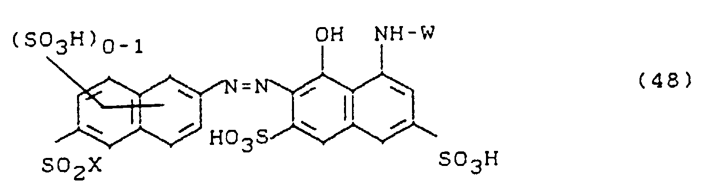 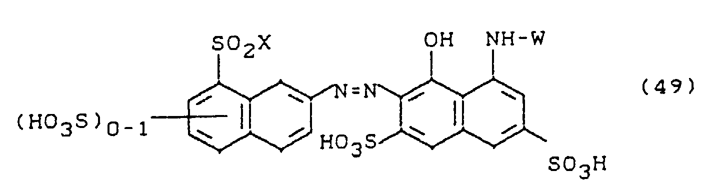 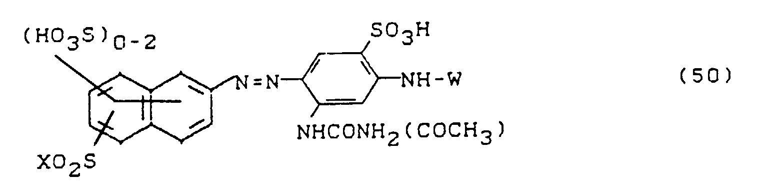 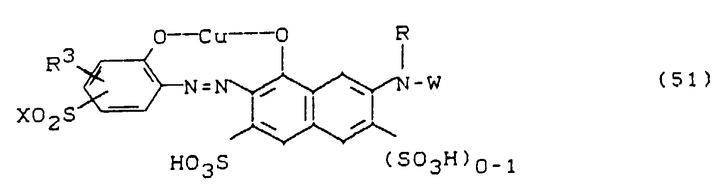 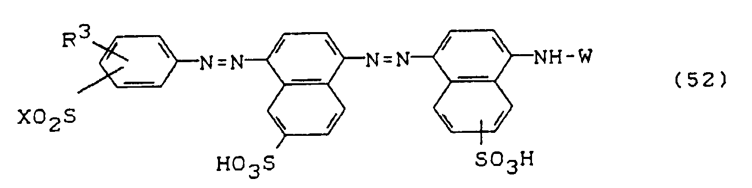 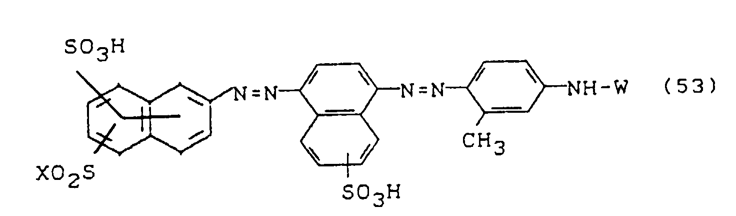 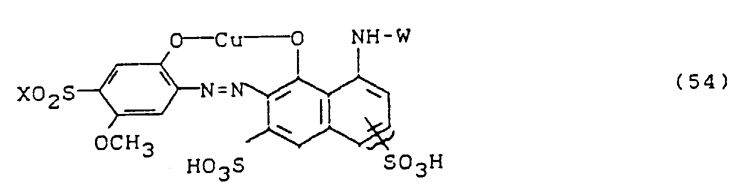 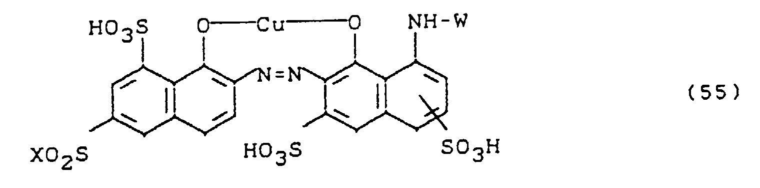 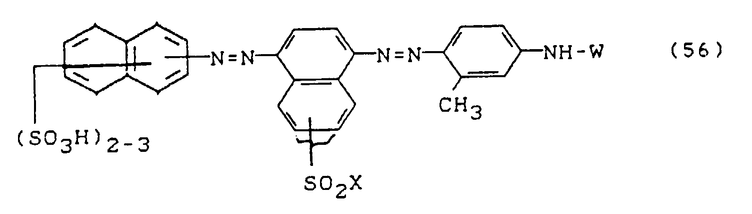 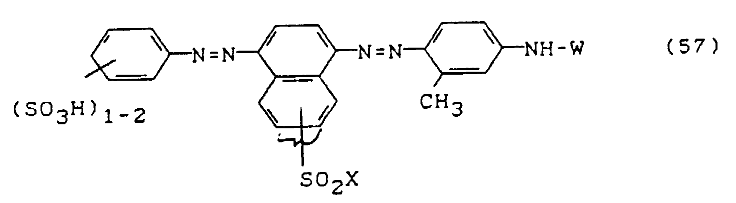 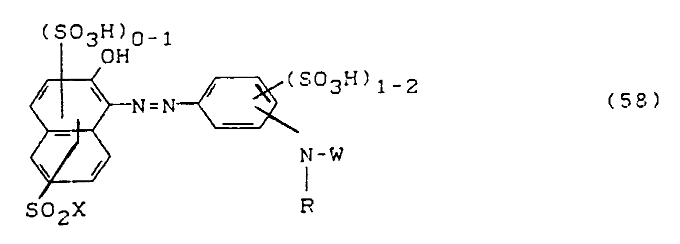 mit
X = -CH₂CH₂OSO₃H bzw. -CH=CH₂ und
W = 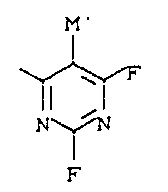 worin
M' = H.

6. Verfahren zum Färben und Bedrucken von natürlichen und synthetischen OH- oder amidgruppenhaltigen Materialien mit einem Farbstoff, dadurch gekennzeichnet, daß wenigstens ein Farbstoff gemäß wenigstens einem der vorhergehenden Ansprüche verwendet wird.

7. Gefärbte oder bedruckte OH- oder amidgruppenhaltige Materialien, dadurch gekennzeichnet, daß sie mit Farbstoffen gemäß wenigstens einem der Ansprüche 1 bis 5 gefärbt oder bedruckt sind.

## Claims

1. Dyestuffs of the formula (la) and metal complexes thereof 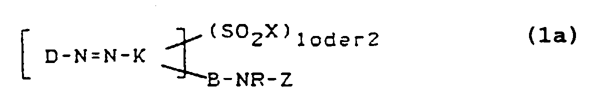 wherein
D = the radical of a diazo component of the benzene or naphthalene series and
K = the radical of a coupling component of the benzene, naphthalene, acetoacetic acid arylide or heterocyclic series,
B = a direct bond or bridge member to a ring C atom of an aromatic-carbocyclic ring or to a ring C or N atom of an aromatic-heterocyclic ring (in D or K),
X = CH=CH₂ or CH₂CH₂-Y, wherein
Y = a radical which can be eliminated under alkaline conditions,
R = H or C₁-C₄-alkyl, which can optionally be substituted,
Z = a fibre-reactive radical of the formula 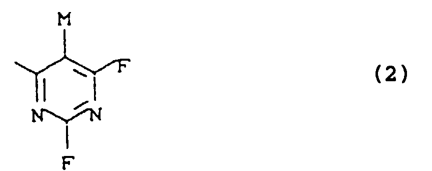 wherein
M = H,
with the exception of the dyestuff of the formula

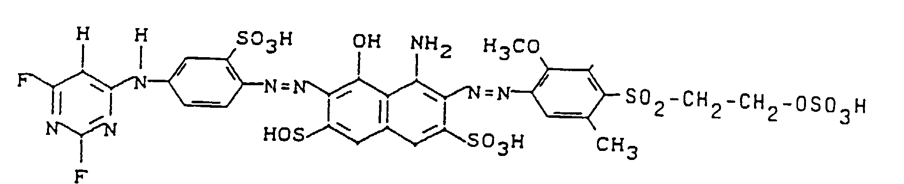

2. Dyestuffs according to Claim 1, characterised in that
B = a direct bond
-SO₂X = -SO₂CH=CH₂ or -SO₂CH₂CH₂OSO₃H,
the dyestuffs containing 1 to 6 groups which confer water-solubility.

3. Dyestuffs according to at least one of the preceding claims, characterised in that
Y = OSO₃H, SSO₃H, OCOCH₃, OPO₃H₂, OSO₂CH₃, SCN, NHSO₂CH₃, Cl, Br, F, OCOC₆H₅, OSO₂-C₆H₄CH₃, [N(CH₃)₃]⁺A⁻ or

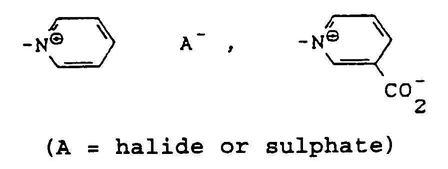

4. Dyestuffs of Claim 1, with the formulae (3) to (33) 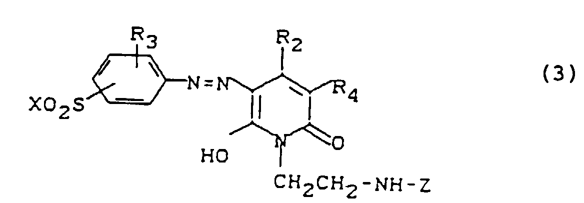 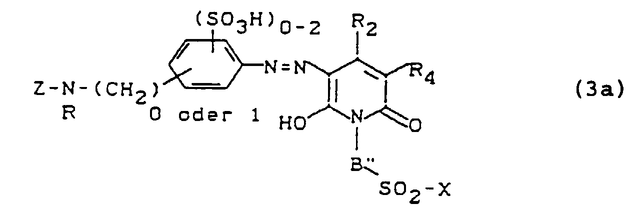 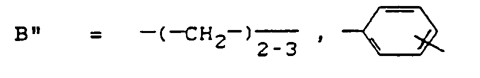 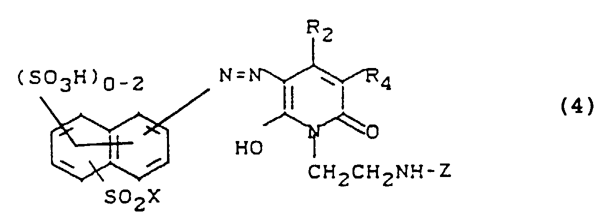 wherein
R₂ = H, C₁-C₄-alkyl, in particular CH₃, CH₂SO₃H or COOH,
R₃ = H, C₁-C₄-alkyl, C₁-C₄-alkoxy, Cl, Br, COOH or SO₃H and
R₄ = H, SO₃H, CH₂SO₃H, Cl, C₁-C₄-alkylsulphonyl, carboxamide, in particular CONH₂, or carboxylic acid mono- or di-C₁-C₄-alkylamide. 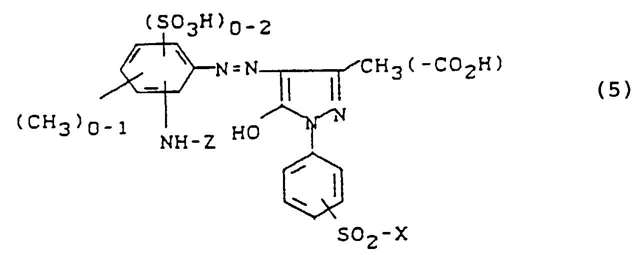 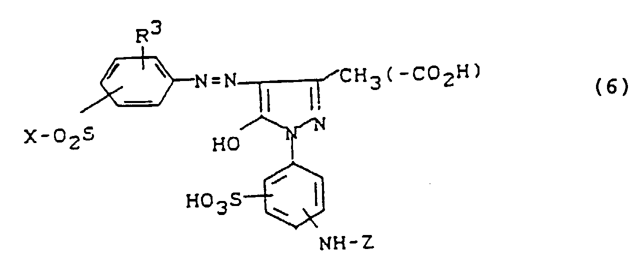 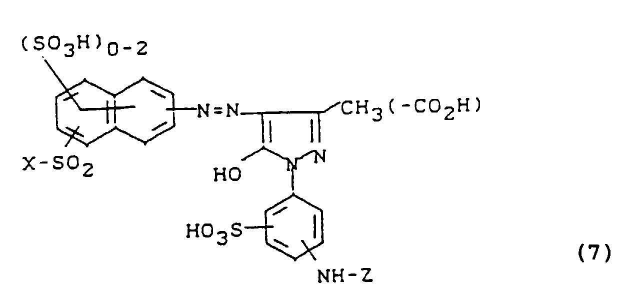 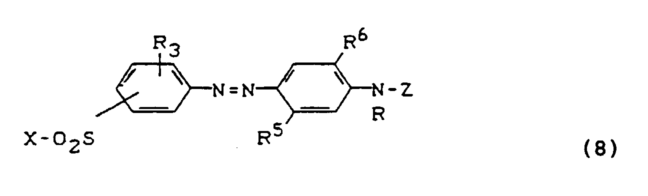 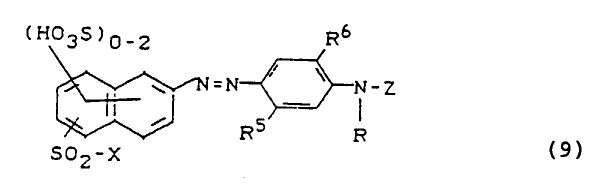 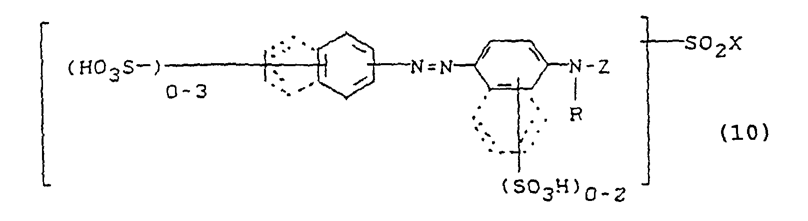
wherein
R⁵ = H, C₁-C₄-alkyl, C₁-C₄-alkoxy, acylamino, in particular C₁-C₄-alkylcarbonylamino or arylcarbonylamino, such as optionally substituted phenylcarbonylamino, C₁-C₄-alkylsulphonylamino, Cl, Br, aminocarbonylamino, C₁-C₄-alkylsulphonylamino or arylsulphonylamino and
R⁶ = H, C₁-C₄-alkyl, C₁-C₄-alkoxy, OH or SO₃H 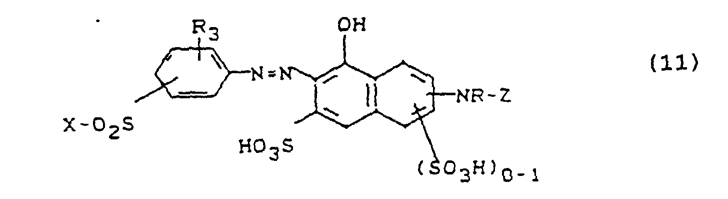 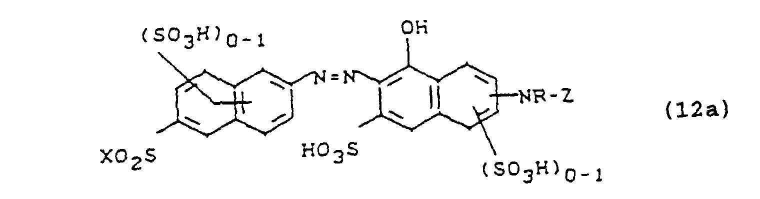 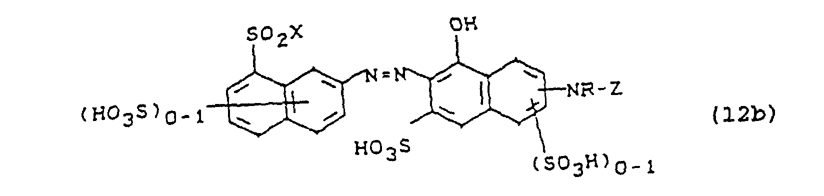 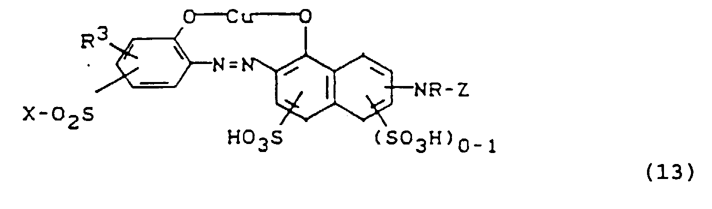 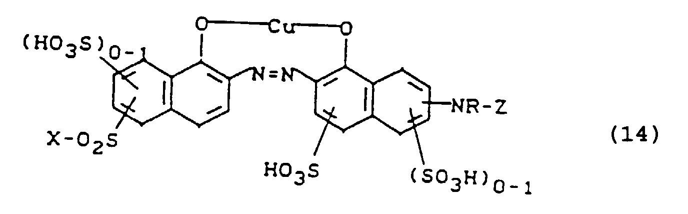 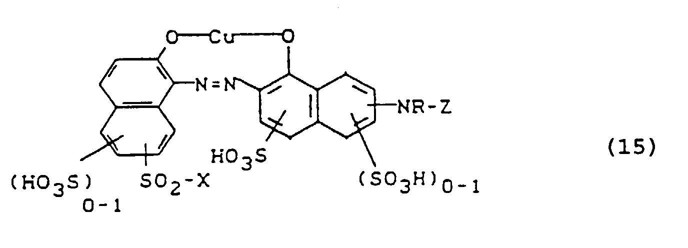
1:2 metal complexes of the dyestuff 16

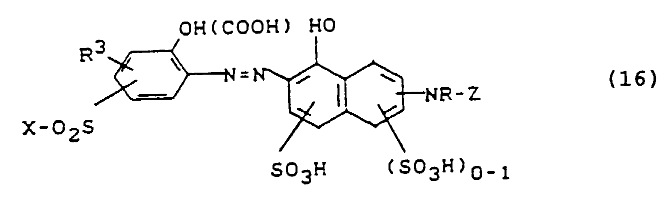

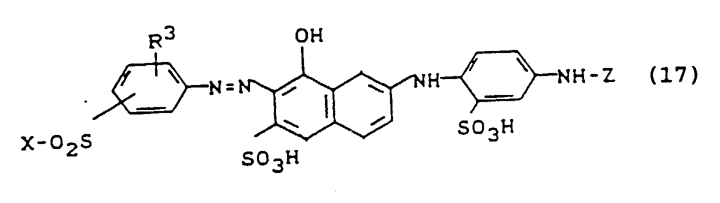

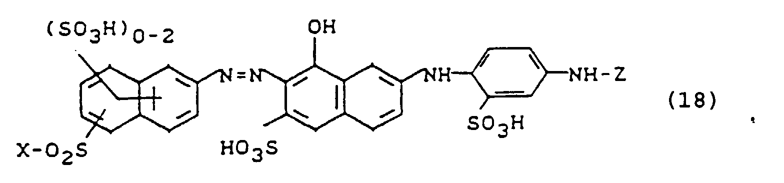

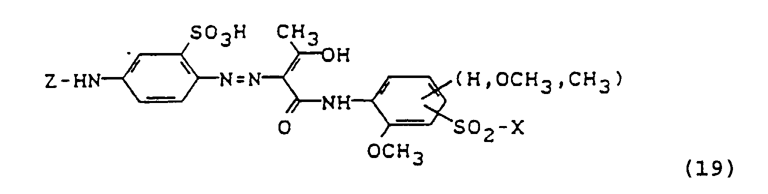

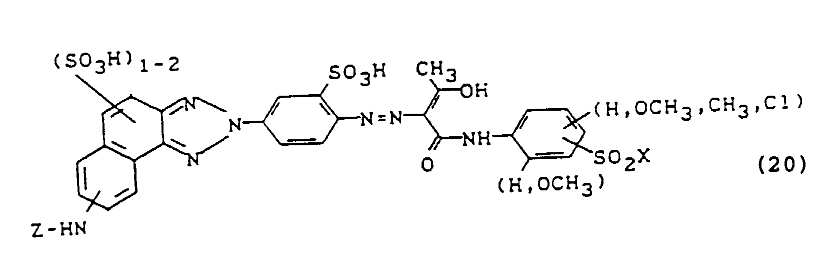

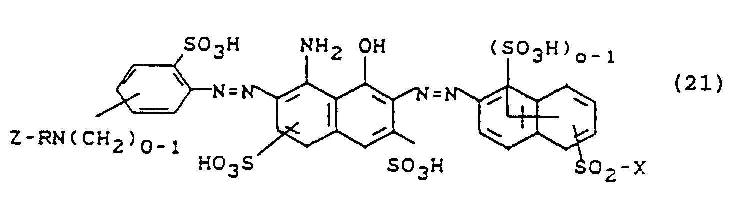

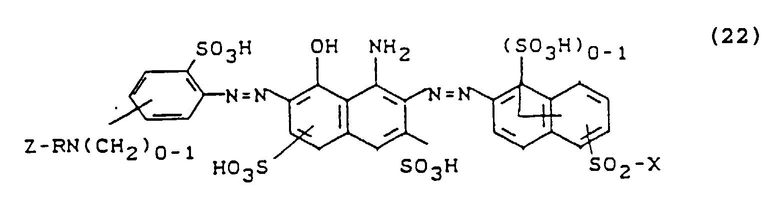

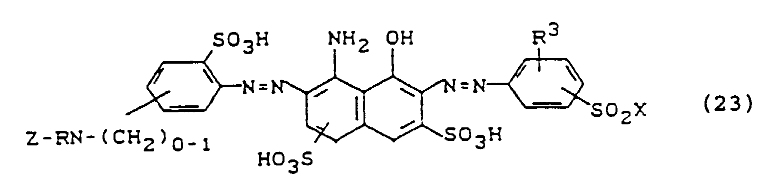

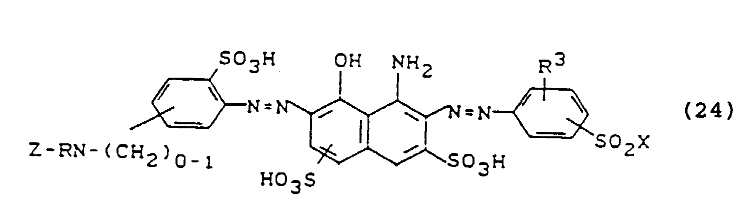

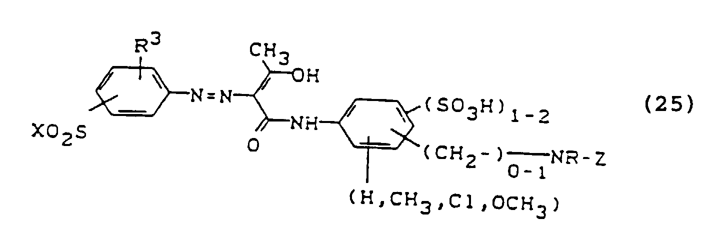

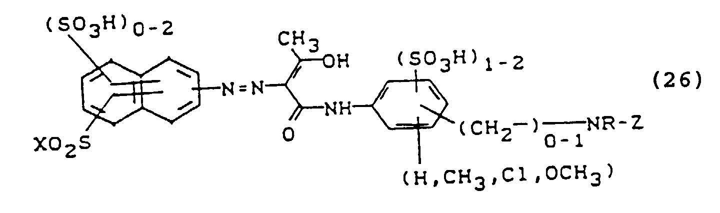

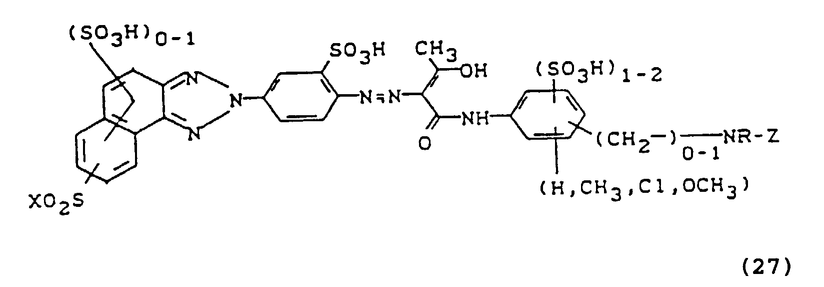

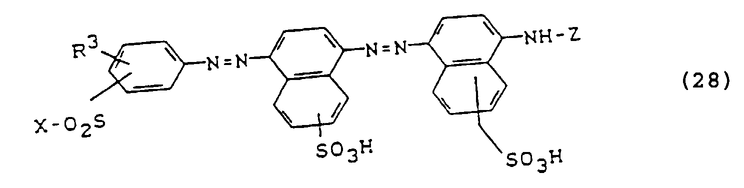

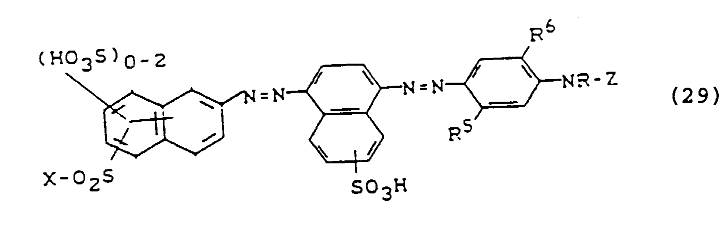

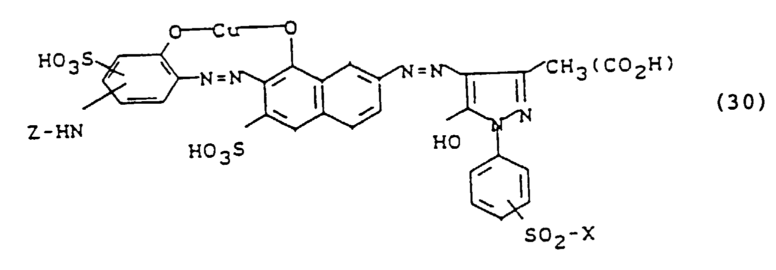

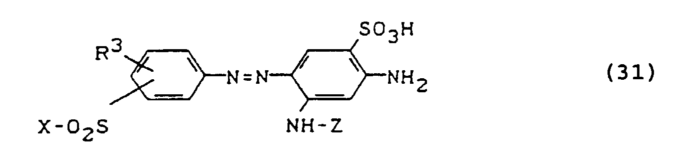

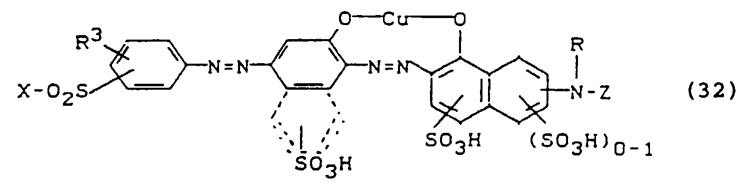

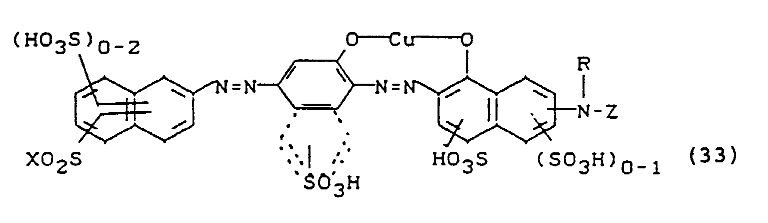

5. Dyestuffs of Claim 1, of the formulae (36) to (58) 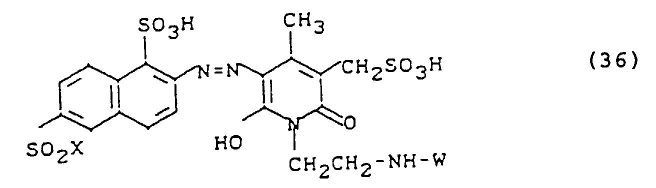 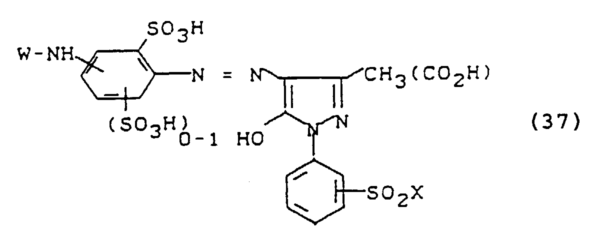 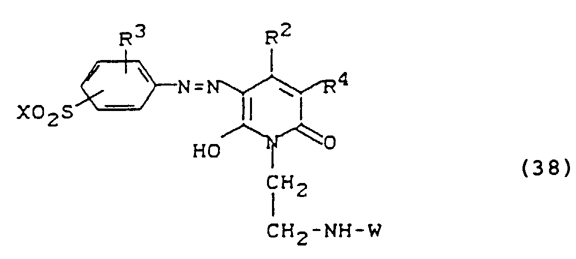 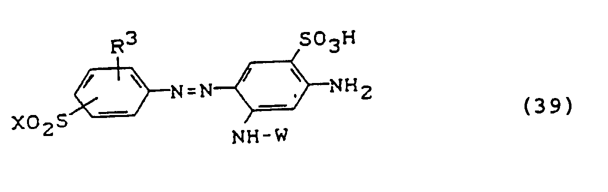 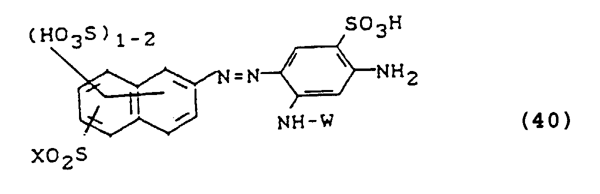 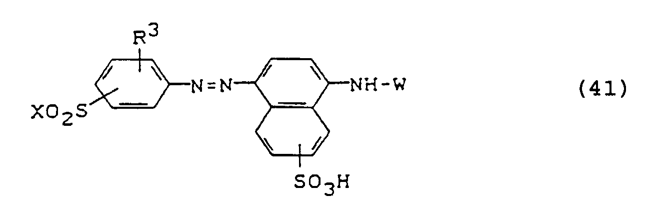 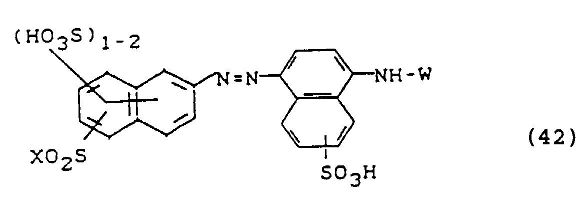 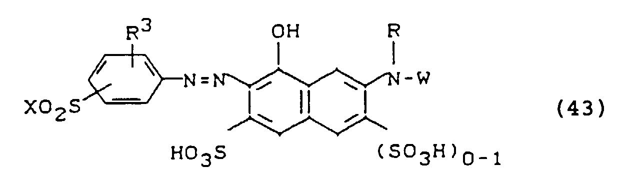 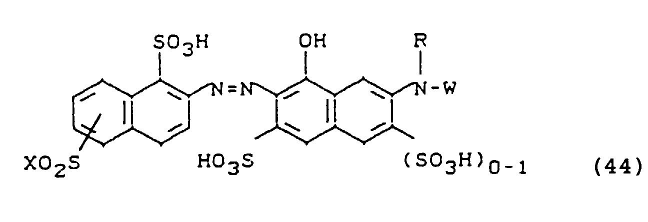 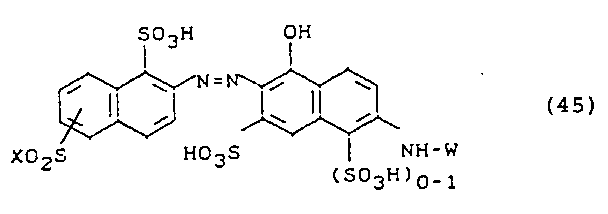 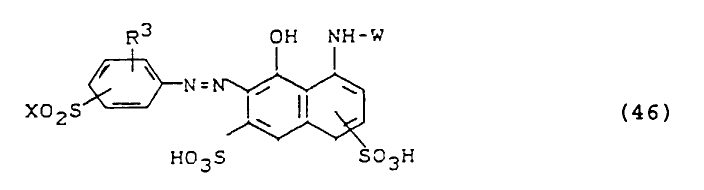 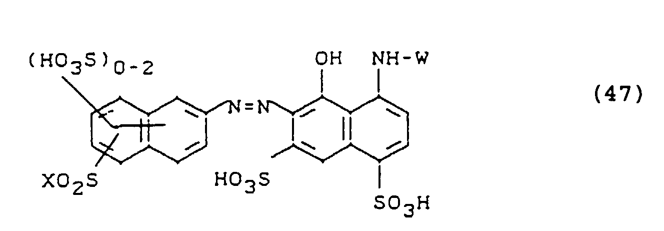 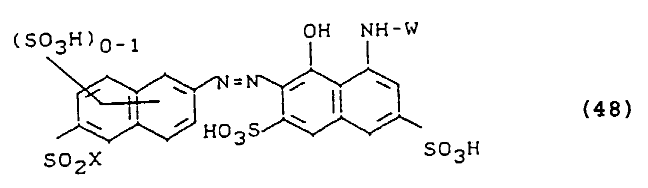 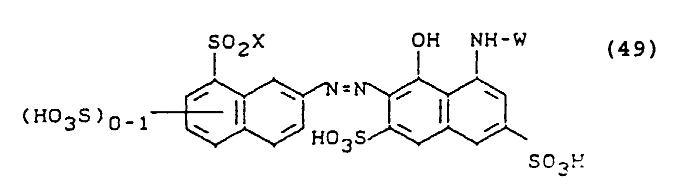 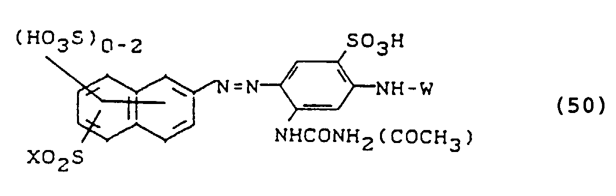 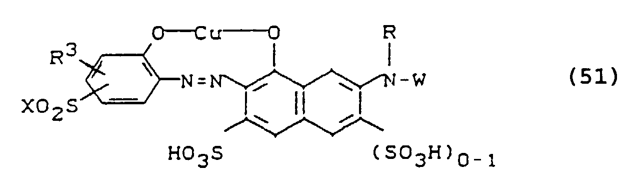 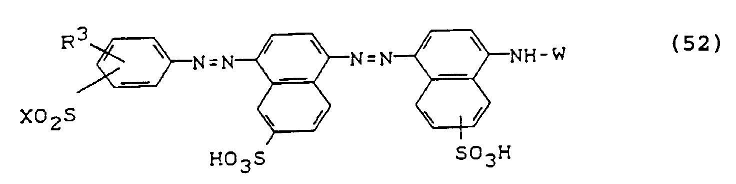 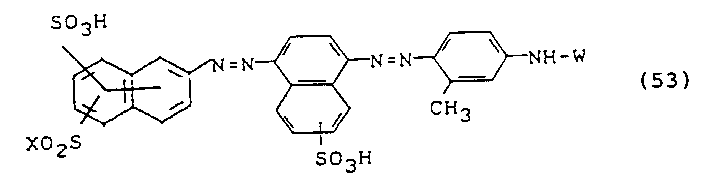 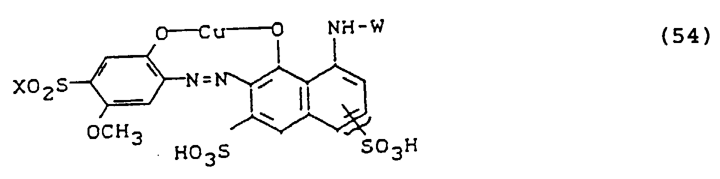 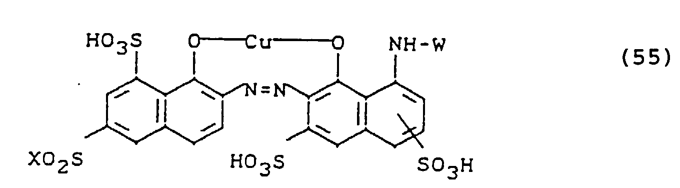 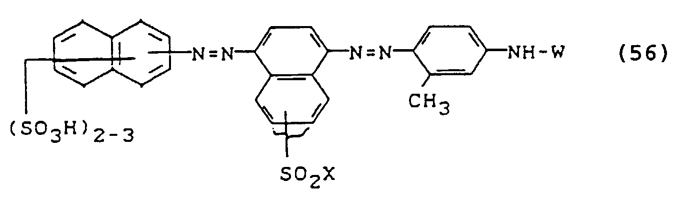 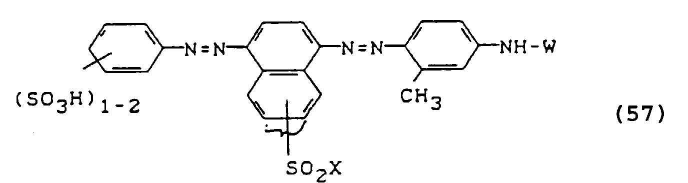 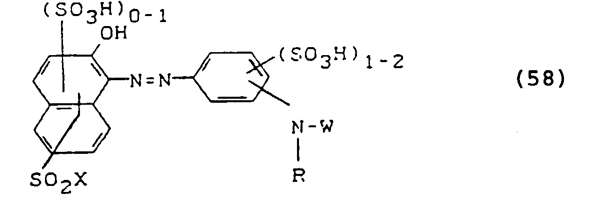 where
X = -CH₂CH₂OSO₃H or -CH=CH₂ and
W = 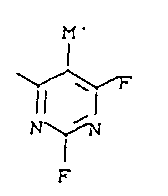 wherein
M' = H.

6. Process for dyeing and printing naturally occurring and synthetic materials containing OH or amide groups with a dyestuff, characterised in that at least one dyestuff according to at least one of the preceding claims is used.

7. Dyed or printed materials containing OH or amide groups, characterised in that they are dyed or printed with dyestuffs according to at least one of Claims 1 to 5.

## Revendications

1. Colorants de formule (1a) ainsi que leurs complexes métalliques 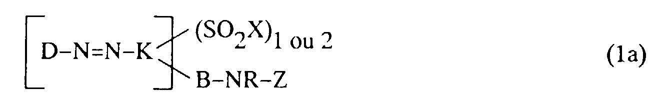 où
D = reste d'un composant diazo de la série du benzène ou du naphtalène et
K = reste d'un composant de couplage de la série du benzène, naphtalène, acétoarylide ou hétérocyclique.
B = liaison directe ou liaison de pont sur un atome de carbone d'un cycle aromatique carbocyclique ou sur un carbone de cycle ou un atome N d'un cycle aromatique hétérocyclique (dans D ou K),
X = CH=CH₂ ou CH₂CH₂-Y, ou
Y = reste éliminable en milieu alcalin
R = H ou alkyle C₁-C₄, qui peut être substitué le cas échéant,
Z = reste réactif pour la fibre de formule 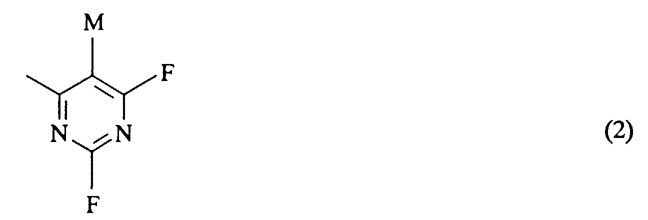 où
M = H,
à l'exception du colorant de formule

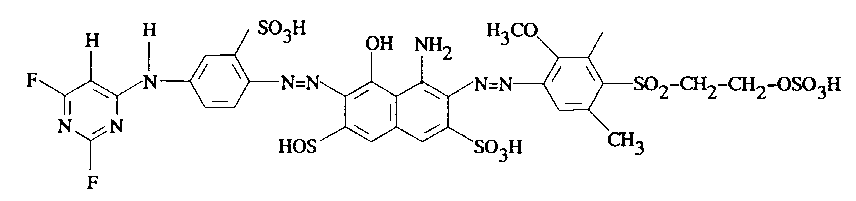

2. Colorants selon la revendication 1, caractérisés en ce qu'on a les significations suivantes:
B = liaison directe
-SO₂X = -SO₂CH=CH₂ ou -SO₂CH₂CH₂OSO₃H
où les colorants présentent un à six groupes apportant la solubilité dans l'eau.

3. Colorants selon au moins l'une des revendications précédentes, caractérisés en ce que
Y = OSO₃H, SSO₃H, OCOCH₃, OPO₃H₂, OSO₂CH₃, SCN, NHSO₂CH₃, Cl, Br, F, OCOC₆H₅, OSO₂-C₆H₄CH₃, [N(CH₃)₃]⁺A⁻ ou

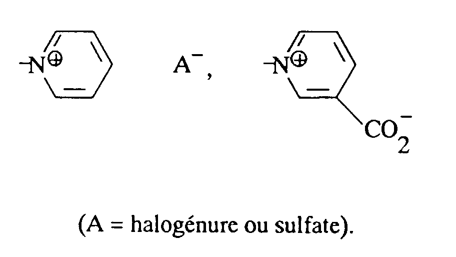

4. Colorants selon la revendication 1 avec les formules (3) à (33) 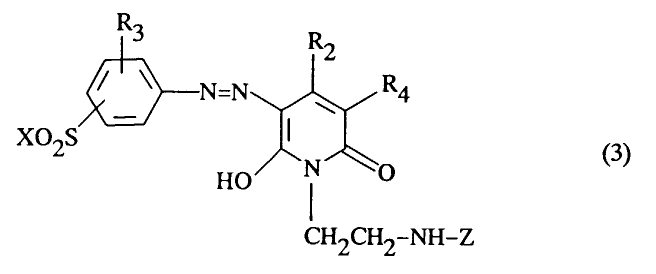 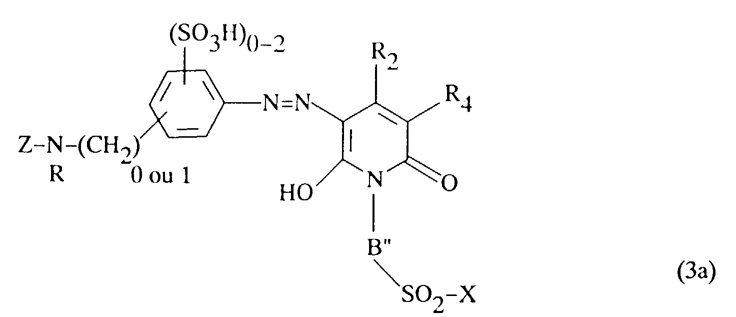 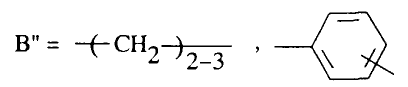 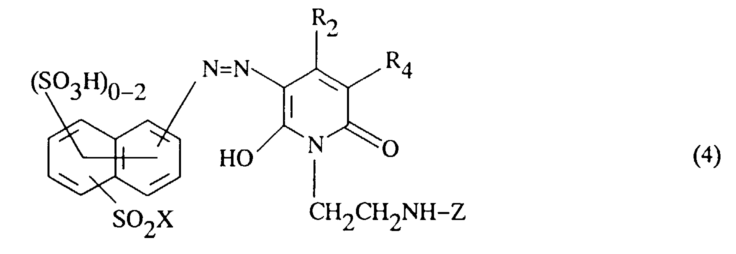 où
R₂ = H, alkyle C₁-C₄, notamment CH₃ et CH₂SO₃H, COOH,
R₃ = H, alkyle C₁-C₄, alcoxy C₁-C₄, Cl, Br, COOH, SO₃H,
R₄ = H, SO₃H, CH₂SO₃H, Cl, alkylsulfonyle C₁-C₄, carbonamide, notamment CONH₂ ainsi que mono- et dialkylamide C₁-C₄ d'acide carboxylique, 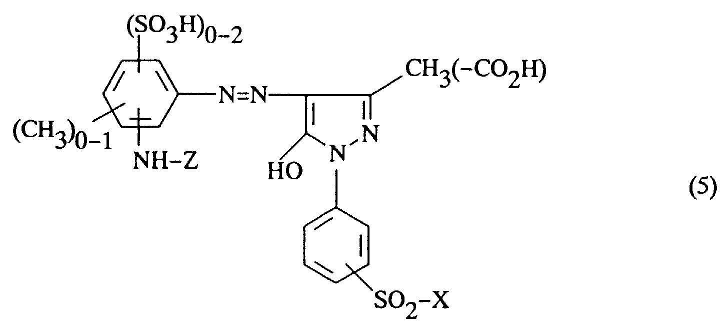 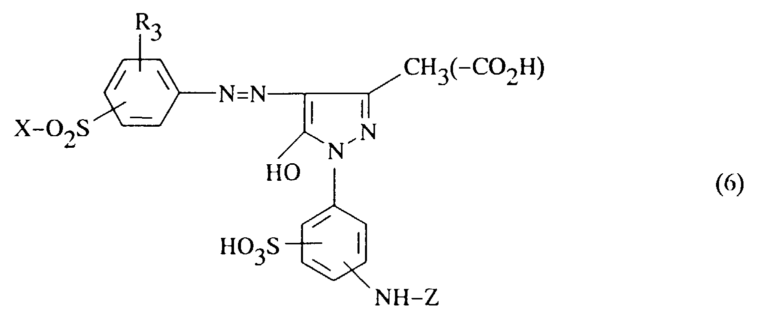 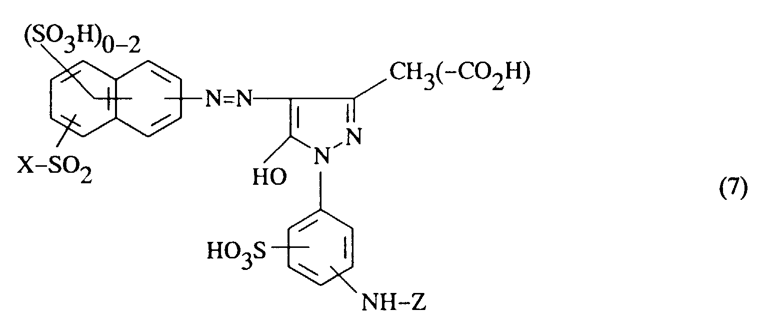 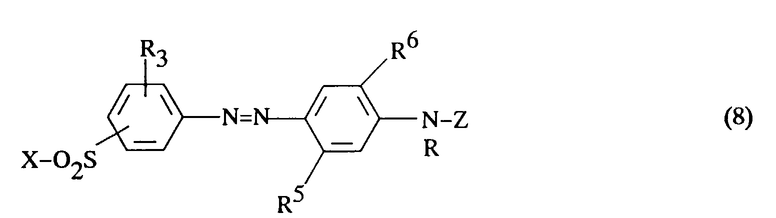 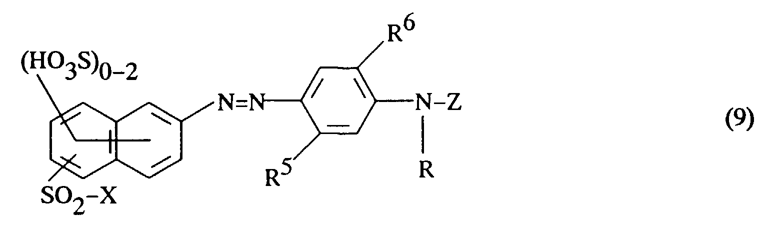 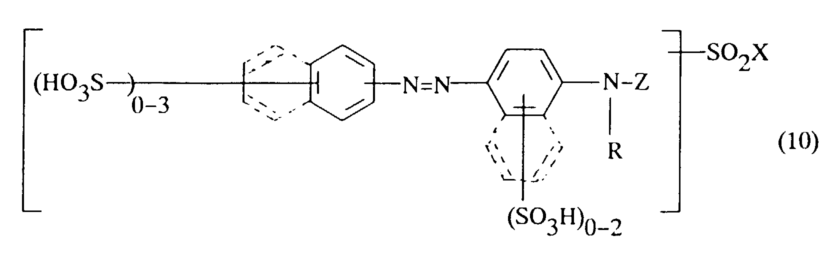
où
R⁵ = H, alkyle C₁-C₄, alcoxy C₁-C₄, acylamino, notamment alkylcarbonylamino C₁-C₄ ou arylcarbonylamino comme phénylcarbonylamino éventuellement substitué, alkylsulfonylamino C₁-C₄, Cl, Br, aminocarbonylamino, alkylsulfonylamino C₁-C₄, arylsulfonylamino,
R⁶ = H, alkyle C₁-C₄, alcoxy C₁-C₄, OH, SO₃H. 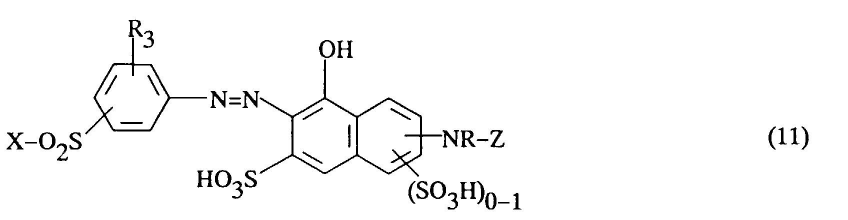 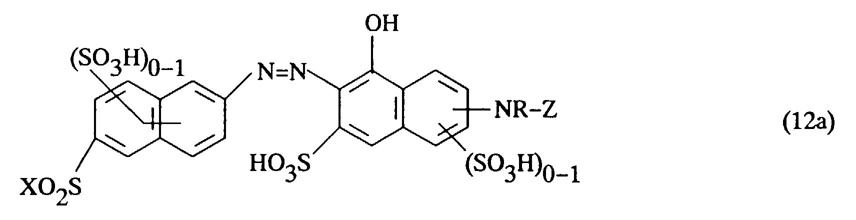 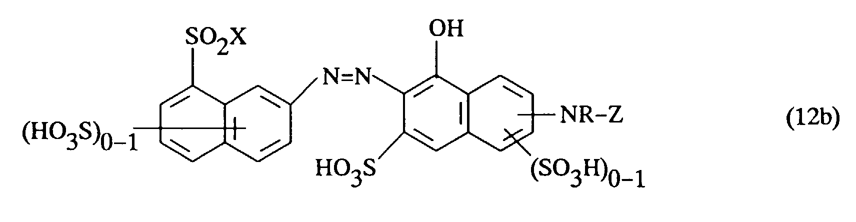 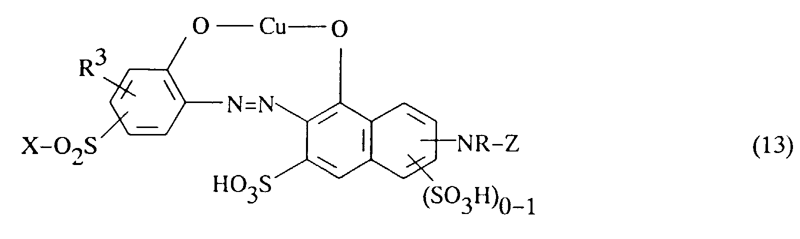 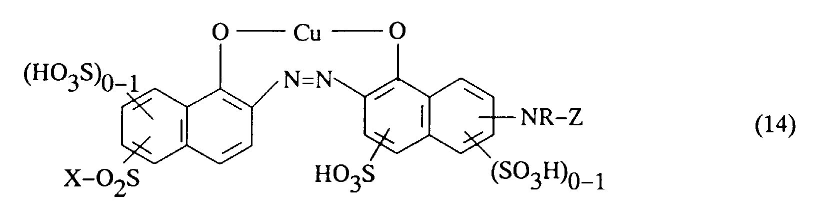 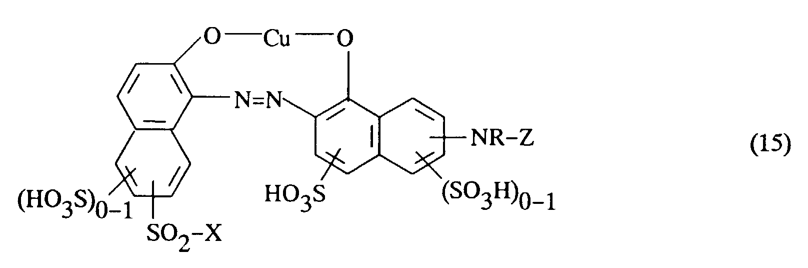
Complexe métallique 1:2 du colorant 16

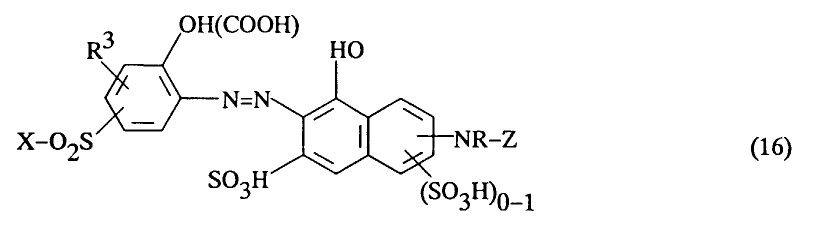

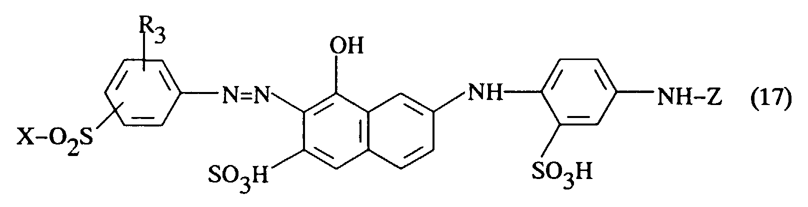

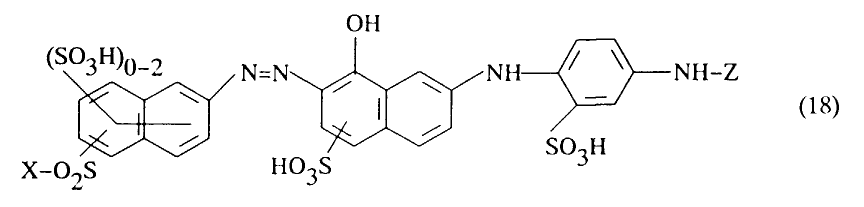

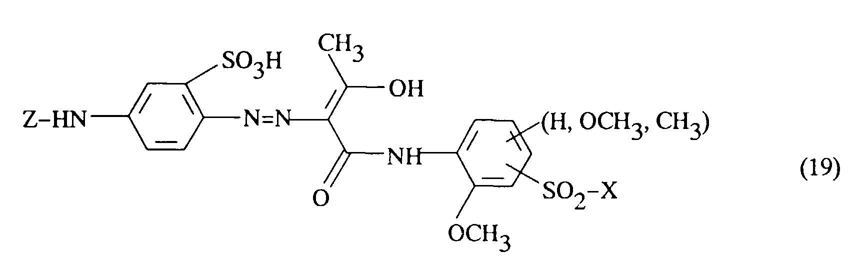

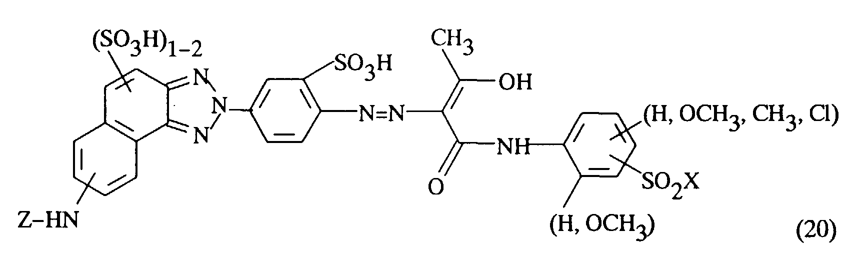

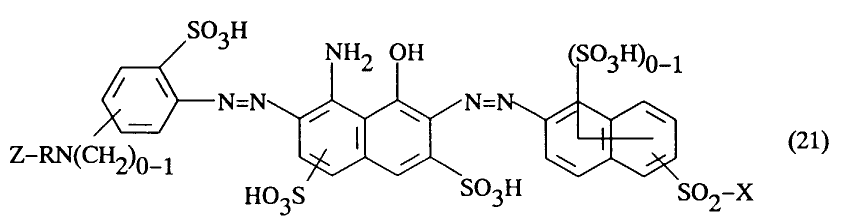

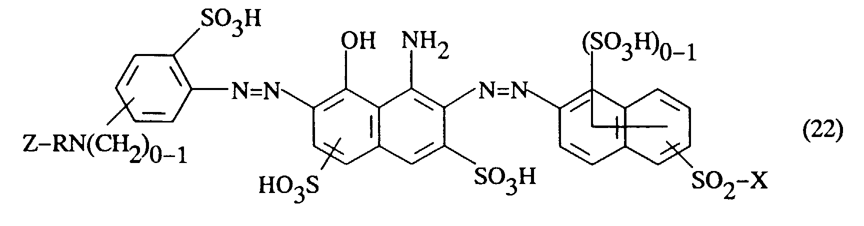

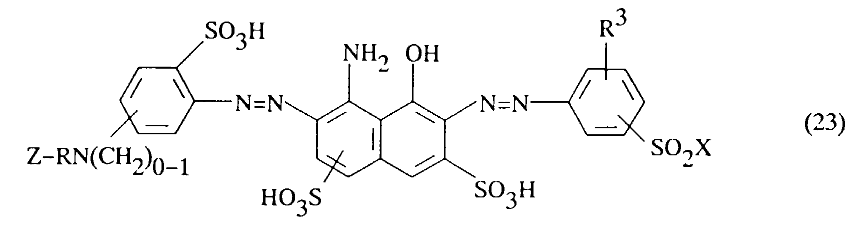

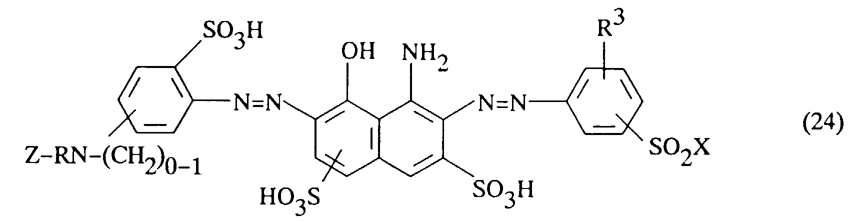

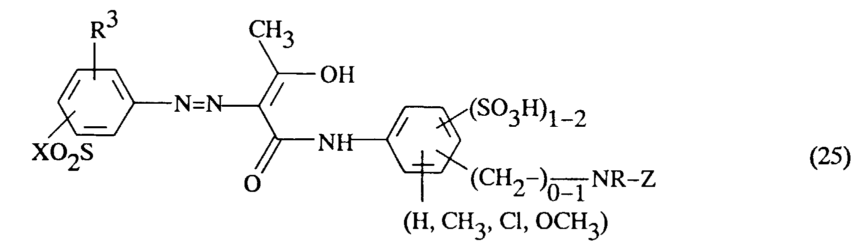

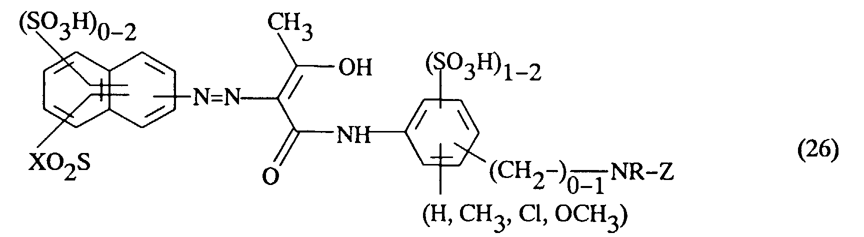

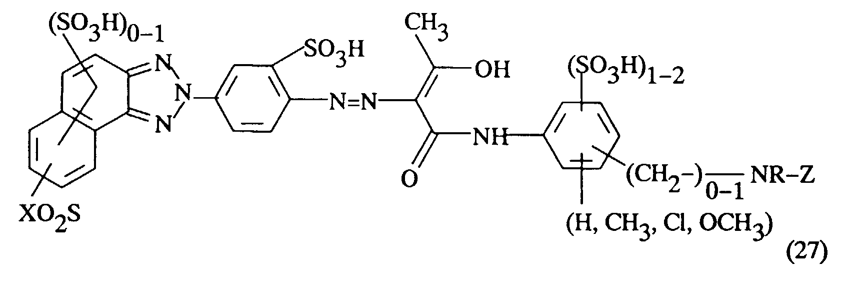

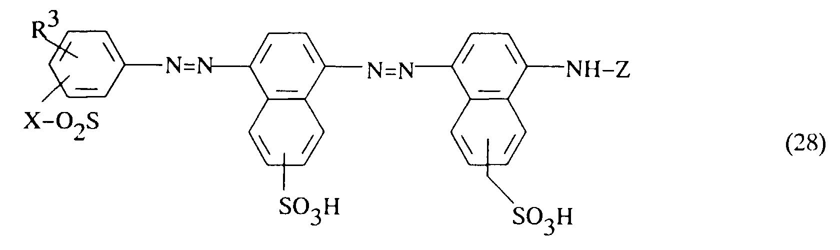

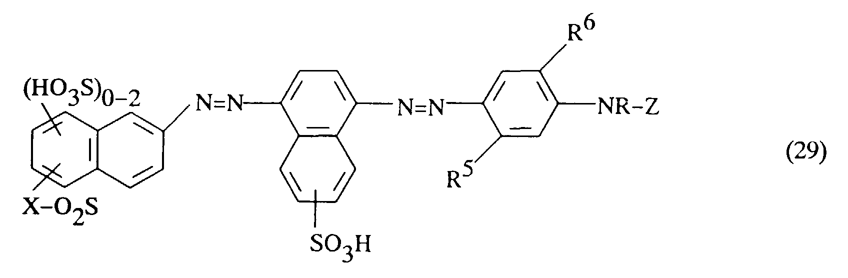

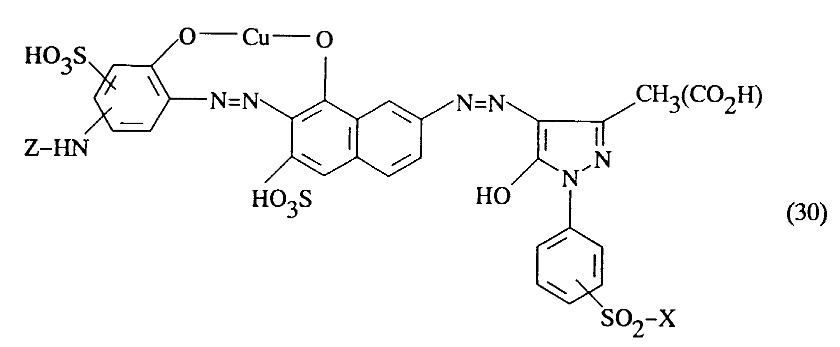

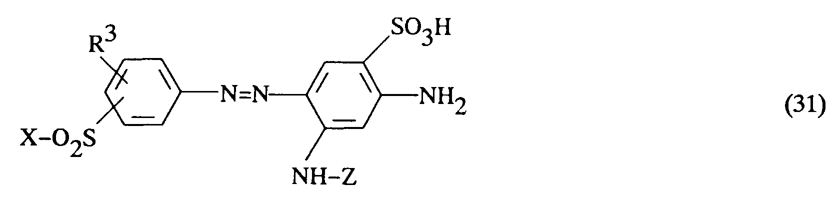

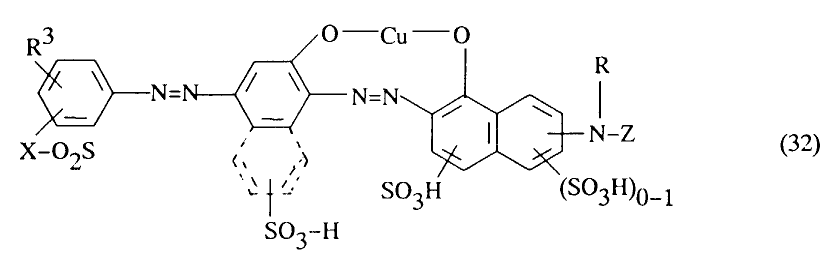

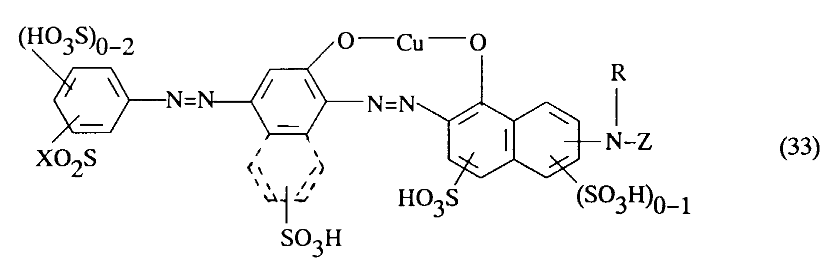

5. Colorants selon la revendication 1 de formules (36) à (58) 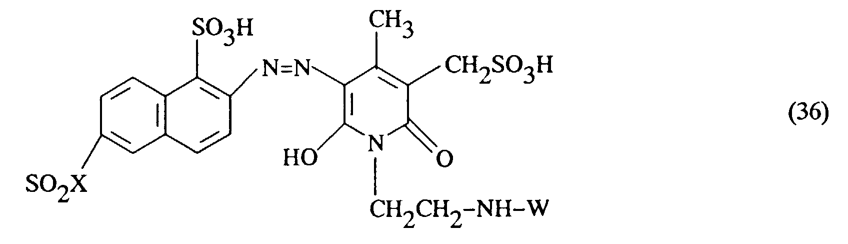 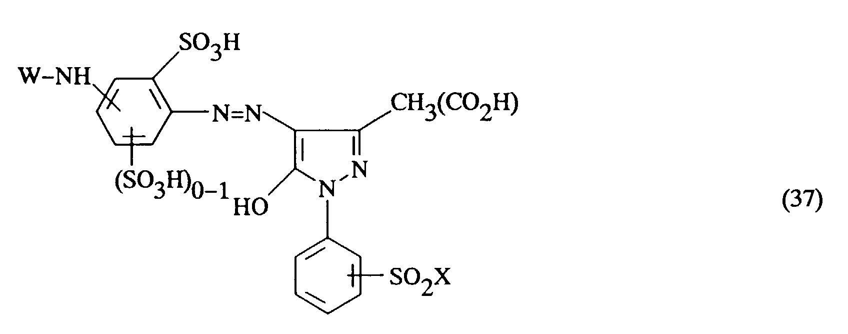 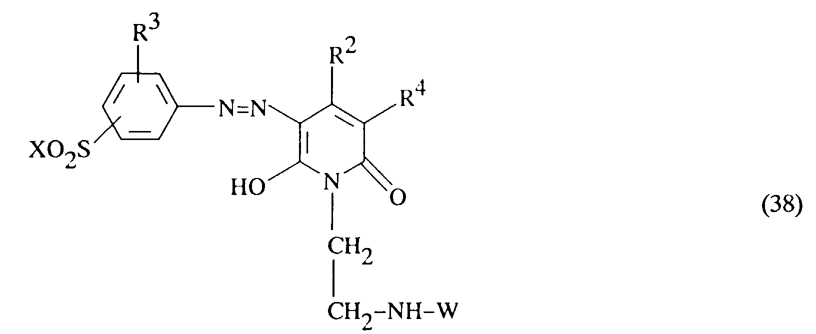 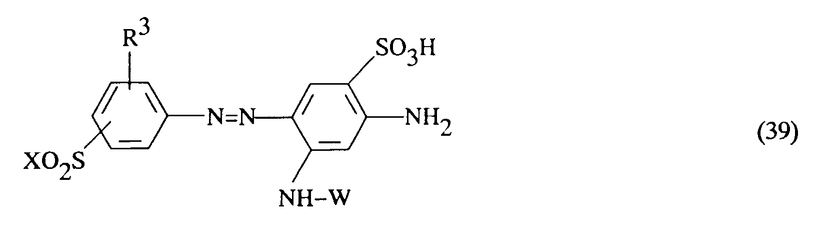 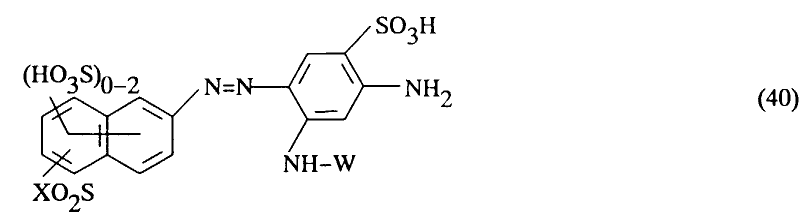 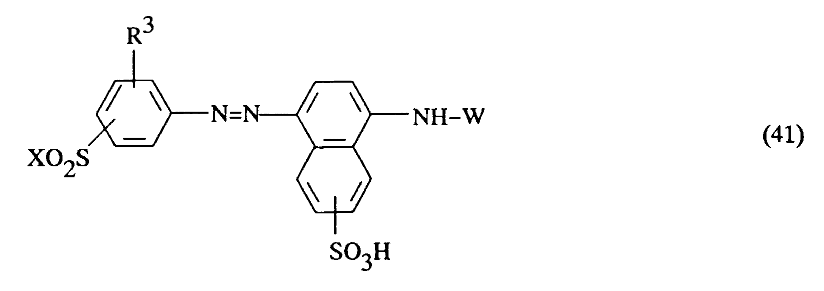 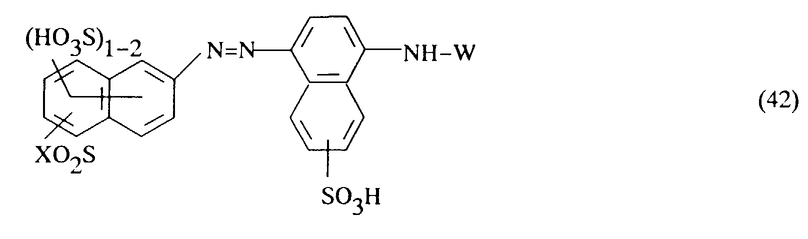 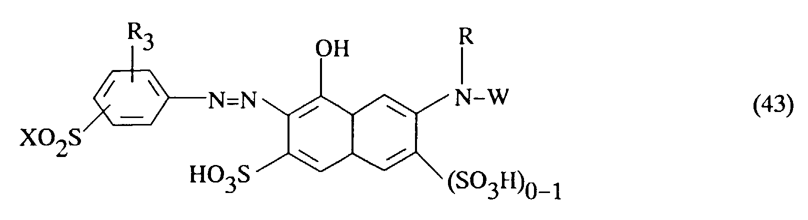 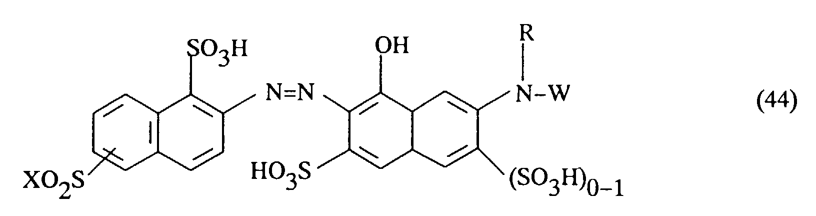 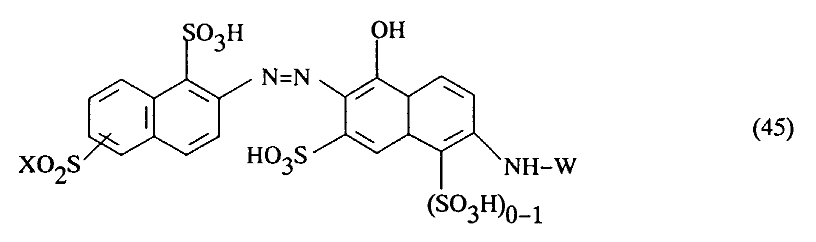 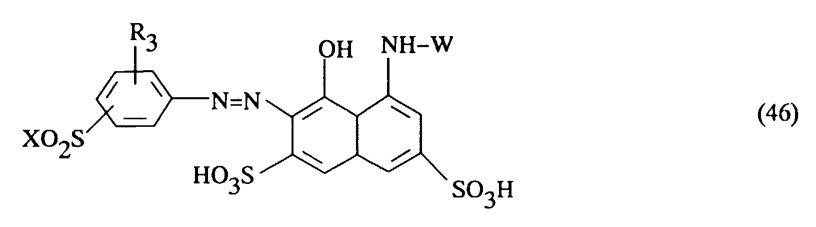 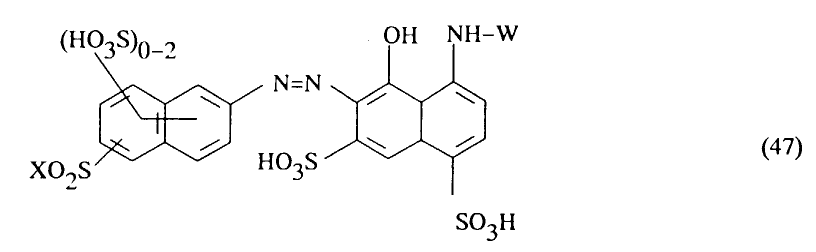 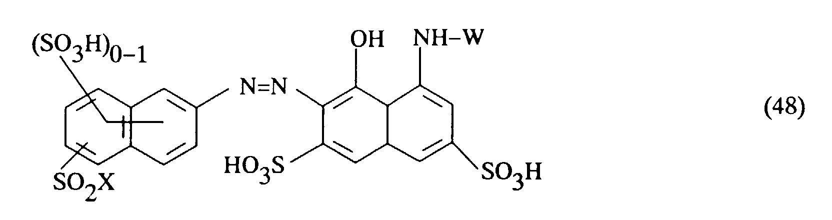 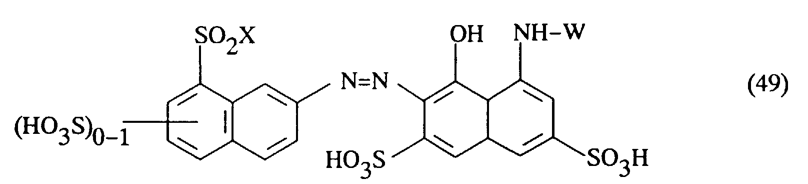 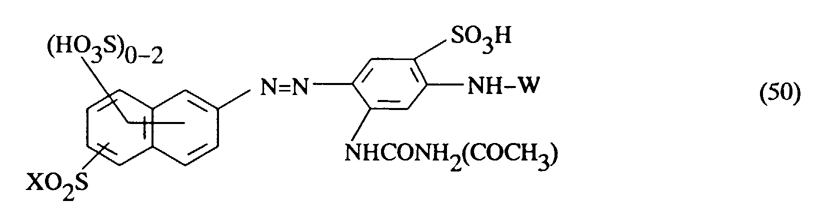 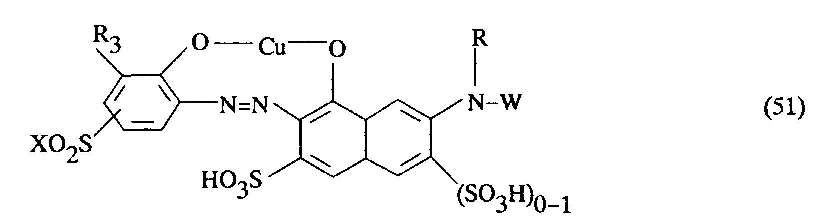 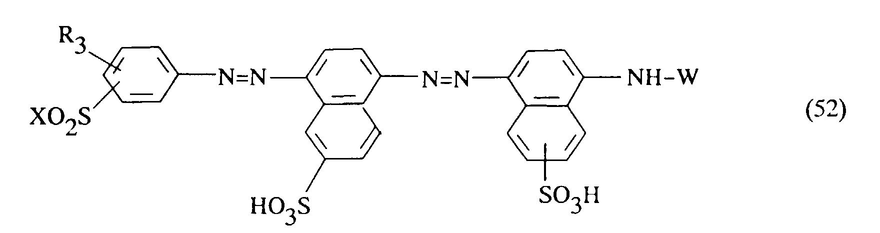 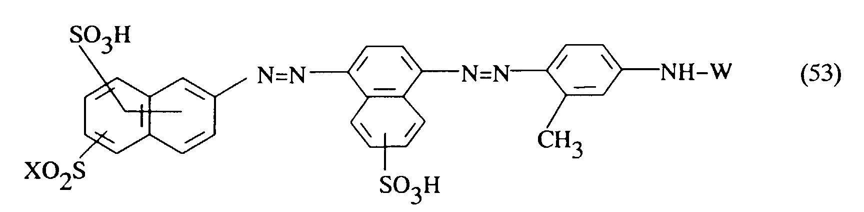 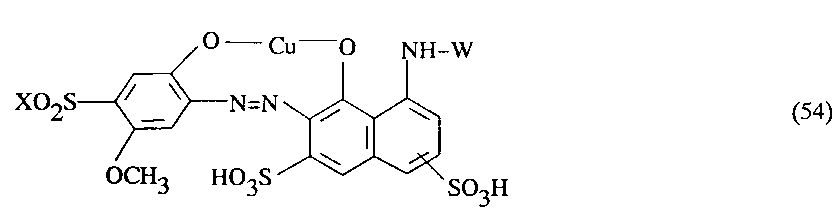 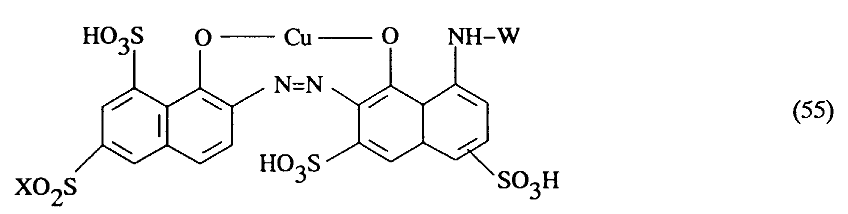 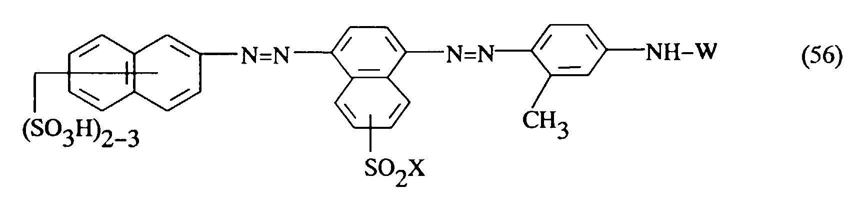 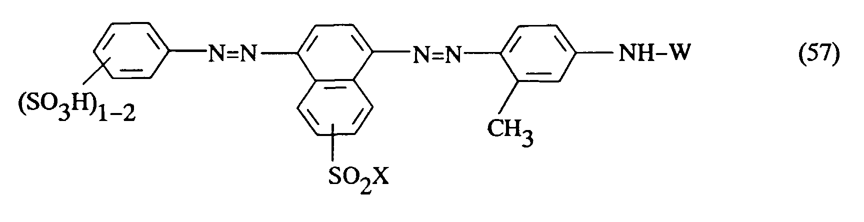 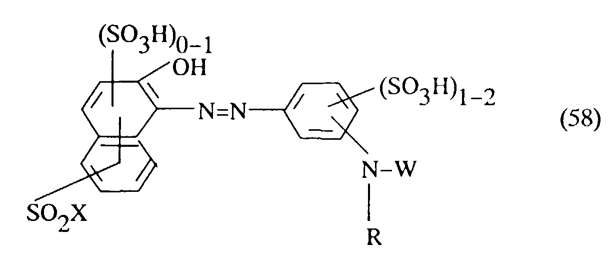 avec
X = -CH₂CH₂OSO₃H ou -CH=CH₂ et
W = 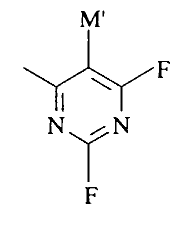 ou
M' = H.

6. Procédé de teinture et d'impression de matériaux naturels et synthétiques contenant des groupes OH ou amides avec un colorant, caractérisé en ce qu'on utilise au moins un colorant selon au moins l'une des revendications précédentes.

7. Matériaux teints ou imprimés contenant des groupes OH ou amides, caractérisés en ce qu'on les teint ou on les imprime avec des colorants selon au moins l'une des revendications 1 à 5.
